# EUROPEAN PATENT APPLICATION

(11) **EP 4 598 255 A1**
(43) Date of publication of application: **06.08.2025**
(21) Application number: 22960098.6
(22) Date of filing: 29.09.2022
(51) Int. Cl.: H04W 76/15

(54) **MULTI-LINK COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN)
(74) Representative: RGTH
(86) International application number: PCT/CN2022/122814
(87) International publication number: WO 2024/065461

(57) **Abstract**

Embodiments of the present disclosure provide a multi-link communication method and a device. Specifically, a non-AP MLD initiates a multi-link setup between the non-AP MLD and an AP MLD according to communication reachability between a respective non-AP STA affiliated with the non-AP MLD and a respective AP affiliated with the AP MLD corresponding to each of M links to be set up; and/or a non-AP MLD manages N setup links according to communication reachability between a respective non-AP STA affiliated with the non-AP MLD and a respective AP affiliated with an AP MLD corresponding to each of the N setup links, and/or an AP MLD manages N setup links according to communication reachability between a respective AP affiliated with the AP MLD and a respective non-AP STA affiliated with a non-AP MLD corresponding to each of the N setup links.

## Description

### TECHNICAL FIELD

Embodiments of the present disclosure relate to the field of communications, and more particular, to a multi-link communication method and a device.

### BACKGROUND

At present, multiple links may be set up between a non-access point multi-link device (non-AP MLD) and an access point multi-link device (AP MLD). However, there may be a problem that an actual communication state of a link is inconformity with an enabled state of the link due to differences in communication reachability between links among the multiple links.

### SUMMARY

Embodiments of the present disclosure provide a multi-link communication method and a device, which may ensure that an actual communication state of a link is conformity with an enabled state of the link.

In a first aspect, a multi-link communication method is provided, and the method includes:
initiating, by a non-AP MLD, a multi-link setup between the non-AP MLD and an AP MLD according to communication reachability between a respective non-access point station (non-AP STA) affiliated with the non-AP MLD and a respective access point (AP) affiliated with the AP MLD corresponding to each of M links to be set up; where M is a positive integer.

In a second aspect, a multi-link communication method is provided, and the method includes:
receiving, by an AP MLD, a first association request frame or a second association request frame through one of APs affiliated with the AP MLD;
where the first association request frame is used for requesting to set up a link corresponding to a non-AP STA affiliated with a non-AP MLD among M links, in which the non-AP STA is within a reachable communication range of an AP affiliated with the AP MLD;
where the second association request frame is used to for requesting to set up the M links; and the second association request frame includes relevant information on whether the M links are reachable in communication, and/or the second association request frame includes relevant information on whether the M links are enabled; and
M is a positive integer.

In a third aspect, a multi-link communication method is provided, and the method includes:
managing, by a non-AP MLD, N setup links according to communication reachability between a respective non-AP STA affiliated with the non-AP MLD and a respective AP affiliated with an AP MLD corresponding to each of the N setup links, where N is a positive integer.

In a fourth aspect, a multi-link communication method is provided, the method includes:
managing, by an AP MLD, N setup links according to communication reachability between a respective AP affiliated with the AP MLD and a respective non-AP STA affiliated with a non-AP MLD corresponding to each of the N setup links, where N is a positive integer.

In a fifth aspect, a non-AP MLD is provided to perform the method in the above first aspect.

Specifically, the non-AP MLD includes a functional module to perform the method in the above first aspect.

In a sixth aspect, an AP MLD is provided to perform the method in the above second aspect.

Specifically, the AP MLD includes a functional module to perform the method in the above second aspect.

In a seventh aspect, a non-AP MLD is provided to perform the method in the above third aspect.

Specifically, the non-AP MLD includes a functional module to perform the method in the above third aspect.

In an eighth aspect, an AP MLD is provided to perform the method in the above fourth aspect.

Specifically, the AP MLD includes a functional module to perform the method in the above fourth aspect.

In a ninth aspect, a non-AP MLD is provided, which includes a processor and a memory. The memory is configured to store a computer program, and the processor is configured to call the computer program stored in the memory and run the computer program, to enable the non-AP MLD to perform the method in the above first aspect.

In a tenth aspect, an AP MLD is provided, which includes a processor and a memory. The memory is configured to store a computer program, and the processor is configured to call the computer program stored in the memory and run the computer program, to enable the AP MLD to perform the method in the above second aspect.

In an eleventh aspect, a non-AP MLD is provided, which includes a processor and a memory. The memory is configured to store a computer program, and the processor is configured to call the computer program stored in the memory and run the computer program, to enable the non-AP MLD to perform the method in the above third aspect.

In a twelfth aspect, an AP MLD is provided, which includes a processor and a memory. The memory is configured to store a computer program, and the processor is configured to call the computer program stored in the memory and run the computer program, to enable the AP MLD to perform the method in the above fourth aspect.

In the thirteenth aspect, an apparatus is provided, which is configured to implement the method in any one of the above first to fourth aspects.

Specifically, the apparatus includes a processor, and the processor is configured to call a computer program from a memory and run the computer program, to enable a device equipped with the apparatus to perform the method in any one of the above first to fourth aspects.

In a fourteenth aspect, a computer-readable storage medium is provided, which is configured to store a computer program. The computer program enables a computer to perform the method in any one of the above first to fourth aspects.

In a fifteenth aspect, a computer program product is provided, which includes computer program instructions. The computer program instructions enable a computer to perform the method in any one of the above first to fourth aspects.

In the sixteenth aspect, a computer program is provided, and the computer program, when executed on a computer, enables the computer to perform the method in any one of the above first to fourth aspects.

Through the above technical solutions, the non-AP MLD initiates the multi-link setup between the non-AP MLD and the AP MLD according to the communication reachability between the respective non-AP STA affiliated with the non-AP MLD and the respective AP affiliated with the AP MLD corresponding to each of the M links to be set up; and/or the non-AP MLD manages the N setup links according to the communication reachability between the respective non-AP STA affiliated with the non-AP MLD and the respective AP affiliated with the AP MLD corresponding to each of the N setup links; and/or the AP MLD manages the N setup links according to the communication reachability between the respective AP affiliated with the AP MLD and the respective non-AP STA affiliated with the non-AP MLD corresponding to each of the N setup links, thereby ensuring that the actual communication state of the link is conformity with the enabled state of the link.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up a link corresponding to a non-AP STA affiliated with the non-AP MLD among the M links, in which the non-AP STA is within a reachable communication range of an AP affiliated with the AP MLD. Optionally, the non-AP MLD requests, according to the communication reachability between the respective non-AP STA affiliated with the non-AP MLD and the respective AP affiliated with the AP MLD corresponding to each of the M links to be set up, to set up the M links, and reports relevant information on whether the M links are reachable in communication and/or reports relevant information on whether the M links are enabled, thereby reflecting the actual communication state of the link. In other words, the non-AP MLD may optimize the multi-link setup procedure according to the communication reachability of the links to be set up, thereby ensuring that the actual communication state of the link is conformity with the enabled state of the link.

Specifically, after the multi-link setup is completed, the non-AP MLD sets an enabled link that communication between a non-AP STA affiliated with the non-AP MLD and an AP affiliated with the AP MLD is unreachable among N links to a disabled state; or the non-AP MLD deletes a link that communication between a non-AP STA affiliated with the non-AP MLD and an AP affiliated with the AP MLD is unreachable among the N links, thereby ensuring that the actual communication state of the link is conformity with the enabled state of the link.

Specifically, after the multi-link setup is completed, the AP MLD sets an enabled link that communication between an AP affiliated with the AP MLD and a non-AP STA affiliated with the non-AP MLD is unreachable among the N links to a disabled state, or the AP MLD deletes a link that communication between an AP affiliated with the AP MLD and a non-AP STA affiliated with the non-AP MLD is unreachable among the N links, thereby ensuring that the actual communication state of the link is conformity with the enabled state of the link.

### BRIEF DESCRIPTION OF THE DRAWINGS

FIG. 1 is a schematic diagram of a communication system architecture applied by the embodiments of the present disclosure.
FIG. 2 is a schematic diagram of a non-AP MLD gathering information about an AP MLD and each affiliated AP that is interested provided according to the present disclosure.
FIG. 3 is a schematic flowchart of a multi-link communication method provided according to an embodiment of the present disclosure.
FIG. 4 is a schematic flowchart of a multi-link setup provided according to an embodiment of the present disclosure.
FIG. 5 is a schematic diagram of a station control field provided according to an embodiment of the present disclosure.
FIG. 6 is a schematic flowchart of another multi-link setup provided according to an embodiment of the present disclosure.
FIG. 7 is a schematic diagram of another station control field provided according to an embodiment of the present disclosure.
FIG. 8 is a schematic diagram of yet another station control field provided according to an embodiment of the present disclosure.
FIG. 9 is a schematic diagram of a station information field provided according to an embodiment of the present disclosure.
FIG. 10 is a schematic diagram of a max idle period information for link enabled field provided according to an embodiment of the present disclosure.
FIG. 11 is a schematic diagram of an idle option for link enabled subfield according to an embodiment of the present disclosure.
FIG. 12 is a schematic diagram of a presence bitmap subfield provided according to an embodiment of the present disclosure.
FIG. 13 is a schematic diagram of a common information field provided according to an embodiment of the present disclosure.
FIG. 14 is a schematic flowchart of a multi-link management provided according to an embodiment of the present disclosure.
FIG. 15 is a schematic flowchart of another multi-link management provided according to an embodiment of the present disclosure.
FIG. 16 is a schematic flowchart of another multi-link communication method provided according to an embodiment of the present disclosure.
FIG. 17 is a schematic flowchart of yet another multi-link management provided according to an embodiment of the present disclosure.
FIG. 18 is a schematic flowchart of yet another multi-link management provided according to an embodiment of the present disclosure.
FIG. 19 is a schematic flowchart of yet another multi-link communication method provided according to an embodiment of the present disclosure.
FIG. 20 is a schematic flowchart of yet another multi-link communication method provided according to an embodiment of the present disclosure.
FIG. 21 is a schematic block diagram of a non-AP MLD provided according to an embodiment of the present disclosure.
FIG. 22 is a schematic block diagram of an AP MLD provided according to an embodiment of the present disclosure.
FIG. 23 is a schematic block diagram of another non-AP MLD provided according to an embodiment of the present disclosure.
FIG. 24 is a schematic block diagram of another AP MLD provided according to an embodiment of the present disclosure.
FIG. 25 is a schematic block diagram of a communication device provided according to the embodiments of the present disclosure.
FIG. 26 is a schematic block diagram of an apparatus provided according to the embodiments of the present disclosure.
FIG. 27 is a schematic block diagram of a communication system provided according to the embodiments of the present disclosure.

### DETAILED DESCRIPTION

The technical solutions in the embodiments of the present disclosure will be described below in conjunction with the drawings in the embodiments of the present disclosure. It is apparent that the described embodiments are a part of embodiments of the present disclosure, rather than all of the embodiments of the present disclosure. For the embodiments of the present disclosure, all other embodiments obtained by those of ordinary skill in the art without paying any creative effort shall fall within the scope of protection of the present disclosure.

The technical solutions of the embodiments of the present disclosure may be applied to various communication systems, such as a wireless local area network (WLAN), a wireless fidelity (WIFI) or other communication systems.

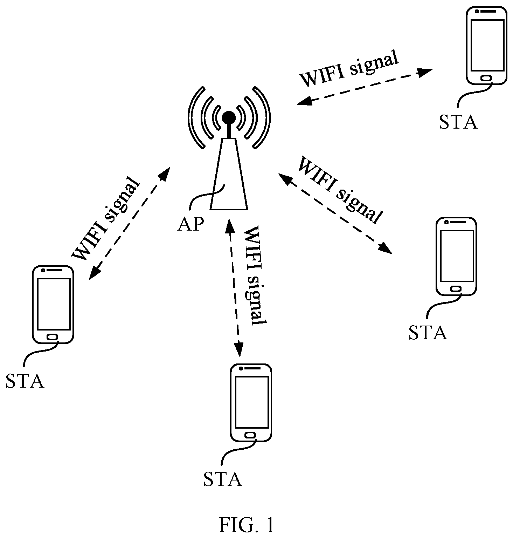

Referring to FIG. 1, a schematic diagram of a wireless communication system provided according to an embodiment of the present disclosure is illustrated. As illustrated in FIG. 1, the wireless communication system may include an access point (AP) and stations (STAs).

In some scenarios, the AP may be referred to as an AP STA. That is, in a sense, the AP is also a STA. In some scenarios, the STAs are referred to as non-AP STAs.

In some embodiments, the STAs may include the AP STA and the non-AP STA. The communication in the communication system may be communication between the AP and the non-AP STA, communication between the non-AP STA and the non-AP STA, or communication between the STA and a peer STA. The peer STA may refer to a device for peer communication with the STA. For example, the peer STA may be the AP or the non-AP STA.

The AP is equivalent to a bridge connecting a wired network and a wireless network, and its main function is to connect various wireless network clients together and then connect the wireless network to Ethernet. An AP device may be a terminal device (such as a mobile phone) or network device (such as a router) with a wireless-fidelity (WIFI) chip.

It should be understood that a role of the STA in the communication system is not absolute. For example, in some scenarios, when the mobile phone is connected to the router, the mobile phone is a non-AP STA. In a case where the mobile phone serves as a hotspot for other mobile phones, the mobile phone plays the role of an AP.

The AP and non-AP STAs may be devices used in Internet of Vehicles; Internet of Things (IoT) nodes and sensors in the IoT; smart cameras, smart remote controls, smart water and electricity meters in a smart home; and sensors in a smart city.

In some embodiments, the non-AP STAs may support 802.11be standard. The non-AP STAs may also support various current and future 802.11 family wireless local area network standards, such as 802.11ax, 802.11ac, 802.11n, 802.11g, 802.11b and 802.11a.

In some embodiments, the AP may be a device supporting the 802.11be standard. The AP may also be a device that supports various current and future 802.11 family WLAN standards, such as 802.11ax, 802.11ac, 802.11n, 802.11g, 802.11b and 802.11a.

In the embodiments of the present disclosure, the STA may be a mobile phone, a pad, a computer, a virtual reality (VR) device, an augmented reality (AR) device, a wireless device in industrial control, a set-top box, a wireless device in self driving, a vehicle-mounted communication device, a wireless device in remote medical, a wireless device in smart grid, a wireless device in transportation safety, a wireless device in a smart city, or a wireless device in a smart home, a wireless communication chip, an application specific integrated circuit (ASIC), a system on chip (SOC), etc. that supports WLAN/WIFI technology.

The bands supported by WLAN technology may include but are not limited to, low bands (2.4 GHz, 5 GHz, 6 GHz) and high bands (45 GHz, 60 GHz).

There are one or more links between the stations and the access point. In some embodiments, the stations and access point support multi-band communications, for example, communicating simultaneously on the 2.4 GHz, 5 GHz, 6 GHz, 45 GHz, and 60 GHz bands, or communicating simultaneously on different channels in the same band (or different bands), to improve communication throughput and/or reliability between devices. Such a device is usually referred to as a multi-band device, or a multi-link device (MLD), and is sometimes also referred to as a multi-link entity or a multi-band entity. The multi-link device may be an access point device or a station device. In a case where the multi-link device is the access point device, the multi-link device includes one or more APs; and in a case where the multi-link device is the station device, the multi-link device includes one or more non-AP STAs.

A multi-link device including one or more APs may be referred to as an AP, and a multi-link device including one or more non-AP STAs may be referred to as a non-AP.

In the embodiments of the present disclosure, the AP may include multiple APs, the non-AP may include multiple STAs, multiple links may be formed between the APs in the AP and the STAs in the non-AP, and data communication may be performed between the APs in the AP and corresponding STAs in the non-AP through corresponding links.

The AP is a device deployed in the wireless local area network to provide wireless communication functions for the STA. The station may include: user equipment (UE), an access terminal, a user unit, a user station, a mobile station, a mobile platform, a remote station, a remote terminal, a mobile device, a wireless communication device, a user agent or a user apparatus. Optionally, the station may also be a cellular phone, a cordless phone, a session initiation protocol (SIP) phone, a wireless local loop (WLL) station, a personal digital assistant (PDA), a handheld device with the wireless communication function, a computing device or other processing device connected to a wireless modem, a vehicle-mounted device, or a wearable device, which is not limited in the embodiments of the present disclosure.

Optionally, both the station and the access point support the IEEE 802.11 standard.

It should be understood that the terms "system" and "network" are often used interchangeably herein. The term "and/or" herein is merely a description of the association relationship of associated objects, indicating that there may be three relationships. For example, A and/or B may mean three cases: A alone, A and B both, and B alone. In addition, the character "/" herein generally indicates that association objects before and after it are in an "or" relationship.

It should be understood that the "indication" mentioned in the embodiments of the present disclosure may be a direct indication, an indirect indication, or an indication of an associated relationship. For example, A indicates B, which may mean that A directly indicates B, for example, B may be obtained through A; it may also mean that A indirectly indicates B, for example, A indicates C, and B may be obtained through C; it may also mean that there is an association relationship between A and B.

The terms used in the implementation section of the present disclosure are only used to explain the specific embodiments of the present disclosure and are not intended to limit the present disclosure. The terms "first", "second", "third" and "fourth" etc. in the specification, claims and drawings of the present disclosure are used to distinguish different objects rather than to describe a specific order. In addition, the terms "include", "comprise", and "have", and any variations thereof, are intended to cover a non-exclusive inclusion.

In the description of the embodiments of the present disclosure, the term "corresponding" may indicate that there is a direct or indirect correspondence between two items, or an association relationship between the two items, or a relationship of indicating and being indicated, configuring and being configured, etc.

In the embodiments of the present disclosure, "predefined" or "preconfigured" may be implemented by pre-saving corresponding codes, tables or other manners that may be used to indicate relevant information in a device (for example, including the STA and the network device). The present disclosure does not limit its specific implementation. For example, predefined may refer to defined in the protocol.

In the embodiments of the present disclosure, the "protocol" may refer to a standard protocol in the communication field, for example, it may include a WiFi protocol and related protocols used in future WiFi communication systems, which is not limited in the present disclosure.

In order to facilitate understanding of the technical solutions of the embodiments of the present disclosure, the technical solutions of the present disclosure are described in detail below through specific embodiments. The following related technologies may be arbitrarily combined with the technical solutions of the embodiments of the present disclosure as optional solutions, which all belong to the protection scope of the embodiments of the present disclosure. The embodiments of the present disclosure include at least part of the following contents.

The wireless devices supports multi-band communications, for example, communicating simultaneously on 2.4 GHz, 5 GHz, 6 GHz, 45 GHz, and 60 GHz bands, or communicating simultaneously on different channels in the same band (or different bands), to improve communication throughput and/or reliability between devices. Such a device is usually referred to as a multi-band device, or a multi-link device (MLD), and is sometimes also referred to as a multi-link entity or a multi-band entity. The multi-link device may be an access point device or a station device. In a case where the multi-link device is the access point device, the multi-link device includes one or more APs; and in a case where the multi-link device is the station device, the multi-link device includes one or more non-AP STAs.

In order to facilitate understanding of the technical solutions of the embodiments of the present disclosure, multi-link discovery and multi-link setup related to the present disclosure will be described below.

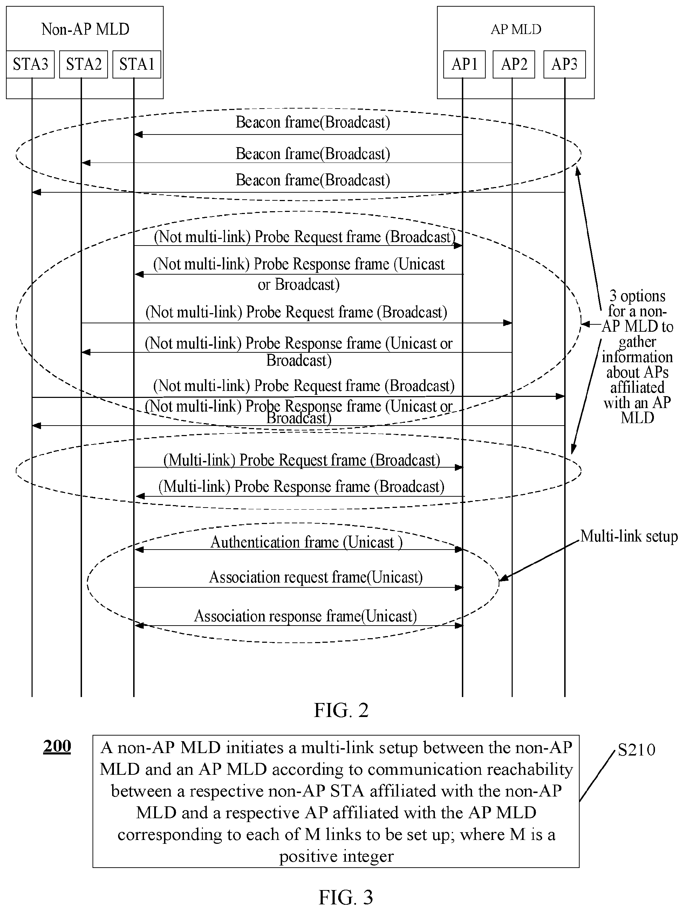

As illustrated in FIG. 2, a non-AP MLD gathers information about an AP MLD and each affiliated AP that is interested in before initiating a multi-link setup with the AP MLD. The non-AP MLD adopts one or a combination of the following methods to gathers this information:
1) performing passive scanning procedure or active scanning procedure related to non-multi-link operations through each of its affiliated STAs of the non-AP MLD; or
2) transmitting a multi-link probe request on any link that the AP MLD is operating on through one of its affiliated STAs of the non-AP MLD, to obtain complete information about the AP MLD and its affiliated APs.

The non-AP MLD and the AP MLD perform a multi-link setup by exchanging an association request or association response (Association Request/Response) frame on one of requested links to be set up, as illustrated in FIG. 2. The association request or association response frame carries a basic multi-link element for multi-link setup. The non-AP MLD indicates multiple links requested to be set up as well as their capabilities and operating parameters in the association request frame; and the AP MLD indicates links that are accepted to set up and links that are rejected to set up among the multiple links requested to be set up as well as capabilities and operating parameters of the requested links in the association response frame.

For multiple links set up successfully, the AP MLD assigns an association identifier (AID) to the non-AP MLD, and all STAs affiliated with the non-AP MLD have the same AID (i.e., the AID assigned to the non-AP MLD during the multi-link setup process). After the multi-link setup between the non-AP MLD and the AP MLD is completed, the non-AP MLD and the AP MLD set up multiple links for multi-link operation, while the non-AP MLD is associated with the AP MLD.

In order to facilitate understanding of the technical solutions of the embodiments of the present disclosure, a traffic identifier to link mapping related to the present disclosure will be described below.

A traffic identifier to link mapping (TID-to-link mapping) mechanism allows an AP MLD and a non-AP MLD that performed or are performing multi-link setup to determine, for the non-AP MLD, how uplink and downlink quality of service (QoS) traffic (QoS traffic) corresponding to traffic identifier (TID) values will be assigned to setup links for transmission. By default, all TIDs are mapped to all setup links in both downlink and uplink directions. Through a negotiation of TID-to-link mapping, a TID may be mapped to a link subset of the setup links. In addition, for a non-AP MLD, if at least one TID is mapped to a setup link either in uplink or downlink, the setup link is defined as "enabled" or "enabled state"; or if no TID is mapped to a setup link either in uplink or downlink, the setup link is defined as "disabled" or "disabled state". Therefore, by default, all setup links are enabled.

If a link is enabled for a non-AP MLD, then:
1) the link may be used for individually addressed frame exchange subject to the power state of the STA of the non-AP MLD operating on the link; in addition, corresponding to the TID-to-link mapping, only medium access control (MAC) service data units (MSDUs) or aggregate medium access control (MAC) service data units (A-MSDUs) corresponding to the TID mapped to the link may perform downlink/uplink transmission between the AP affiliated with the AP MLD and the STA affiliated with the non-AP MLD corresponding to the link;
2) The MSDUs or A-MSDUs corresponding to the TID mapped to the link corresponding to the TID-to-link mapping perform downlink/uplink transmission between the AP affiliated with the AP MLD and the STA affiliated with the non-AP MLD corresponding to the link by following a channel access based on a hybrid coordination function (HCF) competition (e.g., enhanced distributed channel access (EDCA)).
3) individually addressed management frames and control frames may perform downlink/uplink transmission between a STA affiliated with the non-AP MLD corresponding to any enabled link and an AP affiliated with the associated AP MLD.

In order to facilitate understanding of the technical solutions of the embodiments of the present disclosure, the problems solved by the present disclosure will be described below.

At the present stage, when one non-AP MLD initiates a multi-link setup with one AP MLD, as long as one of STAs affiliated with the non-AP MLD and one of APs affiliated with the AP MLD, corresponding to one of the links requested to be set up, may communicate within a reachable range, the non-AP MLD may not only gather information about APs affiliated with the AP MLD corresponding to other links requested to be set up, but also complete the multi-link setup including other links requested to be set up through this link that is capable of communicating within the reachable range, even if STAs affiliated with the non-AP MLD and the APs affiliated with AP MLD, corresponding to the other links requested to be set up, may not be within the communication range. After the multi-link setup is completed, by default, all traffic identifiers (TIDs) are mapped to all setup links in the downlink and uplink directions, including a setup link in the non-AP MLD that may not be within the communication range. Therefore, when the setup link in the non-AP MLD that is not within the communication range is also set to the enabled state, which results in an actual communication state (i.e., un-communicable state) of the setup link that is not within the communication range being inconformity with a link management state (i.e., enabled state) corresponding to the TID-to-link mapping of the link.

Moreover, for the case where the multi-link setup between a non-AP MLD and an AP MLD is completes or a non-AP MLD is associated with an AP MLD, it is mainly based on association at a multi-link device (MLD) level. For multi-link operations, an assumption premise for setup of the current multi-link management mechanism is that: as long as one STA affiliated with the non-AP MLD and one AP affiliated with the AP MLD, corresponding to one setup link, may communicate within the reachable range, then other STAs affiliated with the non-AP MLD and other APs affiliated with the AP MLD, corresponding to other setup links, may also communicate within the reachable range.

Therefore, at the present stage, when performing multi-link operations during the multi-link setup process or after multi-link setup, there is a lack of consideration on the situation that "for the setup links, in which one of the STAs affiliated with the non-AP MLD and one of the APs affiliated with the AP MLD, corresponding to one setup link, may communicate within the reachable range, while STA(s) affiliated with the non-AP MLD and AP(s) affiliated with the AP MLD, corresponding to another one or more setup links, may not communicate (is not within their reachable range)". In particular, when the operating frequency band of the WIFI link is extended to the millimeter wave frequency band in the future, the reachable range of the 2.4GHz/5GHz operating frequency band is greatly different from that of the millimeter wave operating band. During the multi-link setup and multi-link operation processes, it is necessary to consider a communication reachability problem of different links caused by differences in communication reachability range between different links of the non-AP MLD.

Based on the above problem (i.e., the problem that the actual communication state of the link is inconformity with the enabled state of the link during the multi-link setup and multi-link management processes), the present disclosure proposes a multi-link communication solution, in which a non-AP MLD initiates a multi-link setup between the non-AP MLD and an AP MLD according to communication reachability between a respective non-AP STA affiliated with the non-AP MLD and a respective AP affiliated with the AP MLD corresponding to each of M links to be set up; and/or a non-AP MLD manages N setup links according to communication reachability between a respective non-AP STA affiliated with the non-AP MLD and a respective AP affiliated with the AP MLD corresponding to each of the N setup links; and/or an AP MLD manages N setup links according to communication reachability between a respective AP affiliated with the AP MLD and a respective non-AP STA affiliated with the non-AP MLD corresponding to each of the N setup links.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up a link corresponding to a non-AP STA affiliated with the non-AP MLD among the M links, in which the non-AP STA is within a reachable communication range of an AP affiliated with the AP MLD. Optionally, the non-AP MLD requests, according to the communication reachability between the respective non-AP STA affiliated with the non-AP MLD and the respective AP affiliated with the AP MLD corresponding to each of the M links to be set up, to set up the M links, and reports relevant information on whether the M links are reachable in communication and/or reports relevant information on whether the M links are enabled, thereby reflecting the actual communication state of the link. In other words, the non-AP MLD may optimize the multi-link setup procedure according to the communication reachability of the links to be set up, thereby ensuring that the actual communication state of the link is conformity with the enabled state of the link.

Specifically, after the multi-link setup is completed, the non-AP MLD sets an enabled link that communication between a non-AP STA affiliated with the non-AP MLD and an AP affiliated with the AP MLD is unreachable among N links to a disabled state; or the non-AP MLD deletes a link that communication between a non-AP STA affiliated with the non-AP MLD and an AP affiliated with the AP MLD is unreachable among the N links, thereby ensuring that the actual communication state of the link is conformity with the enabled state of the link.

Specifically, after the multi-link setup is completed, the AP MLD sets an enabled link that communication between an AP affiliated with the AP MLD and a non-AP STA affiliated with the non-AP MLD is unreachable among the N links to a disabled state, or the AP MLD deletes a link that communication between an AP affiliated with the AP MLD and a non-AP STA affiliated with the non-AP MLD is unreachable among the N links, thereby ensuring that the actual communication state of the link is conformity with the enabled state of the link.

The technical solutions of the present disclosure will be described in detail below through specific embodiments.

FIG. 3 is a schematic flowchart of a multi-link communication method 200 according to an embodiment of the present disclosure. As illustrated in FIG. 3, the multi-link communication method 200 may include at least part of the following contents.

In S210, a non-AP MLD initiates a multi-link setup between the non-AP MLD and an AP MLD according to communication reachability between a respective non-AP STA affiliated with the non-AP MLD and a respective AP affiliated with the AP MLD corresponding to each of M links to be set up; where M is a positive integer.

In the embodiments of the present disclosure, the non-AP MLD initiates the multi-link setup between the non-AP MLD and the AP MLD according to the communication reachability between the respective non-AP STA affiliated with the non-AP MLD and the respective AP affiliated with the AP MLD corresponding to each of the M links to be set up. That is, the non-AP MLD may optimize the multi-link setup procedure according to the communication reachability of the links to be set up, thereby ensuring that the actual communication state of the link is conformity with the enabled state of the link.

In the embodiments of the present disclosure, a "field" may also be referred to as a "field" or a "subfield". One field may occupy one or more octets (or bytes), or one field may occupy one or more bits.

The embodiments of the present disclosure are mainly directed to the multi-link setup and multi-link management between the AP MLD and the non-AP MLD, and may also be extended to the multi-link setup and multi-link management between one non-AP MLD and another non-AP MLD, that is, the AP MLD in the embodiments of the present disclosure is replaced with another non-AP MLD.

In some embodiments, before initiating the multi-link setup with the AP MLD, the non-AP MLD may gather information about the AP MLD and each affiliated AP that is interested in. That is, before initiating the multi-link setup with the AP MLD, the non-AP MLD may gather information about the AP MLD and information about a respective AP affiliated with the AP MLD corresponding to each of the M links.

In some embodiments, the M links are part or all of links that the non-AP MLD intends to set up.

In some embodiments, in a case where a non-AP STA affiliated with the non-AP MLD corresponding to an i-th link to be set up receives a frame (e.g., a beacon frame or other frame) transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame (e.g., a beacon frame or other frame) transmitted by another AP in the same basic service set (BSS) (co-located BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame (e.g., a beacon frame or other frame) transmitted by another AP in the same multiple basic service set identifier (BSSID) set (Multiple BSSID set) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1≤i≤M).

In some embodiments, the preset time is configured or indicated by the AP MLD, or the preset time is determined by negotiation between the non-AP MLD and the AP MLD, or the preset time is agreed upon by a protocol.

In some embodiments, specifically, the S210 may include the following operation.

The non-AP MLD transmits a first association request frame through one of non-AP STAs affiliated with the non-AP MLD.

Where the first association request frame is used for requesting to set up a link corresponding to a non-AP STA affiliated with the non-AP MLD among the M links, in which the non-AP STA affiliated with the non-AP MLD is within a reachable communication range of an AP affiliated with the AP MLD.

That is, for a non-AP STA affiliated with the non-AP MLD that is within a reachable communication range for an AP affiliated with the AP MLD corresponding to a link to be set up, link setup is performed accordingly, that is, the links requested to be set up carried by the association request frame during the multi-link setup include links that have been determined to be reachable in communication; for a non-AP STA affiliated with the non-AP MLD that is not within a reachable communication range for an AP affiliated with the AP MLD corresponding to a link to be set up, link setup is not performed accordingly, that is, the links requested to be set up carried by the association request frame during the multi-link setup do not include links that have been determined to be unreachable in communication.

It should be noted that the non-AP MLD may also transmit the first association request frame through multiple non-AP STAs affiliated with the non-AP MLD, which is not limited in the embodiments of the present disclosure.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up the link corresponding to the non-AP STA affiliated with the non-AP MLD among the M links, in which the non-AP STA affiliated with the non-AP MLD is within the reachable communication range of the AP affiliated with the AP MLD. That is, the link requested to set up by the non-AP MLD may reflect the actual communication state of the link. In other words, the non-AP MLD may optimize the multi-link setup procedure according to the communication reachability of the links to be set up, thereby ensuring that the actual communication state of the link is conformity with the enabled state of the link.

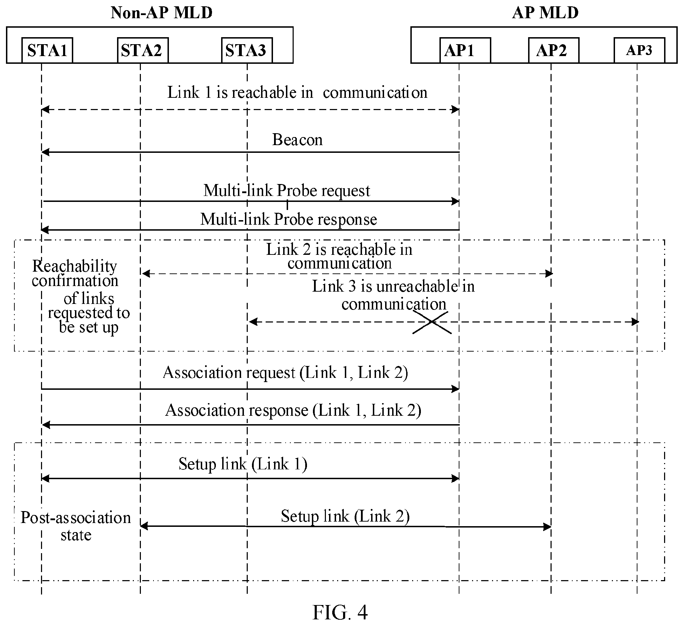

Specifically, for example, as illustrated in FIG. 4, STA1 of the non-AP MLD gathers the information about the AP MLD and its affiliated APs through the beacon frame and/or multi-link probe response (ML Probe Response) frame; the reachability confirmation is performed on each of the links to be set up (Link1, Link2, and Link3) (in which the method of reachability confirmation is described above), respectively; and it is confirmed that Link1 and Link2 are reachable in communication but Link3 is unreachable in communication. Then, the non-AP MLD only requests to set up Link1 and Link2 in the association request for initiating multi-link setup, but does not request to set up Link3. After the non-AP MLD and AP MLD complete the association request/response interactions, the setup of Link1 and Link2 is completed.

In some embodiments, specifically, the S210 may include the following operation.

The non-AP MLD transmits a second association request frame through one of non-AP STAs affiliated with the non-AP MLD.

Where the second association request frame is used to for requesting to set up the M links; and the second association request frame includes relevant information on whether the M links are reachable in communication, and/or the second association request frame includes relevant information on whether the M links are enabled.

That is, for each affiliated STA in the non-AP MLD that requests to set up a link, link setup is performed accordingly, however, when initiating the multi-link setup, the non-AP MLD provides an indication on reachability and/or whether is enabled of the link requested to be set up.

It should be noted that the non-AP MLD may also transmit the second association request frame through multiple non-AP STAs affiliated with the non-AP MLD, which is not limited in the embodiment of the present disclosure.

Specifically, during the multi-link setup process, the non-AP MLD transmits, according to the communication reachability between the respective non-AP STA affiliated with the non-AP MLD and the respective AP affiliated with the AP MLD corresponding to each of the M links to be set up, the second association request frame to request to set up the M links, and carries the following information in the second association request frame: the relevant information on whether the M links are reachable in communication and/or the relevant information on whether the M links are enabled. In this way, the actual communication state of the link may be reflected. In other words, the non-AP MLD may optimize the multi-link setup procedure according to the communication reachability of the links to be set up, thereby ensuring that the actual communication state of the link is conformity with the enabled state of the link.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled.

In some embodiments, for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

Specifically, for example, for the STA affiliated with the non-AP MLD that is within the reachable communication range for the AP affiliated with the AP MLD corresponding to the link to be set up, the reachability of the link to be set up corresponding to the STA affiliated with the non-AP MLD is indicated as "reachable" and/or the link to be set up is indicated as "enabled" correspondingly. For the STA affiliated with the non-AP MLD that is not within the reachable communication range for the AP affiliated with the AP MLD corresponding to the link to be set up, the reachability of the link be set up corresponding to the STA affiliated with the non-AP MLD is indicated as "unreachable" and/or the link to be set up is indicated as "disabled" correspondingly.

In some embodiments, the second association request frame includes M first indication fields, and/or the second association request frame includes a second indication field; where the M first indication fields correspond to the M links, respectively, and each of the M first indication fields is used for indicating whether a respective link is reachable in communication; and the second indication field is used for indicating whether each of the M links is enabled.

In some embodiments, the first indication field is a reachability field, and/or the second indication field is a traffic identifier to link mapping element (TID-to-link mapping element).

In some embodiments, the second association request frame includes a basic multi-link element.

Where a station control field (STA Control field) in a per-station profile subelement (per-STA Profile subelement) included in a link information field (Link Info field) of the basic multi-link element includes a link identifier (link ID) field and a first indication field (i.e., a reachability field) corresponding to a link identified by the link ID field.

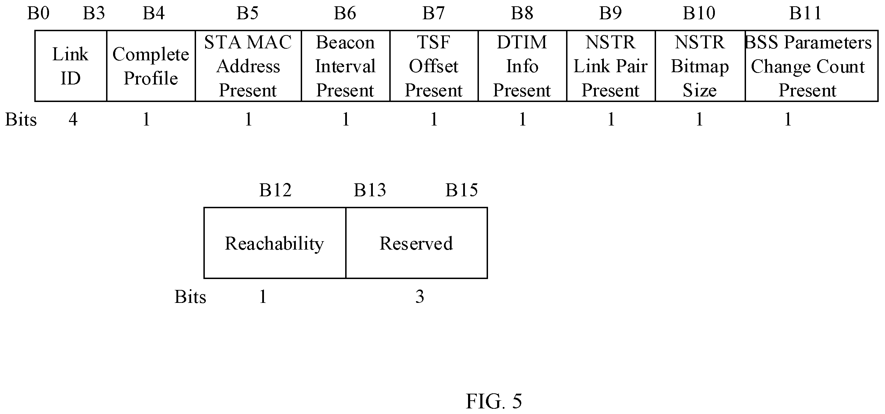

In some embodiments, the STA Control field in the per-STA Profile subelement included in the Link Info field of the basic multi-link element may be as illustrated in FIG. 5, and the STA Control field may include a reachability field. In addition, the STA Control field may also include the following information fields: a complete profile (Complete Profile) field, a STA medium access control (MAC) address present (STA MAC Address Present) field, a beacon interval present (Beacon Interval Present) field, a timing synchronization function (TSF) offset present (TSF Offset Present) field, a delivery traffic indication message (DTIM) information present (DTIM Info Present) field, a non simultaneous transmit and receive (NSTR) link pair present (NSTR Link Pair Present) field, and a BSS parameters change count present (BSS Parameters Change Count Present) field.

Specifically, as illustrated in FIG. 5, the reachability field occupies 1 bit. For example, responsive to that the value of the reachability field is 0, it is indicated that the corresponding link is reachable in communication, that is, the reported STA is within the reachable communication range of the peer STA; and responsive to that the value of the reachability field is 1, it is indicated that the corresponding link is unreachable in communication, that is, the reported STA is outside the reachable communication range of the peer STA. For another example, responsive to that the value of the reachability field is 1, it is indicated that the corresponding link is reachable in communication, that is, the reported STA is within the reachable communication range of the peer STA; and responsive to that the value of the reachability field is 0, it is indicated that the corresponding link is unreachable in communication, that is, the reported STA is outside the reachable communication range of the peer STA.

In some embodiments, for a link to be set up (set as link-i), when it is determined that a STA (set as STA i) affiliated with the non-AP MLD corresponding to this link (link-i) is within the reachable communication range of an AP (set as AP i) affiliated with the AP MLD corresponding to this link, it is indicated in the TID-to-link mapping element that at least one TID is mapped to this link either in uplink or downlink, that is, this link is "enabled".

In some embodiments, for a link to be set up (set as link-j), when it is determined that a STA (set as STA j) affiliated with the non-AP MLD corresponding to this link (link- j) is not within the reachable communication range of an AP (set as AP j) affiliated with the AP MLD corresponding to this link, it is indicated in the TID-to-link mapping element that "no TID is mapped to this link either in uplink or downlink", that is, the link is "disabled".

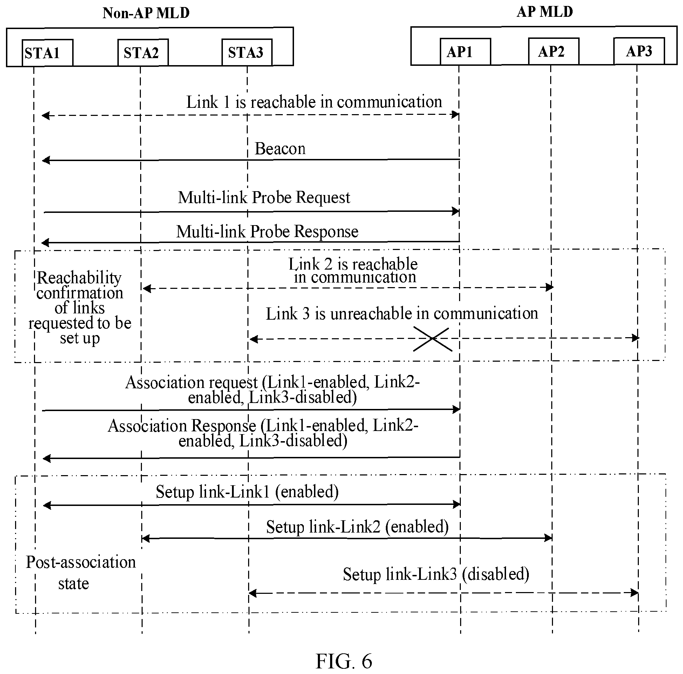

Specifically, for example, as illustrated in FIG. 6, STA1 of the non-AP MLD gathers the information about the AP MLD and its affiliated APs through the beacon frame and/or multi-link probe response (ML Probe Response) frame; and the reachability confirmation is performed on each of the links to be set up (Link1, Link2, and Link3) (in which the method of reachability confirmation is described above), respectively, and it is confirmed that Link1 and Link2 are reachable in communication but Link3 is unreachable in communication. Then, in the association request for initiating multi-link setup, the non-AP MLD performs corresponding link setup (Link1, Link2, Link3) for each affiliated STA requesting to set up a link. However, when the non-AP MLD initiates the multi-link setup, in the association request, the reachability of Link1 and Link2 is indicated as "reachable" and/or Link1 and Link2 are indicated as "enabled" correspondingly, while the reachability of Link3 is indicated as "unreachable" and/or Link3 is indicated as "disabled" correspondingly. After the association request/response interactions between the non-AP MLD and the AP MLD are completed, the setup of Link1, Link2 and Link 3 is completed.

It should be noted that FIG. 6 exemplarily illustrates that the association request and association response only indicate whether the link is enabled, in which the association request and association response may also indicate whether the link is reachable, or indicate whether the link is enabled and reachable simultaneously, which is not limited in the embodiments of the present disclosure.

In some embodiments, the non-AP MLD manages N setup links according to communication reachability between a respective non-AP STA affiliated with the non-AP MLD and a respective AP affiliated with the AP MLD corresponding to each of the N setup links, where N is a positive integer, and N is less than or equal to M (i.e., N≤M).

In the embodiments of the present disclosure, the non-AP MLD manages the N setup links according to the communication reachability between the respective non-AP STA affiliated with the non-AP MLD and the respective AP affiliated with the AP MLD corresponding to each of the N setup links, that is, the non-AP MLD may optimize the multi-link management procedure according to the communication reachability of the setup links, thereby ensuring that the actual communication state of the link is conformity with the enabled state of the link.

In some embodiments, the N links are part or all of links set up by the non-AP MLD.

In some embodiments, the N links may include links requested to be set up by other association request frames other than the first association request frame and the second association request frame, which is not limited in the embodiments of the present disclosure.

In some embodiments, the operation that the non-AP MLD manages the N setup links according to the communication reachability between the respective non-AP STA affiliated with the non-AP MLD and the respective AP affiliated with the AP MLD corresponding to each of the N setup links includes:
setting, by the non-AP MLD, an enabled link that communication between a non-AP STA affiliated with the non-AP MLD and an AP affiliated with the AP MLD is unreachable among the N links to a disabled state; or deleting, by the non-AP MLD, a link that communication between a non-AP STA affiliated with the non-AP MLD and an AP affiliated with the AP MLD is unreachable among the N links.

In some embodiments, after the multi-link setup is completed, for a setup link (set as Link-i), in a case where communication between a STA (set as STAi) affiliated with the non-AP MLD corresponding to Link-i and a STA (set as APi) affiliated with the AP MLD corresponding to Link-i is unreachable, the non-AP MLD may adopt one of the following actions.
1) The non-AP MLD initiates a TID-to-link mapping request to the AP MLD, and negotiates with the AP MLD to set Link-i to the "disabled" state; or the non-AP MLD initiates a TID-to-link mapping notification to the AP MLD, to set Link-i to the "disabled" state.
2) The non-AP MLD initiates a link reconfiguration request to the AP MLD, and negotiates with the AP MLD to delete Link-i; or the non-AP MLD initiates a link reconfiguration notification to the AP MLD, to delete Link-i.

In some embodiments, a processing manner of the non-AP MLD for the link that the communication between the non-AP STA affiliated with the non-AP MLD and the AP affiliated with the AP MLD is unreachable among the N links is determined by negotiation between the non-AP MLD and the AP MLD.

In some embodiments, in a case where the non-AP MLD sets the enabled link that the communication between the non-AP STA affiliated with the non-AP MLD and the AP affiliated with the AP MLD is unreachable among the N links to the disabled state, a link set to the disabled state among the N links refers to a link without a TID mapping.

Specifically, for example, if at least one TID is mapped to a setup link either in uplink or downlink, the setup link is defined as "enabled" or "enabled state"; or if no TID is mapped to a setup link either in uplink or downlink, the setup link is defined as "disabled" or "disabled state".

In some embodiments, in a case where the non-AP MLD sets the enabled link that the communication between the non-AP STA affiliated with the non-AP MLD and the AP affiliated with the AP MLD is unreachable among the N links to the disabled state, for a link set to the disabled state among the N links since communication between a non-AP STA affiliated with the non-AP MLD and an AP affiliated with the AP MLD is unreachable, the non-AP MLD sets the link to an enabled state in a case where the communication between the non-AP STA affiliated with the non-AP MLD and the AP affiliated with the AP MLD corresponding to the link is reachable.

For example, after the multi-link setup is completed, for a setup link (set as Link-i), in a case where communication between a STA (set as STAi) affiliated with the non-AP MLD corresponding to Link-i and a STA (set as APi) affiliated with the AP MLD corresponding to Link-i is unreachable, the non-AP MLD sets the enabled Link-i to the disabled state. After a period of time, due to movement of STAi or improvement of link quality, the communication between STAi and APi may become reachable; and the non-AP MLD sets Link-i to the enabled state after the communication between STAi and APi is reachable.

In some embodiments, in a case where a non-AP STA affiliated with the non-AP MLD corresponding to a j-th link receives at least one frame transmitted by an AP affiliated with the AP MLD corresponding to the j-th link within a duration Tⱼ, communication between the non-AP STA affiliated with the non-AP MLD and the AP affiliated with the AP MLD corresponding to the j-th link is reachable; or
in a case where a non-AP STA affiliated with the non-AP MLD corresponding to a j-th link receives at least one frame transmitted by an AP affiliated with the AP MLD corresponding to the j-th link within a duration Tₐₗₗ, communication between the non-AP STA affiliated with the non-AP MLD and the AP affiliated with the AP MLD corresponding to the j-th link is reachable.

Where the j-th link is a j-th link among all setup links, the duration Tⱼ is a max idle time for link enabled corresponding to the j-th link, the duration Tₐₗₗ is a max idle time for link enabled corresponding to the all setup links, and j is a positive integer.

That is, the duration Tⱼ may be an idle timeout limit for link enabled corresponding to the j-th link, and the duration Tₐₗₗ may be an idle timeout limit for link enabled corresponding to the all setup links.

In some embodiments, the duration Tⱼ is a periodic duration. That is, the duration Tⱼ may be a max idle period for link enabled corresponding to the j-th link.

In some embodiments, the duration Tⱼ is determined or indicated by the non-AP MLD.

In some embodiments, the duration Tₐₗₗ is a periodic duration. That is, the duration Tₐₗₗ may be a max idle period for link enabled corresponding to the all setup links.

In some embodiments, the duration Tₐₗₗ is determined or indicated by the non-AP MLD.

Specifically, for example, after the multi-link setup is completed, for a setup link (set as Link-i), in a case where a STA (set as STAi) affiliated with the non-AP MLD corresponding to Link-i has not received any frame (without frame type requirements) transmitted by a STA (set as APi) affiliated with the AP MLD corresponding to Link-i or has not received a frame with specified type (with frame type requirements) transmitted by APi, within a corresponding "max idle period for link enabled (transmitted by the non-AP MLD)", communication between STAi and APi corresponding to Link-i is unreachable.

In some embodiments, a type of the at least one frame is a designated frame type for indicating an enable or active state of a link.

Specifically, for example, the designated frame type for indicating the enable or active state of the link may be a protected frame, that is, only the protected frame indicates the enabled or active state.

Specifically, for another example, the designated frame type for indicating the enable or active state of the link may be a protected frame and an unprotected frame, that is, both the protected frame and the unprotected frame may indicate the enabled or active state.

In some embodiments, the at least one frame includes, but is not limited to, at least one of: a data frame corresponding to a TID mapped to the j-th link, a power saving poll ( PS-Poll) frame or a management frame.

In some embodiments, in a case where communication reachability between the non-AP STA affiliated with the non-AP MLD and the AP affiliated with the AP MLD corresponding to the j-th link is determined based on the duration Tⱼ, an association request frame for multi-link setup transmitted by the non-AP MLD through one of non-AP STAs affiliated with the non-AP MLD includes S third indication fields, and each of the S third indication fields is used for indicating respective max idle time information for link enabled corresponding to each of the S links, and S is a positive integer.

That is, the third indication field included in the association request frame may be used for indicating the duration Tⱼ to the AP MLD.

Optionally, the association request frame may be the first association request frame or the second association request frame.

It should be noted that the number of third indication fields included in the association request frame may be different from the number of links requested to be set up by the association request frame, that is, the non-AP MLD may indicate the max idle time information for link enabled corresponding to part or part of the links requested to be set up through the association request frame.

In some embodiments, the association request frame for multi-link setup includes a basic multi-link element.

Where a STA Control field in a per-STA Profile subelement included in a link Info field of the basic multi-link element includes a link ID field and a first present field, and the first present field is used for indicating whether a station information field (STA Info field) in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, in a case where the duration Tⱼ is a periodic duration, that is, in a case where the duration Tⱼ is the max idle period for link enabled corresponding to the j-th link, the third indication field is a max idle period information for link enabled field or max idle period information for link enabled subfield, and the first present field is a max idle period information for link enabled present field or max idle period information for link enabled present subfield.

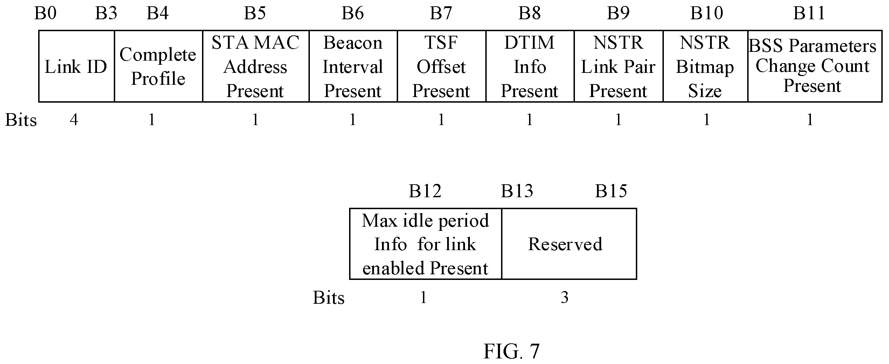

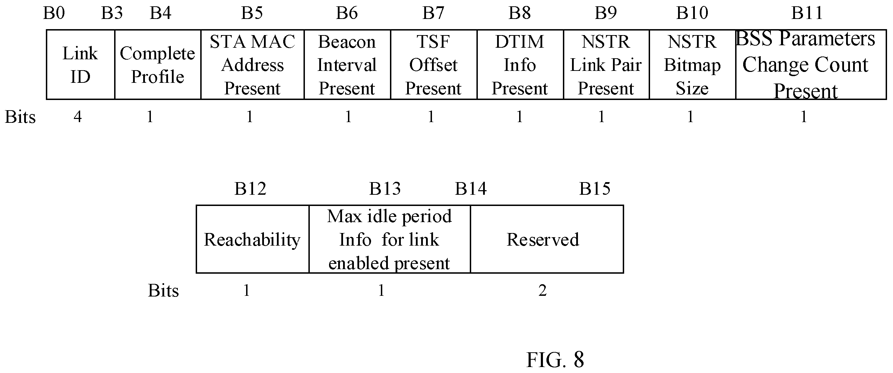

In some embodiments, the STA Control field in the per-STA Profile subelement included in the Link Info field of the basic multi-link element may be as illustrated in FIG. 7, and the STA Control field includes a max idle period information for link enabled present (max idle period Info for link enabled Present) field. Optionally, on the basis of FIG. 7, as illustrated in FIG. 8, the STA Control field may also include the above reachability field. In addition, as illustrated in FIG. 7 and FIG. 8, the STA Control field may also include the following information fields: a Complete Profile field, a STA MAC Address Present field, a Beacon Interval Present field, a TSF Offset Present field, a DTIM Info Present field, a NSTR Link Pair Present field, and a BSS Parameters Change Count Present field.

Specifically, as illustrated in FIG. 7 and FIG. 8, the max idle period Info for link enabled Present field occupies 1 bit. For example, responsive to that the value of the max idle period Info for link enabled Present field is 0, it is indicated that the STA Info field in the per-STA Profile subelement includes the max idle period information for link enabled (max idle period Info for link enabled) field corresponding to the link identified by the Link ID field; and responsive to that the value of the max idle period Info for link enabled Present field is 1, it is indicated that the STA Info field in the per-STA Profile subelement does not include the max idle period Info for link enabled field corresponding to the link identified by the Link ID field. For another example, responsive to that the value of the max idle period Info for link enabled Present field is 1, it is indicated that the STA Info field in the per-STA Profile subelement includes the max idle period Info for link enabled field corresponding to the link identified by the Link ID field; and responsive to that the value of the max idle period Info for link enabled Present field is 0, it is indicated that the STA Info field in the per-STA Profile subelement does not include the max idle period Info for link enabled field corresponding to the link identified by the Link ID field.

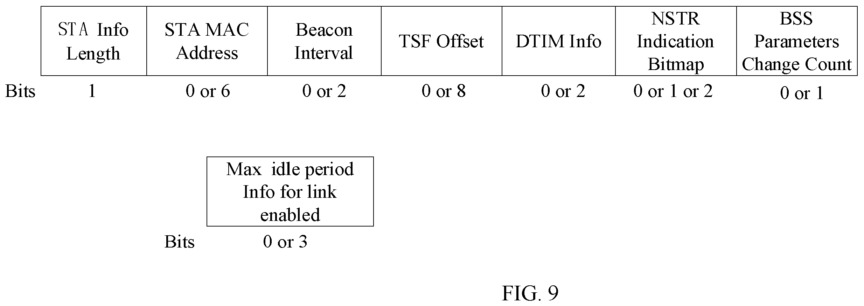

In some embodiments, the STA Info field in the per-STA Profile subelement included in the Link Info field of the basic multi-link element may be as illustrated in FIG. 9, where the STA Info field includes the max idle period Info for link enabled field. In addition, as illustrated in FIG. 9, the STA Info field may also include at least one of: a station information length (STA Info length) field, a STA MAC Address field, a Beacon Interval field, a TSF Offset field, a DTIM information (DTIM Info) field, an NSTR indication bitmap (NSTR Indication Bitmap) field, or a BSS Parameters Change Count field.

In some embodiments, each third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the non-AP MLD when communication between a corresponding non-AP STA affiliated with the non-AP MLD and a corresponding AP affiliated with the AP MLD corresponding to an enabled link is unreachable.

In some embodiments, the first subfield is a max idle time for link enabled subfield, the second subfield is an idle option for link enabled subfield, the first field is a protected keep-enabled required (Protected Keep-enabled Required) field, and the second field is an expected behavior beyond the max idle time field.

In some embodiments, in a case where the duration Tⱼ is a periodic duration, that is, in a case where the duration Tⱼ is the max idle period for link enabled corresponding to the j-th link, the first subfield is the max idle period for link enabled subfield, the second subfield is the idle option for link enabled subfield, the first field is the Protected Keep-enabled Required field, and the second field is the expected behavior beyond the max idle time field.

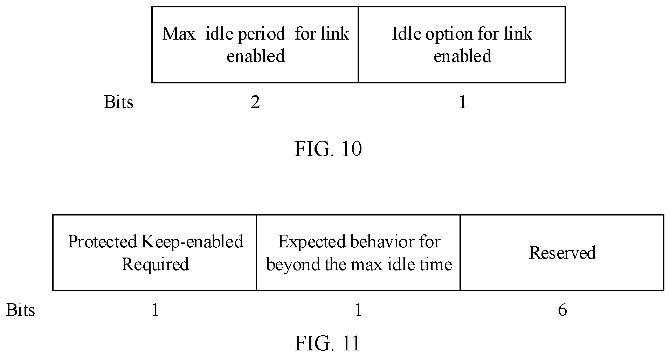

In some embodiments, the third indication field is the max idle period Info for link enabled field, and in this case, the max idle period Info for link enabled field may be as illustrated in FIG. 10, and the max idle period Info for link enabled field may include the max idle period for link enabled subfield and the idle option for link enabled subfield. Optionally, the idle option for link enabled subfield may be as illustrated in FIG. 11, and the idle option for link enabled subfield may include the Protected Keep-enabled Required field and the expected behavior beyond the max idle time field.

Specifically, as illustrated in FIG. 10, the max idle period for link enabled subfield is used for indicating the idle timeout limit for link enabled, which is in units of 1000 TUs; and the value of "0" is reserved. For the non-AP STA, the max idle period Info for link enabled subfield is transmitted by the non-AP MLD to which the non-AP STA is affiliated: the non-AP STA shall receive at least one frame (such as, the data frame corresponding to the TID mapped to the link, the PS-poll frame or the management frame, and meanwhile, meeting the frame requirements indicated by the Protected Keep-enabled Required subfield) transmitted by the affiliated AP of its associated AP MLD, within the max idle period for link enabled indicated by the max idle period for link enabled subfield, then, it may be considered that the link is maintained at the enabled state. For the AP, the max idle period Info for link enabled subfield is transmitted by the AP MLD to which the AP is affiliated: the AP shall receive at least one frame (such as, the data frame corresponding to the TID mapped to the link, the PS-poll frame or the management frame, and meanwhile, meeting the frame requirements indicated by the Protected Keep-enabled Required subfield) transmitted by the affiliated non-AP STA of its associated non-AP MLD, within the max idle period for link enabled indicated by the max idle period for link enabled subfield, then, it may be considered that the link is maintained at the enabled state.

Specifically, as illustrated in FIG. 11, the Protected Keep-enabled Required field occupies 1 bit. For example, the value of the Protected Keep-enabled Required is 1, indicating that only the protected frame indicates the enable or active state, and the value of the Protected Keep-enabled Required field is 0, indicating that both the protected frame and unprotected frame may indicate the enable or active state. For another example, the value of the Protected Keep-enabled Required field is 0, indicating that only the protected frame indicates the enable or active state, and the Protected Keep-enabled Required field is 1, indicating that both the protected frame and unprotected frame may indicate enable or active state.

Specifically, for example, for the non-AP STA, the max idle period Info for link enabled field is transmitted by the non-AP MLD to which the non-AP STA is affiliated, and the Protected Keep-enabled Required field is used for indicating the frame requirements transmitted by its associated AP to the non-AP STA. For the AP, the max idle period Info for link enabled field is transmitted by the AP MLD to which the AP is affiliated, and the Protected Keep-enabled Required field is used for indicating the frame requirements transmitted by its associated non-AP STA to the the AP.

Specifically, as illustrated in FIG. 11, the expected behavior beyond the max idle time field occupies 1 bit. For example, the value of the expected behavior beyond the max idle time field is 0, indicating that the link is expected to be set to the "disabled" state when the duration of any frame (meeting the frame requirements indicated by the Protected Keep-enabled Required subfield) transmitted by the peer STA being not received on the corresponding link is equal to or exceeds the time indicated by the "max idle period for link enabled" subfield; and the value of the expected behavior beyond the max idle time field is 1, indicating that the link is expected to be deleted when the duration of any frame (meeting the frame requirements indicated by the Protected Keep-enabled Required subfield) transmitted by the peer STA being not received on the corresponding link is equal to or exceeds the time indicated by the "max idle period for link enabled" subfield. For another example, the value of the expected behavior beyond the max idle time field is 1, indicating that the link is expected to be set to the "disabled" state when the duration of any frame (meeting the frame requirements indicated by the Protected Keep-enabled Required subfield) transmitted by the peer STA being not received on the corresponding link is equal to or exceeds the time indicated by the "max idle period for link enabled" subfield; and the value of the expected behavior beyond the max idle time field is 0, indicating that the link is expected to be deleted when the duration of any frame (meeting the frame requirements indicated by the Protected Keep-enabled Required subfield) transmitted by the peer STA being not received on the corresponding link is equal to or exceeds the time indicated by the "max idle period for link enabled" subfield.

Specifically, for example, for the non-AP STA, the expected behavior beyond the max idle time field indicates the behavior expected to be performed when the duration is equal to or exceeds the time indicated by the "max idle period for link enabled" subfield, in which the duration is a duration that the non-AP MLD has not received any frame (meeting the frame requirements indicated by the Protected Keep-enabled Required subfield) transmitted by the peer STA of the link (i.e., the corresponding AP) on the corresponding link to which the max idle period Info for link enabled subfield applies. For the AP, the expected behavior beyond the max idle period field indicates the behavior expected to be performed when the duration is equal to or exceeds the time indicated by the "max idle period for link enabled" subfield, in which the duration is a duration that the AP MLD has not received any frame (meeting the frame requirements indicated by the Protected Keep-enabled Required subfield) transmitted by the peer STA of the link (i.e., the corresponding non-AP STA) on the corresponding link to which the max idle period Info for link enabled subfield applies.

In some embodiments, in a case where communication reachability between the non-AP STA affiliated with the non-AP MLD and the AP affiliated with the AP MLD corresponding to the j-th link is determined based on the duration Tₐₗₗ, an association request frame for multi-link setup transmitted by the non-AP MLD through one of non-AP STAs affiliated with the non-AP MLD includes a fourth indication field, and the fourth indication field is used for indicating max idle time information for link enabled corresponding to the all setup links.

That is, the fourth indication field included in the association request frame may be used for indicating the duration Tₐₗₗ to the AP MLD.

Optionally, the association request frame may be the first association request frame or the second association request frame.

In some embodiments, the association request frame for multi-link setup includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, in a case where the duration Tⱼ is a periodic duration, that is, in a case where the duration Tₐₗₗ may be the max idle period for link enabled corresponding to the all setup links, the fourth indication field is a max idle period information for link enabled field or max idle period information for link enabled subfield, and the second present field is a max idle period information for link enabled present field or max idle period information for link enabled present subfield.

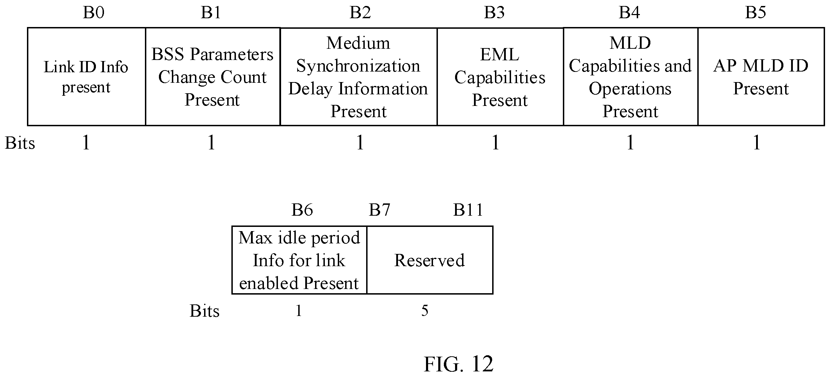

In some embodiments, the presence bitmap subfield (Presence Bitmap subfield) of the multi-link control field (Multi-Link Control field) of the basic multi-link element may be as illustrated in FIG. 12, where the Presence Bitmap subfield includes the max idle period Info for link enabled present field. In addition, as illustrated in FIG. 12, the Presence Bitmap subfield may also include the following information fields: a link identifier information present (link ID Info Present) field, a BSS Parameters Change Count Present field, a medium synchronization delay information present (Medium Synchronization Delay Information Present) field, an enhanced multi-link (EML) capabilities present (EML Capabilities Present) field, an MLD capabilities and operations present (MLD Capabilities and Operations Present) field, or an AP MLD identifier present field.

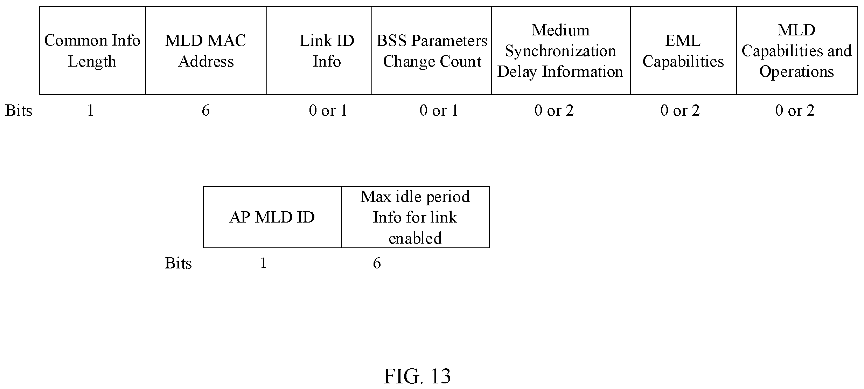

In some embodiments, the common information (Common Info) field in the Multi-Link Control field of the basic multi-link element may be as illustrated in FIG. 13, where the Common Info field includes a max idle period Info for link enabled field. As illustrated in FIG. 13, the common Info field may also include at least one of: a common information length (common Info length) field, an MLD MAC address (MLD MAC Address) field, link identifier information (link ID Info) field, a BSS parameters change count (BSS Parameters Change Count) field, a medium synchronization delay information (Medium Synchronization Delay Information) field, an EML capabilities (EML Capabilities) field, an MLD capabilities and operations (MLD Capabilities and Operations) field, or an AP MLD identifier field.

In some embodiments, the fourth indication field includes a third subfield and a fourth subfield; where the third subfield is used for indicating max idle time for link enabled corresponding to all links indicated by the basic multi-link element, and the fourth subfield includes a third field and a fourth field; and where the third field is used for indicating type information of a frame in an enabled or active state, and the fourth field is used for indicating a behavior of the non-AP MLD when communication between non-AP STAs affiliated with the non-AP MLD and APs affiliated with the AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, in a case where the duration Tⱼ is a periodic duration, that is, in a case where the duration Tₐₗₗ may be the max idle period for link enabled corresponding to the all setup links, the third subfield is the max idle period for link enabled subfield, the fourth subfield is the idle option for link enabled subfield, the third field is the Protected Keep-enabled Required field, and the fourth field is the expected behavior beyond the max idle time field.

It should be noted that the format of the third subfield may be the same as the format of the first subfield, the format of the fourth subfield may be the same as the format of the second subfield, the format of the third field may be the same as the format of the first field, and the format of the fourth field may be the same as the format of the second field, which will not be repeated here.

In some embodiments, during the multi-link setup, for one of the non-AP STAs affiliated with the non-AP MLD, if the per-STA Profile subelement of the multi-link element carried in the association request frame includes the max idle period Info for link enabled subfield, the value of each subfield in the max idle period Info for link enabled subfield is applied to the link corresponding to the per-STA Profile subelement (i.e., identified through the carried Link ID); and for one of the non-AP STAs affiliated with the non-AP MLD, if the common Info field of the multi-link element carried in the association request frame includes the max idle period Info for link enabled subfield, the value of each subfield in the max idle period Info for link enabled subfield is applied to all links indicated by the multi-link element or to the link transmitting the multi-link element. For the link applied by the max idle period Info for link enabled subfield transmitted by the non-AP MLD, the non-AP STA corresponding to the link shall receive at least one frame (such as, the data frame corresponding to the TID mapped to the link, the PS-poll frame or the management frame, and meanwhile, meeting the frame requirements indicated by the Protected Keep-enabled Required subfield (if any) indicated by the subfield) transmitted by the affiliated AP of its associated AP MLD (i.e., the AP corresponding to the link), within the max idle period for link enabled indicated by the subfield, then, it may be considered that the link is maintained at the enabled state.

In some embodiments, before initiating the multi-link setup with the AP MLD, the non-AP MLD gathers the information about the AP MLD and each affiliated AP that is interested. When the non-AP MLD initiates the multi-link setup, the basic multi-link element in the association request frame carries the "max idle period Info for link enabled" of the link requested to be set up, which is used for indicating that the non-AP STA corresponding to the corresponding link shall receive at least one frame (such as, the data frame corresponding to the TID mapped to the link, the PS-poll frame or the management frame, and meanwhile, meeting the frame requirements indicated by the Protected Keep-enabled Required subfield) transmitted by the affiliated AP of its associated AP MLD, within the max idle period for link enabled, then, it may be considered that the link is maintained at the enabled state. Optionally, for the AP MLD, the basic multi-link element in the association response frame also carries the "max idle period Info for link enabled" of the link requested to be set up, which is used for indicating that the non-AP STA shall transmit at least one frame for keeping the enabled state of the link (such as, the data frame corresponding to the TID mapped to the link, the PS-poll frame or the management frame, and meanwhile, meeting the frame requirements indicated by the Protected Keep-enabled Required subfield) to its associated AP, within the max idle period for link enabled indicated by the subfield, then, it may be considered that the link is maintained at the enabled state.

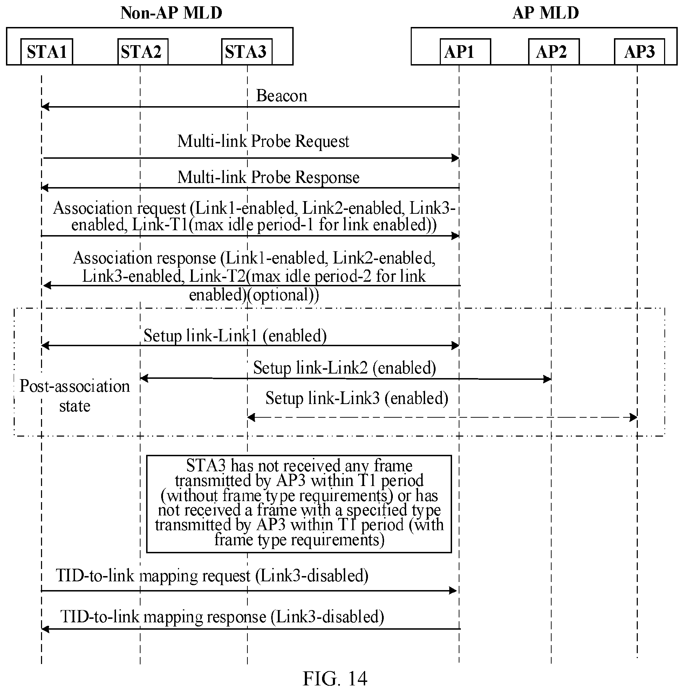

Optionally, after the multi-link setup is completed, for the enabled link (set as Link-i) of the non-AP MLD, in a case where a STA (set as STAi) affiliated with the non-AP MLD corresponding to Link-i has not received any frame (without frame type requirements) transmitted by a STA (set as APi) affiliated with the AP MLD corresponding to Link-i or has not received a frame with specified type (with frame type requirements) transmitted by APi within a corresponding "max idle period for link enabled (transmitted by the non-AP MLD)", the non-AP MLD initiates a TID-to-link mapping request to the AP MLD, and negotiates with the AP MLD to set Link-i to the "disabled" state; or the non-AP MLD initiates a TID-to-link mapping notification to the AP MLD, to set Link-i to the "disabled" state. Specifically, for example, as illustrated in FIG. 14, before initiating the multi-link setup with the AP MLD, the non-AP MLD gathers the information about the AP MLD and each affiliated AP that is interested. When the non-AP MLD initiates the multi-link setup, the basic multi-link element in the association request frame carries the "max idle period Info for link enabled" of the link requested to be set up, that is, the max idle period for link enabled T1 corresponding to Link3 in FIG. 14. In addition, for the AP MLD, the basic multi-link element in the association response frame also carries the "max idle period Info for link enabled" of the link requested to be set up (optional), that is, the max idle period for link enabled T2 corresponding to Link3 in FIG. 14. After the multi-link setup is completed, for the enabled link Link3, in a case where the enabled state is initiated, if STA3 has not received any frame (without frame type requirements) transmitted by AP3 within the corresponding "max idle period for link enabled (i.e. T1 in FIG. 14)" or has not received the frame with specified type (with frame type requirements) transmitted by AP3 within the T1 period, the non-AP MLD initiates the TID-To-Link Mapping request through Link1, and negotiates with the non-AP MLD to set Link3 to the "disabled" state.

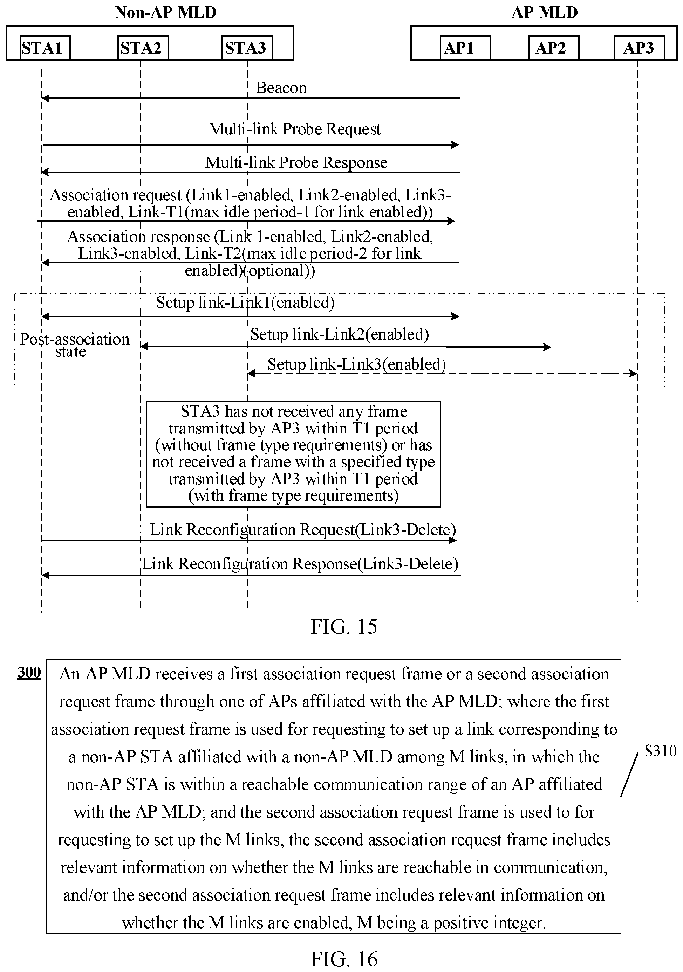

Optionally, after the multi-link setup is completed, for the enabled link (set as Link-i) of the non-AP MLD, in a case where a STA (set as STAi) affiliated with the non-AP MLD corresponding to Link-i has not received any frame (without frame type requirements) transmitted by a STA (set as APi) affiliated with the AP MLD corresponding to Link-I or has not received a frame with specified type (with frame type requirements) transmitted by APi within a corresponding "max idle period for link enabled (transmitted by the non-AP MLD)", the non-AP MLD initiates a link reconfiguration request to the AP MLD, and negotiates with the AP MLD to delete Link-i; or the non-AP MLD initiates a link reconfiguration notification to the AP MLD, to delete Link-i. In addition, if the non-AP MLD has other enabled links, the state in which the non-AP MLD is associated with the AP MLD is maintained. Specifically, for example, as illustrated in FIG. 15, before initiating the multi-link setup with the AP MLD, the non-AP MLD gathers the information about the AP MLD and each affiliated AP that is interested. When the non-AP MLD initiates the multi-link setup, the basic multi-link element in the association request frame carries the "max idle period Info for link enabled" of the link requested to be set up, that is, the max idle period for link enabled T1 corresponding to Link3 in FIG. 15; In addition, for the AP MLD, the basic multi-link element in the association response frame also carries the "max idle period Info for link enabled" of the link requested to be set up (optional), that is, the max idle period for link enabled T2 corresponding to Link3 in FIG. 15. After the multi-link setup is completed, for the enabled link Link3, in a case where the enabled state is initiated, if STA3 has not received any frame (without frame type requirements) transmitted by AP3 within the corresponding "max idle period for link enabled (i.e. T1 in FIG. 15)" or has not received the frame with specified type (with frame type requirements) transmitted by AP3 within the T1 period, the non-AP MLD initiates the link reconfiguration request through Link1, and negotiates with the AP MLD to delete Link3. Since there are still enabled links Link1 and Link2, the state in which the non-AP MLD is associated with the AP MLD is maintained.

Optionally, the max idle period for link enabled T2 is greater than the max idle period for link enabled T1.

Therefore, in the embodiments of the present disclosure, the non-AP MLD initiates the multi-link setup between the non-AP MLD and the AP MLD according to the communication reachability between the respective non-AP STA affiliated with the non-AP MLD and the respective AP affiliated with the AP MLD corresponding to each of the M links to be set up; and/or the non-AP MLD manages the N setup links according to the communication reachability between the respective non-AP STA affiliated with the non-AP MLD and the respective AP affiliated with the AP MLD corresponding to each of the N setup links, thereby ensuring that the actual communication state of the link is conformity with the enabled state of the link.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up a link corresponding to a non-AP STA affiliated with the non-AP MLD among the M links, in which the non-AP STA is within a reachable communication range of an AP affiliated with the AP MLD. Optionally, the non-AP MLD requests, according to the communication reachability between the respective non-AP STA affiliated with the non-AP MLD and the respective AP affiliated with the AP MLD corresponding to each of the M links to be set up, to set up the M links, and reports the relevant information on whether the M links are reachable in communication and/or reports the relevant information on whether the M links are enabled, thereby reflecting the actual communication state of the link. In other words, the non-AP MLD may optimize the multi-link setup procedure according to the communication reachability of the links to be set up, thereby ensuring that the actual communication state of the link is conformity with the enabled state of the link.

Specifically, after the multi-link setup is completed, the non-AP MLD sets alink that communication between a non-AP STA affiliated with the non-AP MLD and an AP affiliated with the AP MLD is unreachable among N links to a disabled state; or the non-AP MLD deletes a link that communication between a non-AP STA affiliated with the non-AP MLD and an AP affiliated with the AP MLD is unreachable among the N links, thereby ensuring that the actual communication state of the link is conformity with the enabled state of the link.

The embodiment at the non-AP MLD side of the present disclosure has been described in detail above with reference to FIGS. 3 to 15. The embodiment at the AP MLD side of the present disclosure will be described in detail below with reference to FIGS. 16 to 18. It should be understood that the embodiment at the AP MLD side and the embodiment at the non-AP MLD side correspond to each other, and similar description may refer to the description of the embodiments at the non-AP MLD side.

FIG. 16 is a schematic flowchart of a multi-link communication method 300 according to an embodiment of the present disclosure. As illustrated in FIG. 16, the multi-link communication method 300 may include at least part of the following contents.

In S310, an AP MLD receives a first association request frame or a second association request frame through one of APs affiliated with the AP MLD; where the first association request frame is used for requesting to set up a link corresponding to a non-AP STA affiliated with a non-AP MLD among M links, in which the non-AP STA is within a reachable communication range of an AP affiliated with the AP MLD; and the second association request frame is used to for requesting to set up the M links, the second association request frame includes relevant information on whether the M links are reachable in communication, and/or the second association request frame includes relevant information on whether the M links are enabled, M being a positive integer.

In the embodiments of the present disclosure, the non-AP MLD initiates the multi-link setup between the non-AP MLD and the AP MLD according to the communication reachability between a respective non-AP STA affiliated with the non-AP MLD and a respective AP affiliated with the AP MLD corresponding to each of the M links to be set up. Specifically, the non-AP MLD transmits the first association request frame or the second association request frame according to the communication reachability the respective non-AP STA affiliated with the non-AP MLD and the respective AP affiliated with the AP MLD corresponding to each of the M links to be set up. That is, the non-AP MLD may optimize the multi-link setup procedure according to the communication reachability of the links to be set up, thereby ensuring that the actual communication state of the link is conformity with the enabled state of the link.

In the embodiments of the present disclosure, a "field" may also be referred to as a "field" or a "subfield". One field may occupy one or more octets (or bytes), or one field may occupy one or more bits.

The embodiments of the present disclosure are mainly directed to the multi-link setup and multi-link management between the AP MLD and the non-AP MLD, and may also be extended to the multi-link setup and multi-link management between one non-AP MLD and another non-AP MLD, that is, the AP MLD in the embodiments of the present disclosure is replaced with another non-AP MLD.

In some embodiments, in a case where a non-AP STA affiliated with the non-AP MLD corresponding to an i-th link to be set up receives a frame (e.g., a beacon frame or other frame) transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame (e.g., a beacon frame or other frame) transmitted by another AP in the same basic service set (BSS) (co-located BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame (e.g., a beacon frame or other frame) transmitted by another AP in the same multiple basic service set identifier (BSSID) set (Multiple BSSID set) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1≤i≤M).

In some embodiments, the preset time is configured or indicated by the AP MLD, or the preset time is determined by negotiation between the non-AP MLD and the AP MLD, or the preset time is agreed upon by a protocol.

In some embodiments, in a case where the AP MLD receives the first association request frame through one of the APs affiliated with the AP MLD, the first association request frame is determined based on the communication reachability the respective non-AP STA affiliated with the non-AP MLD and the respective AP affiliated with the AP MLD corresponding to each of the M links to be set up.

That is, for a non-AP STA affiliated with the non-AP MLD that is within a reachable communication range for an AP affiliated with the AP MLD corresponding to a link to be set up, link setup is performed accordingly, that is, the links requested to be set up carried by the association request frame during the multi-link setup include links that have been determined to be reachable in communication; for a non-AP STA affiliated with the non-AP MLD that is not within a reachable communication range for an AP affiliated with the AP MLD corresponding to a link to be set up, link setup is not performed accordingly, that is, the links requested to be set up carried by the association request frame during the multi-link setup do not include links that have been determined to be unreachable in communication.

It should be noted that the non-AP MLD may also transmit the first association request frame through multiple non-AP STAs affiliated with the non-AP MLD, which is not limited in the embodiments of the present disclosure.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up the link corresponding to the non-AP STA affiliated with the non-AP MLD among the M links, in which the non-AP STA affiliated with the non-AP MLD is within the reachable communication range of the AP affiliated with the AP MLD. That is, the link requested to set up by the non-AP MLD may reflect the actual communication state of the link. In other words, the non-AP MLD may optimize the multi-link setup procedure according to the communication reachability of the links to be set up, thereby ensuring that the actual communication state of the link is conformity with the enabled state of the link.

Specifically, for example, as illustrated in FIG. 4, STA1 of the non-AP MLD gathers the information about the AP MLD and its affiliated APs through the beacon frame and/or ML Probe Response frame; the reachability confirmation is performed on each of the links to be set up (Link1, Link2, and Link3) (in which the method of reachability confirmation is described above), respectively; and it is confirmed that Link1 and Link2 are reachable in communication but Link3 is unreachable in communication. Then, the non-AP MLD only requests to set up Link1 and Link2 in the association request for initiating multi-link setup, but does not request to set up Link3. After the non-AP MLD and AP MLD complete the association request/response interactions, the setup of Link1 and Link2 is completed.

In some embodiments, in a case where the AP MLD receives the second association request frame through one of the APs affiliated with the AP MLD, the second association request frame is determined based on the communication reachability between the respective non-AP STA affiliated with the non-AP MLD and the respective AP affiliated with the AP MLD corresponding to each of the M links to be set up.

That is, for each affiliated STA in the non-AP MLD that requests to set up a link, link setup is performed accordingly, however, when initiating the multi-link setup, the non-AP MLD provides an indication on reachability and/or whether is enabled of the link requested to be set up.

It should be noted that the non-AP MLD may also transmit the second association request frame through multiple non-AP STAs affiliated with the non-AP MLD, which is not limited in the embodiment of the present disclosure.

Specifically, during the multi-link setup process, the non-AP MLD transmits, according to the communication reachability between the respective non-AP STA affiliated with the non-AP MLD and the respective AP affiliated with the AP MLD corresponding to each of the M links to be set up, the second association request frame to request to set up the M links, and carries the following information in the second association request frame: the relevant information on whether the M links are reachable in communication and/or the relevant information on whether the M links are enabled. In this way, the actual communication state of the link may be reflected. In other words, the non-AP MLD may optimize the multi-link setup procedure according to the communication reachability of the links to be set up, thereby ensuring that the actual communication state of the link is conformity with the enabled state of the link.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled.

In some embodiments, for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

Specifically, for example, for the STA affiliated with the non-AP MLD that is within the reachable communication range for the AP affiliated with the AP MLD corresponding to the link to be set up, the reachability of the link to be set up corresponding to the STA affiliated with the non-AP MLD is indicated as "reachable" and/or the link to be set up is indicated as "enabled" correspondingly. For the STA affiliated with the non-AP MLD that is not within the reachable communication range for the AP affiliated with the AP MLD corresponding to the link to be set up, the reachability of the link be set up corresponding to the STA affiliated with the non-AP MLD is indicated as "unreachable" and/or the link to be set up is indicated as "disabled" correspondingly.

In some embodiments, the second association request frame includes M first indication fields, and/or the second association request frame includes a second indication field; where the M first indication fields correspond to the M links, respectively, and each of the M first indication fields is used for indicating whether a respective link is reachable in communication; and the second indication field is used for indicating whether each of the M links is enabled.

In some embodiments, the first indication field is a reachability field, and/or the second indication field is a TID-to-link mapping element.

In some embodiments, the second association request frame includes a basic multi-link element.

Where a STA Control field in a per-STA Profile subelement included in a Link Info field of the basic multi-link element includes a link ID field and a first indication field corresponding to a link identified by the link ID field.

It should be noted that the format of the second association request frame may refer to the related description of FIG. 5 in the above multi-link communication method 200, which will not be repeated here.

Specifically, for example, as illustrated in FIG. 6, STA1 of the non-AP MLD gathers the information about the AP MLD and its affiliated APs through the beacon frame and/or multi-link probe response (ML Probe Response) frame; and the reachability confirmation is performed on each of the links to be set up (Link1, Link2, and Link3) (in which the method of reachability confirmation is described above), respectively, and it is confirmed that Link1 and Link2 are reachable in communication but Link3 is unreachable in communication. Then, in the association request for initiating multi-link setup, the non-AP MLD performs corresponding link setup (Link1, Link2, Link3) for each affiliated STA that requests to set up a link. However, when the non-AP MLD initiates the multi-link setup, in the association request, the reachability of Link1 and Link2 is indicated as "reachable" and/or Link1 and Link2 are indicated as "enabled" correspondingly, while the reachability of Link3 is indicated as "unreachable" and/or Link3 is indicated as "disabled" correspondingly. After the association request/response interactions between the non-AP MLD and the AP MLD are completed, the setup of Link1, Link2 and Link 3 is completed.

It should be noted that FIG. 6 exemplarily illustrates that the association request and association response only indicate whether the link is enabled, in which the association request and association response may also indicate whether the link is reachable, or indicate whether the link is enabled and reachable simultaneously, which is not limited in the embodiments of the present disclosure.

In some embodiments, the AP MLD manages N setup links according to communication reachability between a respective AP affiliated with the AP MLD and a respective non-AP STA affiliated with the non-AP MLD corresponding to each of the N setup links, where N is a positive integer, and N is less than or equal to M (i.e., N≤M).

In the embodiment of the present disclosure, the AP MLD manages the N setup links according to the communication reachability between the respective AP affiliated with the AP MLD and the respective non-AP STA affiliated with the non-AP MLD corresponding to each of the N setup links. That is, AP MLD may optimize the multi-link management procedure according to the communication reachability of the setup links, thereby ensuring that the actual communication state of the link is conformity with the enabled state of the link.

In some embodiments, the N links are part or all of links set up links by the AP MLD.

In some embodiments, the operation that the AP MLD manages the N setup links according to the communication reachability between the respective AP affiliated with the AP MLD and the respective non-AP STA affiliated with the non-AP MLD corresponding to each of the N setup links includes:
setting, by the AP MLD, an enabled link that communication between an AP affiliated with the AP MLD and a non-AP STA affiliated with the non-AP MLD is unreachable among the N links to a disabled state; or deleting, by the AP MLD, a link that communication between an AP affiliated with the AP MLD and a non-AP STA affiliated with the non-AP MLD is unreachable among the N links.

In some embodiments, after the multi-link setup is completed, for a setup link (set as Link-i), in a case where communication between a STA (set as STAi) affiliated with the non-AP MLD corresponding to Link-i and a STA (set as APi) affiliated with the AP MLD corresponding to Link-i is unreachable, the AP MLD may adopt one of the following actions.
1) The AP MLD initiates a TID-to-link mapping request to the non-AP MLD, and negotiates with the non-AP MLD to set Link-i to the "disabled" state; or the AP MLD initiates a TID-to-link mapping notification to the non-AP MLD, to set Link-i to the "disabled" state.
2) The AP MLD initiates a link reconfiguration request to the non-AP MLD, and negotiates with the non-AP MLD to delete Link-i; or the AP MLD initiates a link reconfiguration notification to the non-AP MLD, to delete Link-i.

In some embodiments, a processing manner of the AP MLD for the link that the communication between the AP affiliated with the AP MLD and the non-AP STA affiliated with the non-AP MLD is unreachable among the N links is determined by negotiation between the non-AP MLD and the AP MLD.

In some embodiments, in a case where the AP MLD sets the enabled link that the communication between the AP affiliated with the AP MLD and the non-AP STA affiliated with the non-AP MLD is unreachable among the N links to the disabled state, a link set to the disabled state among the N links refers to a link without a TID mapping.

Specifically, for example, if at least one TID is mapped to a setup link either in uplink or downlink, the setup link is defined as "enabled" or "enabled state"; or if no TID is mapped to a setup link either in uplink or downlink, the setup link is defined as "disabled" or "disabled state".

In some embodiments, in a case where the AP MLD sets the enabled link that the communication between the AP affiliated with the AP MLD and the non-AP STA affiliated with the non-AP MLD is unreachable among the N links to the disabled state, for a link set to the disabled state among the N links since communication between an AP affiliated with the AP MLD and a non-AP STA affiliated with the non-AP MLD is unreachable, the AP MLD sets the link to an enabled state in a case where the communication between the AP affiliated with the AP MLD and non-AP STA affiliated with the non-AP MLD corresponding to the link is reachable.

For example, after the multi-link setup is completed, for a setup link (set as Link-i), in a case where communication between a STA (set as STAi) affiliated with the non-AP MLD corresponding to Link-i and a STA (set as APi) affiliated with the AP MLD corresponding to Link-i is unreachable, the AP MLD sets the enabled Link-i to the disabled state. After a period of time, due to movement of STAi or improvement of link quality, the communication between STAi and APi may become reachable; and the AP MLD sets Link-i to the enabled state after the communication between STAi and APi is reachable.

In some embodiments, in a case where an AP affiliated with the AP MLD corresponding to a j-th link receives at least one frame transmitted by a non-AP STA affiliated with the non-AP MLD corresponding to the j-th link within a duration Tⱼ', communication between the AP affiliated with the AP MLD and the non-AP STA affiliated with the non-AP MLD corresponding to the j-th link is reachable; or
in a case where an AP affiliated with the AP MLD corresponding to a j-th link receives at least one frame transmitted by a non-AP STA affiliated with the non-AP MLD corresponding to the j-th link within a duration Tₐₗₗ', communication between the AP affiliated with the AP MLD and the non-AP STA affiliated with the non-AP MLD corresponding to the j-th link is reachable.

Where the j-th link is a j-th link among all setup links, the duration Tⱼ' is a max idle time for link enabled corresponding to the j-th link, the duration Tₐₗₗ' is a max idle time for link enabled corresponding to the all setup links, and j is a positive integer.

That is, the duration Tⱼ' may be an idle timeout limit for link enabled corresponding to the j-th link, and the duration Tₐₗₗ' may be an idle timeout limit for link enabled corresponding to the all setup links.

In some embodiments, the duration Tⱼ' is a periodic duration. That is, the duration Tⱼ' may be a max idle period for link enabled corresponding to the j-th link.

In some embodiments, the duration Tⱼ' is determined or indicated by the AP MLD.

In some embodiments, the duration Tₐₗₗ' is a periodic duration. That is, the duration Tₐₗₗ' may be a max idle period for link enabled corresponding to the all setup links.

In some embodiments, the duration Tₐₗₗ' is determined or indicated by the AP MLD.

In some embodiments, a type of the at least one frame is a designated frame type for indicating an enable or active state of a link.

Specifically, for example, the designated frame type for indicating the enable or active state of the link may be a protected frame, that is, only the protected frame indicates the enabled or active state.

Specifically, for another example, the designated frame type for indicating the enable or active state of the link may be a protected frame and an unprotected frame, that is, both the protected frame and the unprotected frame may indicate the enabled or active state.

In some embodiments, In some embodiments, the at least one frame includes, but is not limited to, at least one of: a data frame corresponding to a TID mapped to the j-th link, a power saving poll ( PS-Poll) frame or a management frame.

In some embodiments, in a case where communication reachability between the AP affiliated with the AP MLD and the non-AP STA affiliated with the non-AP MLD corresponding to the j-th link is determined based on the duration Tⱼ', an association response frame transmitted by the AP MLD through one of the APs affiliated with the AP MLD includes S' third indication fields, and each of the S' third indication fields is used for indicating respective max idle time information for link enabled corresponding to each of the S' links; where the association response frame is an association response frame corresponding to an association request frame for multi-link setup, and S' is a positive integer.

That is, the third indication field included in the association response frame may be used for indicating the duration Tⱼ' to the non-AP MLD.

Optionally, the association response frame may be an association response frame of the first association request frame, or may be an association response frame of the second association request frame.

In some embodiments, the association response frame includes a basic multi-link element.

Where a STA Control field in a per-STA Profile subelement included in a link Info field of the basic multi-link element includes a link ID field and a first present field, and the first present field is used for indicating whether a STA Info field in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, in a case where the duration Tⱼ' is a periodic duration, that is, in a case where the duration Tⱼ' is the max idle period for link enabled corresponding to the j-th link, the third indication field is a max idle period information for link enabled field or max idle period information for link enabled subfield, and the first present field is a max idle period information for link enabled present field or max idle period information for link enabled present subfield.

In some embodiments, each third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the AP MLD when communication between a corresponding AP affiliated with the AP MLD and a corresponding non-AP STA affiliated with the non-AP MLD corresponding to an enabled link is unreachable.

In some embodiments, the first subfield is a max idle time for link enabled subfield, the second subfield is an idle option for link enabled subfield, the first field is a protected keep-enabled required field, and the second field is an expected behavior beyond the max idle time field.

In some embodiments, in a case where the duration Tⱼ' is a periodic duration, that is, in a case where the duration Tⱼ' is the max idle period for link enabled corresponding to the j-th link, the first subfield is the max idle period for link enabled subfield, the second subfield is the idle option for link enabled subfield, the first field is the Protected Keep-enabled Required field, and the second field is the expected behavior beyond the max idle time field.

It should be noted that the specific formats of the first present field and the third indication field may refer to the related description of FIG. 7 to FIG. 11 in the above multi-link communication method 200, which will not be repeated here.

In some embodiments, in a case where communication reachability between the AP affiliated with the AP MLD and the non-AP STA affiliated with the non-AP MLD corresponding to the j-th link is determined based on the duration Tₐₗₗ', an association response frame transmitted by the AP MLD through one of the APs affiliated with the AP MLD includes a fourth indication field, and the fourth indication field is used for indicating max idle time information for link enabled corresponding to the all setup links, and the association response frame is an association response frame corresponding to an association request frame for multi-link setup.

That is, the fourth indication field included in the association response frame may be used for indicating the duration Tₐₗₗ' to the AP MLD.

Optionally, the association response frame may be an association response frame corresponding to the first association request frame, or may be an association response frame corresponding to the second association request frame.

In some embodiments, the association response frame includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, in a case where the duration Tⱼ' is a periodic duration, that is, in a case where the duration Tₐₗₗ' may be the max idle period for link enabled corresponding to the all setup links, the fourth indication field is a max idle period information for link enabled field or max idle period information for link enabled subfield, and the second present field is a max idle period information for link enabled present field or max idle period information for link enabled present subfield.

In some embodiments, the fourth indication field includes a third subfield and a fourth subfield; where the third subfield is used for indicating a max idle time for link enabled corresponding to all links indicated by the basic multi-link element, and the fourth subfield includes a third field and a fourth field; and where the third field is used for indicating type information of a frame in the enabled or active state, and the fourth field is used for indicating a behavior of the AP MLD when communication between APs affiliated with the AP MLD and non-AP STAs affiliated with the non-AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, in a case where the duration Tⱼ' is a periodic duration, that is, in a case where the duration Tₐₗₗ' may be the max idle period for link enabled corresponding to the all setup links, the third subfield is the max idle period for link enabled subfield, the fourth subfield is the idle option for link enabled subfield, the third field is the Protected Keep-enabled Required field, and the fourth field is the expected behavior beyond the max idle time field.

It should be noted that the specific formats of the second present field and the fourth indication field may refer to the related description of FIG. 12 to FIG. 13 in the above multi-link communication method 200, which will not be repeated here.

In some embodiments, during the multi-link setup, for one of the APs affiliated with the AP MLD, if the per-STA Profile subelement of the multi-link element carried in the association response frame includes the max idle period Info for link enabled subfield, the value of each subfield in the max idle period Info for link enabled subfield is applied to the link corresponding to the per-STA Profile subelement (i.e., identified through the carried Link ID); and for one of the APs affiliated with the AP MLD, if the common Info field of the multi-link element carried in the association response frame includes the max idle period Info for link enabled subfield, the value of each subfield in the max idle period Info for link enabled subfield is applied to all links indicated by the multi-link element or to the link transmitting the multi-link element. For the link applied by the max idle period Info for link enabled subfield transmitted by the AP MLD, the non-AP STA corresponding to the link shall transmit at least one frame for keeping the enabled state of the link (such as, the data frame corresponding to the TID mapped to the link, the PS-poll frame or the management frame, and meanwhile, meeting the frame requirements indicated by the Protected Keep-enabled Required subfield (if any) indicated by the subfield) to its associated AP (i.e., the AP corresponding to the link), within the max idle period for link enabled indicated by the subfield, then, it may be considered that the link is maintained at the enabled state.

In some embodiments, for the AP MLD, the basic multi-link element in the association response frame also carries the "max idle period Info for link enabled" of the link requested to be set up, which is used for indicating that the non-AP STA shall transmit at least one frame for keeping the enabled state of the link (such as, the data frame corresponding to the TID mapped to the link, the PS-poll frame or the management frame, and meanwhile, meeting the frame requirements indicated by the Protected Keep-enabled Required subfield) to its associated AP, within the max idle period for link enabled indicated by the subfield, then, it may be considered that the link is maintained at the enabled state. Optionally, before initiating the multi-link setup with the AP MLD, the non-AP MLD gathers the information about the AP MLD and each affiliated AP that is interested. When the non-AP MLD initiates the multi-link setup, the basic multi-link element in the association request frame carries the "max idle period Info for link enabled" of the link requested to be set up, which is used for indicating that the non-AP STA corresponding to the corresponding link shall receive at least one frame (such as, the data frame corresponding to the TID mapped to the link, the PS-poll frame or the management frame, and meanwhile, meeting the frame requirements indicated by the Protected Keep-enabled Required subfield) transmitted by the affiliated AP of its associated AP MLD, within the max idle period for link enabled, then, it may be considered that the link is maintained at the enabled state.

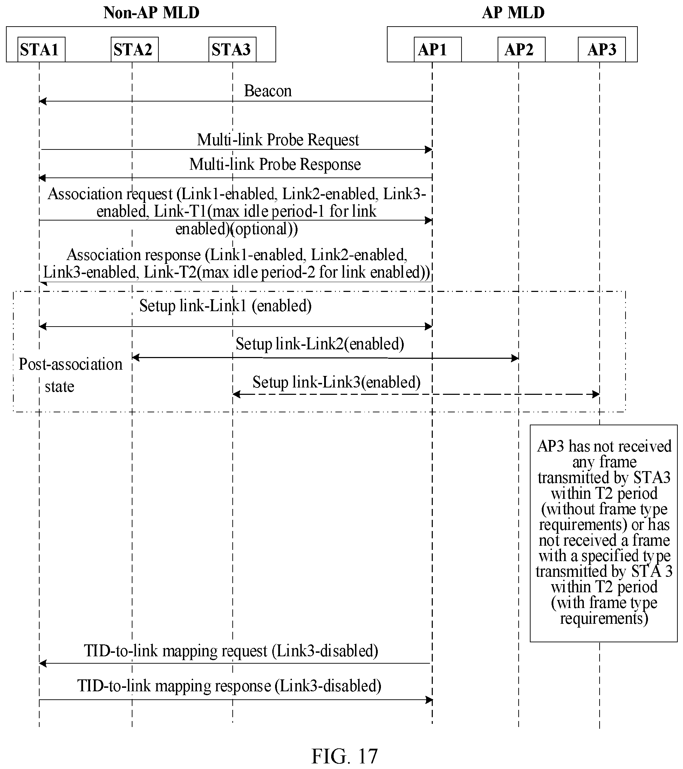

Optionally, for the enabled link (set as Link-i) sets up by the AP MLD and the non-AP MLD, in a case where a STA (set as APi) affiliated with the AP MLD corresponding to Link-i has not received any frame (without frame type requirements) transmitted by a STA (set as STAi) affiliated with the non-AP MLD corresponding to Link-i or has not received a frame with specified type (with frame type requirements) transmitted by STAi within a corresponding "max idle period for link enabled (transmitted by the AP MLD)", the AP MLD initiates a TID-to-link mapping request to the non-AP MLD, and negotiates with the non-AP MLD to set Link-i to the "disabled" state; or the AP MLD initiates a TID-to-link mapping notification to the non-AP MLD, to set Link-i to the "disabled" state. Specifically, for example, as illustrated in FIG. 17, before initiating the multi-link setup with the AP MLD, the non-AP MLD gathers the information about the AP MLD and each affiliated AP that is interested. When the non-AP MLD initiates the multi-link setup, the basic multi-link element in the association request frame carries the "max idle period Info for link enabled" of the link requested to be set up (optional), that is, the max idle period for link enabled T1 corresponding to Link3 in FIG. 17. In addition, for the AP MLD, the basic multi-link element in the association response frame also carries the "max idle period Info for link enabled" of the link requested to be set up (optional), that is, the max idle period for link enabled T2 corresponding to Link3 in FIG. 17. After the multi-link setup is completed, for the AP MLD, after the enabled state of the enabled link Link3 is initiated, if AP3 has not received any frame (without frame type requirements) transmitted by STA3 within the corresponding "max idle period for link enabled" (T2 in the FIG. 17) or has not received the frame with specified type (with frame type requirements) transmitted by STA3 within the T2 period, the AP MLD initiates the TID-To-Link Mapping request through Link1, and negotiates with the non-AP MLD to set Link3 to the "disabled" state.

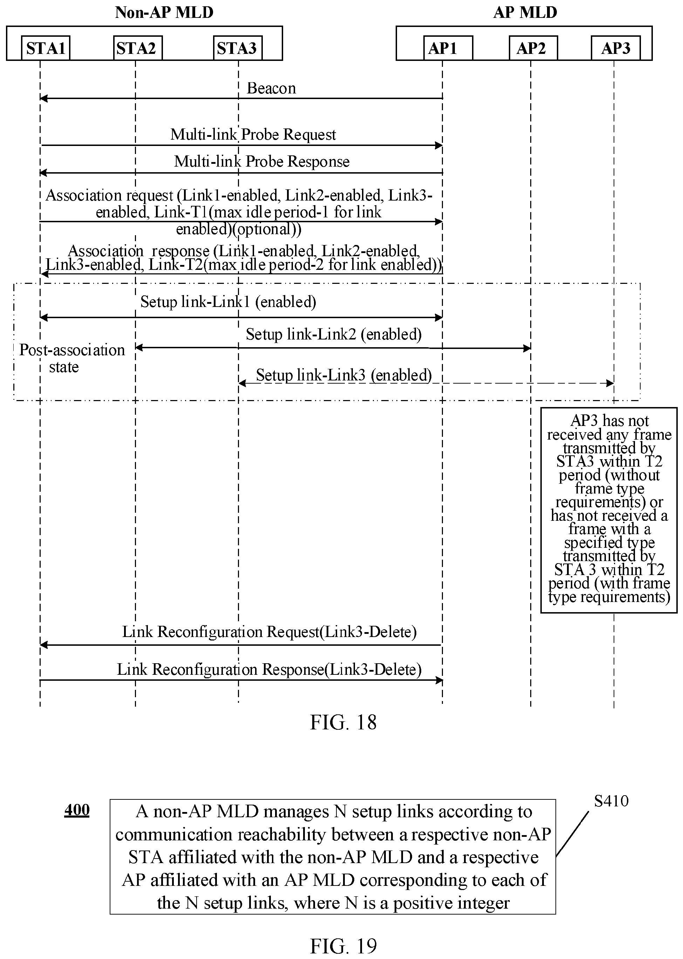

Optionally, for the enabled link (set as Link-i) sets up by the AP MLD and the non-AP MLD, in a case where a STA (set as APi) affiliated with the AP MLD corresponding to Link-i has not received any frame (without frame type requirements) transmitted by a STA (set as STAi) affiliated with the non-AP MLD corresponding to Link-i or has not received a frame with specified type (with frame type requirements) transmitted by STAi within a corresponding "max idle period for link enabled (transmitted by the AP MLD)", the AP MLD initiates a link reconfiguration request to the non-AP MLD, and negotiates with the non-AP MLD to delete Link-i; or the AP MLD initiates a link reconfiguration notification to the non-AP MLD to delete Link-i. In addition, if the non-AP MLD has other enabled links, the state in which the non-AP MLD is associated with the AP MLD is maintained. Specifically, for example, as illustrated in FIG. 18, before initiating the multi-link setup with the AP MLD, the non-AP MLD gathers the information about the AP MLD and each affiliated AP that is interested. When the non-AP MLD initiates the multi-link setup, the basic multi-link element in the association request frame carries the "max idle period Info for link enabled" of the link requested to be set up (optional), that is, the max idle period for link enabled T1 corresponding to Link 3 in FIG. 18. In addition, for the AP MLD, the basic multi-link element in the association response frame also carries the "max idle period Info for link enabled" of the link requested to be set up (optional), that is, the max idle period for link enabled T2 corresponding to Link 3 in FIG. 18. After the multi-link setup is completed, for the enabled link Link3, in a case where the enabled state is initiated, if AP3 has not received any frame (without frame type requirements) transmitted by STA3 within the corresponding "max idle period for link enabled (T2 in the FIG. 18)" or has not received the frame with specified type (with frame type requirements) transmitted by STA3 within the T2 period, then the AP MLD initiates the link reconfiguration request through Link1, and negotiates with the non-AP MLD to delete Link3. Since there are still enabled links Link1 and Link2, the state in which the non-AP MLD is associated with the AP MLD is maintained.

Therefore, in the embodiments of the present disclosure, the non-AP MLD initiates the multi-link setup between the non-AP MLD and the AP MLD according to the communication reachability between the respective non-AP STA affiliated with the non-AP MLD and the respective AP affiliated with the AP MLD corresponding to each of the M links to be set up; and/or the AP MLD manages the N setup links according to the communication reachability between the respective AP affiliated with the AP MLD and the respective non-AP STA affiliated with the non-AP MLD corresponding to each of the N setup links, thereby ensuring that the actual communication state of the link is conformity with the enabled state of the link.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up a link corresponding to a non-AP STA affiliated with the non-AP MLD among the M links, in which the non-AP STA is within a reachable communication range of an AP affiliated with the AP MLD. Optionally, the non-AP MLD requests, according to the communication reachability between the respective non-AP STA affiliated with the non-AP MLD and the respective AP affiliated with the AP MLD corresponding to each of the M links to be set up, to set up the M links, and reports the relevant information on whether the M links are reachable in communication and/or reports the relevant information on whether the M links are enabled, thereby reflecting the actual communication state of the link. In other words, the non-AP MLD may optimize the multi-link setup procedure according to the communication reachability of the links to be set up, thereby ensuring that the actual communication state of the link is conformity with the enabled state of the link.

Specifically, after the multi-link setup is completed, the AP MLD sets a link that communication between an AP affiliated with the AP MLD and a non-AP STA affiliated with the non-AP MLD is unreachable among the N links to a disabled state, or the AP MLD deletes a link that communication between an AP affiliated with the AP MLD and a non-AP STA affiliated with the non-AP MLD is unreachable among the N links, thereby ensuring that the actual communication state of the link is conformity with the enabled state of the link.

An embodiment at the non-AP MLD side of the present disclosure has been described in detail above with reference to FIGS. 3 to 15. Another embodiment at the non-AP MLD side of the present disclosure will be described in detail below with reference to FIG. 19. It should be understood that embodiments at the non-AP MLD side correspond to each other, and similar description may refer to the description of the embodiment illustrated in FIGS. 3 to 15.

FIG. 19 is a schematic flowchart of a multi-link communication method 400 according to an embodiment of the present disclosure. As illustrated in FIG. 19, the multi-link communication method 400 may include at least part of the following contents.

In S410, a non-AP MLD manages N setup links according to communication reachability between a respective non-AP STA affiliated with the non-AP MLD and a respective AP affiliated with an AP MLD corresponding to each of the N setup links, where N is a positive integer.

In some embodiments, the operation that the non-AP MLD manages the N setup links according to the communication reachability between the respective non-AP STA affiliated with the non-AP MLD and the respective AP affiliated with the AP MLD corresponding to each of the N setup links includes:
setting, by the non-AP MLD, an enabled link that communication between a non-AP STA affiliated with the non-AP MLD and an AP affiliated with the AP MLD is unreachable among the N links to a disabled state; or deleting, by the non-AP MLD, a link that communication between a non-AP STA affiliated with the non-AP MLD and an AP affiliated with the AP MLD is unreachable among the N links.

In some embodiments, a processing manner of the non-AP MLD for the link that the communication between the non-AP STA affiliated with the non-AP MLD and the AP affiliated with the AP MLD is unreachable among the N links is determined by negotiation between the non-AP MLD and the AP MLD.

In some embodiments, in a case where the non-AP MLD sets the enabled link that the communication between the non-AP STA affiliated with the non-AP MLD and the AP affiliated with the AP MLD is unreachable among the N links to the disabled state, a link set to the disabled state among the N links refers to a link without a TID mapping.

In some embodiments, in a case where the non-AP MLD sets the enabled link that the communication between the non-AP STA affiliated with the non-AP MLD and the AP affiliated with the AP MLD is unreachable among the N links to the disabled state, the method further includes:
for a link set to the disabled state among the N links since communication between a non-AP STA affiliated with the non-AP MLD and an AP affiliated with the AP MLD is unreachable, setting, by the non-AP MLD, the link to an enabled state in a case where the communication between the non-AP STA affiliated with the non-AP MLD and the AP affiliated with the AP MLD corresponding to the link is reachable.

In some embodiments, in a case where a non-AP STA affiliated with the non-AP MLD corresponding to a j-th link receives at least one frame transmitted by an AP affiliated with the AP MLD corresponding to the j-th link within a duration Tⱼ, communication between the non-AP STA affiliated with the non-AP MLD and the AP affiliated with the AP MLD corresponding to the j-th link is reachable; or
in a case where a non-AP STA affiliated with the non-AP MLD corresponding to a j-th link receives at least one frame transmitted by an AP affiliated with the AP MLD corresponding to the j-th link within a duration Tₐₗₗ, communication between the non-AP STA affiliated with the non-AP MLD and the AP affiliated with the AP MLD corresponding to the j-th link is reachable

Where the j-th link is a j-th link among all setup links, the duration Tⱼ is a max idle time for link enabled corresponding to the j-th link, the duration Tₐₗₗ is a max idle time for link enabled corresponding to the all setup links, and j is a positive integer.

In some embodiments, the duration Tⱼ is a periodic duration, and/or the duration Tₐₗₗ is a periodic duration.

In some embodiments, a type of the at least one frame is a designated frame type for indicating an enable or active state of a link.

In some embodiments, the at least one frame includes at least one of: a data frame corresponding to a TID mapped to the j-th link, a power saving poll (PS-Poll) frame or a management frame.

In some embodiments, in a case where communication reachability between the non-AP STA affiliated with the non-AP MLD and the AP affiliated with the AP MLD corresponding to the j-th link is determined based on the duration Tⱼ, an association request frame for multi-link setup transmitted by the non-AP MLD through one of non-AP STAs affiliated with the non-AP MLD includes S third indication fields, and each of the S third indication fields is used for indicating respective max idle time information for link enabled corresponding to each of the S links, and S is a positive integer.

In some embodiments, the association request frame for multi-link setup includes a basic multi-link element.

Where a STA Control field in a per-STA Profile subelement included in a link Info field of the basic multi-link element includes a link ID field and a first present field, and the first present field is used for indicating whether a STA Info field in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, each third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the non-AP MLD when communication between a corresponding non-AP STA affiliated with the non-AP MLD and a corresponding AP affiliated with the AP MLD corresponding to an enabled link is unreachable.

In some embodiments, the first subfield is a max idle time for link enabled subfield, the second subfield is an idle option for link enabled subfield, the first field is a Protected Keep-enabled Required field, and the second field is an expected behavior beyond the max idle time field.

In some embodiments, in a case where communication reachability between the non-AP STA affiliated with the non-AP MLD and the AP affiliated with the AP MLD corresponding to the j-th link is determined based on the duration Tₐₗₗ, an association request frame for multi-link setup transmitted by the non-AP MLD through one of non-AP STAs affiliated with the non-AP MLD includes a fourth indication field, and the fourth indication field is used for indicating max idle time information for link enabled corresponding to the all setup links.

In some embodiments, the association request frame for multi-link setup includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, the fourth indication field includes a third subfield and a fourth subfield; where the third subfield is used for indicating max idle time for link enabled corresponding to all links indicated by the basic multi-link element, and the fourth subfield includes a third field and a fourth field; and where the third field is used for indicating type information of a frame in an enabled or active state, and the fourth field is used for indicating a behavior of the non-AP MLD when communication between non-AP STAs affiliated with the non-AP MLD and APs affiliated with the AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, before the operation that the non-AP MLD manages the N setup links according to the communication reachability between the respective non-AP STA affiliated with the non-AP MLD and the respective AP affiliated with the AP MLD corresponding to each of the N setup links, the non-AP MLD initiates a multi-link setup between the non-AP MLD and the AP MLD according to communication reachability between a respective non-AP STA affiliated with the non-AP MLD and a respective affiliated with the AP MLD corresponding to each of M links to be set up, where M is a positive integer and M is greater than or equal to N (i.e., M≥N).

In some embodiments, the operation that the non-AP MLD initiates the multi-link setup between the non-AP MLD and the AP MLD according to the communication reachability between the respective non-AP STA affiliated with the non-AP MLD and the respective affiliated with the AP MLD corresponding to each of the M links to be set up includes:
transmitting, by the non-AP MLD, a first association request frame through one of non-AP STAs affiliated with the non-AP MLD.

Where the first association request frame is used for requesting to set up a link corresponding to a non-AP STA affiliated with the non-AP MLD among the M links, in which the non-AP STA is within a reachable communication range of an AP affiliated with the AP MLD.

In some embodiments, the operation that the non-AP MLD initiates the multi-link setup between the non-AP MLD and the AP MLD according to the communication reachability between the respective non-AP STA affiliated with the non-AP MLD and the respective affiliated with the AP MLD corresponding to each of the M links to be set up includes:
transmitting, by the non-AP MLD, a second association request frame through one of non-AP STAs affiliated with the non-AP MLD.

Where the second association request frame is used to for requesting to set up the M links; and the second association request frame includes relevant information on whether the M links are reachable in communication, and/or the second association request frame includes relevant information on whether the M links are enabled.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

In some embodiments, the second association request frame includes M first indication fields, and/or the second association request frame includes a second indication field; where the M first indication fields correspond to the M links, respectively, and each of the M first indication fields is used for indicating whether a respective link is reachable in communication; and the second indication field is used for indicating whether each of the M links is enabled.

In some embodiments, the second association request frame includes a basic multi-link element.

Where a STA control field in a per-STA Profile subelement included in a Link Info field of the basic multi-link element includes a link ID field and a first indication field corresponding to a link identified by the link ID field.

In some embodiments, the first indication field is a reachability field, and/or the second indication field is a TID-to-link mapping element.

In some embodiments, in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSS as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSSID set as an AP affiliated with the AP MLD corresponding to the i-th link to be set up within preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1≤i≤M).

In some embodiments, the preset time is configured or indicated by the AP MLD, or the preset time is determined by negotiation between the non-AP MLD and the AP MLD, or the preset time is agreed upon by a protocol.

Therefore, in the embodiments of the present disclosure, the non-AP MLD manages the N setup links according to the communication reachability between the respective non-AP STA affiliated with the non-AP MLD and the respective AP affiliated with the AP MLD corresponding to each of the N setup links; and/or the non-AP MLD initiates the multi-link setup between the non-AP MLD and the AP MLD according to the communication reachability between the respective non-AP STA affiliated with the non-AP MLD and the respective AP affiliated with the AP MLD corresponding to each of the M links to be set up, thereby ensuring that the actual communication state of the link is conformity with the enabled state of the link.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up a link corresponding to a non-AP STA affiliated with the non-AP MLD among the M links, in which the non-AP STA is within a reachable communication range of an AP affiliated with the AP MLD. Optionally, the non-AP MLD requests, according to the communication reachability between the respective non-AP STA affiliated with the non-AP MLD and the respective AP affiliated with the AP MLD corresponding to each of the M links to be set up, to set up the M links, and reports the relevant information on whether the M links are reachable in communication and/or reports the relevant information on whether the M links are enabled, thereby reflecting the actual communication state of the link. In other words, the non-AP MLD may optimize the multi-link setup procedure according to the communication reachability of the links to be set up, thereby ensuring that the actual communication state of the link is conformity with the enabled state of the link.

Specifically, after the multi-link setup is completed, the non-AP MLD sets a link that communication between a non-AP STA affiliated with the non-AP MLD and an AP affiliated with the AP MLD is unreachable among N links to a disabled state; or the non-AP MLD deletes a link that communication between a non-AP STA affiliated with the non-AP MLD and an AP affiliated with the AP MLD is unreachable among the N links, thereby ensuring that the actual communication state of the link is conformity with the enabled state of the link.

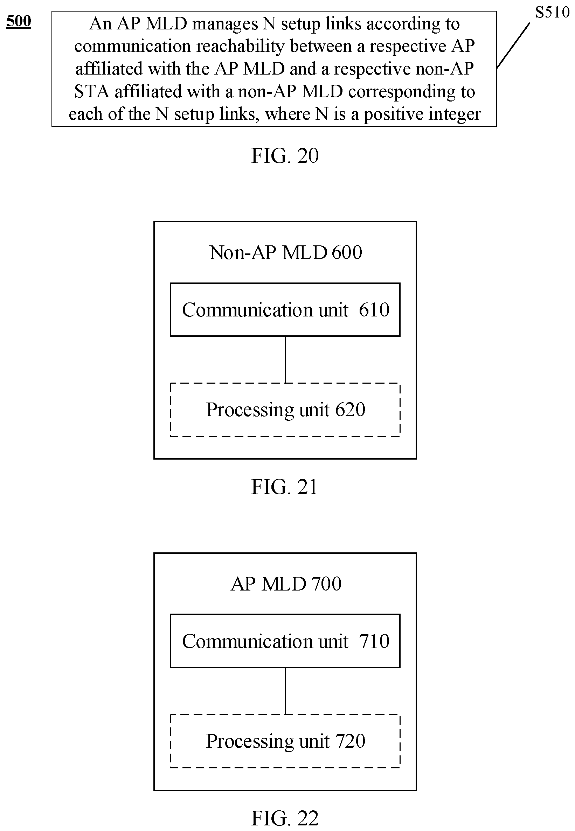

An embodiment at the AP MLD side of the present disclosure has been described in detail above with reference to FIGS. 16 to 18. Another embodiment at the AP MLD side of the present disclosure will be described in detail below with reference to FIG. 20. It should be understood that the embodiments at the AP MLD side correspond to each other, and similar description may refer to the description of the embodiments illustrated in FIGS. 16 to 18.

FIG. 20 is a schematic flowchart of a multi-link communication method 500 according to an embodiment of the present disclosure. As illustrated in FIG. 20, the multi-link communication method 500 may include at least part of the following contents.

In S510, an AP MLD manages N setup links according to communication reachability between a respective AP affiliated with the AP MLD and a respective non-AP STA affiliated with a non-AP MLD corresponding to each of the N setup links, where N is a positive integer.

In some embodiments, the operation that the AP MLD manages the N setup links according to the communication reachability between the respective AP affiliated with the AP MLD and the respective non-AP STA affiliated with the non-AP MLD corresponding to each of the N setup links includes:
setting, by the AP MLD, an enabled link that communication between an AP affiliated with the AP MLD and a non-AP STA affiliated with the non-AP MLD is unreachable among the N links to a disabled state; or deleting, by the AP MLD, a link that communication between an AP affiliated with the AP MLD and a non-AP STA affiliated with the non-AP MLD is unreachable among the N links.

In some embodiments, a processing manner of the AP MLD for the link that the communication between the AP STA affiliated with the AP MLD and the non-AP affiliated with the non-AP MLD is unreachable among the N links is determined by negotiation between the non-AP MLD and the AP MLD.

In some embodiments, in a case where the AP MLD sets the enabled link that the communication between the AP affiliated with the AP MLD and the non-AP STA affiliated with the non-AP MLD is unreachable among the N links to the disabled state, a link set to the disabled state among the N links refers to a link without a TID mapping.

In some embodiments, in a case where the AP MLD sets the enabled link that the communication between the AP affiliated with the AP MLD and the non-AP STA affiliated with the non-AP MLD is unreachable among the N links to the disabled state, the method further includes:
for a link set to the disabled state among the N links since communication between an AP affiliated with the AP MLD and a non-AP STA affiliated with the non-AP MLD is unreachable, setting, by the AP MLD, the link to an enabled state in a case where the communication between the AP affiliated with the AP MLD and non-AP STA affiliated with the non-AP MLD corresponding to the link is reachable.

In some embodiments, in a case where an AP affiliated with the AP MLD corresponding to a j-th link receives at least one frame transmitted by a non-AP STA affiliated with the non-AP MLD corresponding to the j-th link within a duration Tⱼ', communication between the AP affiliated with the AP MLD and the non-AP STA affiliated with the non-AP MLD corresponding to the j-th link is reachable; or
in a case where an AP affiliated with the AP MLD corresponding to a j-th link receives at least one frame transmitted by a non-AP STA affiliated with the non-AP MLD corresponding to the j-th link within a duration Tₐₗₗ', communication between the AP affiliated with the AP MLD and the non-AP STA affiliated with the non-AP MLD corresponding to the j-th link is reachable.

Where the j-th link is a j-th link among all setup links, the duration Tⱼ' is a max idle time for link enabled corresponding to the j-th link, the duration Tₐₗₗ' is a max idle time for link enabled corresponding to the all setup links, and j is a positive integer.

In some embodiments, the duration Tⱼ' is a periodic duration, and/or the duration Tₐₗₗ' is a periodic duration.

In some embodiments, a type of the at least one frame is a designated frame type for indicating an enable or active state of a link.

In some embodiments, the at least one frame includes at least one of: a data frame corresponding to a TID mapped to the j-th link, a PS-Poll frame or a management frame.

In some embodiments, in a case where communication reachability between the AP affiliated with the AP MLD and the non-AP STA affiliated with the non-AP MLD corresponding to the j-th link is determined based on the duration Tⱼ', an association response frame transmitted by the AP MLD through one of APs affiliated with the AP MLD includes S' third indication fields, and each of the S' third indication fields is used for indicating respective max idle time information for link enabled corresponding to each of the S' links; where the association response frame is an association response frame corresponding to an association request frame for multi-link setup, and S' is a positive integer.

In some embodiments, the association response frame includes a basic multi-link element.

Where a STA Control field in a per-STA Profile subelement included in a link Info field of the basic multi-link element includes a link ID field and a first present field, and the first present field is used for indicating whether a STA Info field in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, the third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the AP MLD when communication between a corresponding AP affiliated with the AP MLD and a corresponding non-AP STA affiliated with the non-AP MLD corresponding to an enabled link is unreachable.

In some embodiments, the first subfield is a max idle time for link enabled subfield, the second subfield is an idle option for link enabled subfield, the first field is a protected keep-enabled required field, and the second field is an expected behavior beyond the max idle time field.

In some embodiments, in a case where communication reachability between the AP affiliated with the AP MLD and the non-AP STA affiliated with the non-AP MLD corresponding to the j-th link is determined based on the duration Tₐₗₗ', an association response frame transmitted by the AP MLD through one of the APs affiliated with the AP MLD includes a fourth indication field, and the fourth indication field is used for indicating max idle time information for link enabled corresponding to the all setup links, and the association response frame is an association response frame corresponding to an association request frame for multi-link setup.

In some embodiments, the association response frame includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, the fourth indication field includes a third subfield and a fourth subfield; where the third subfield is used for indicating a max idle time for link enabled corresponding to all links indicated by the basic multi-link element, and the fourth subfield includes a third field and a fourth field; and where the third field is used for indicating type information of a frame in the enabled or active state, and the fourth field is used for indicating a behavior of the AP MLD when communication between APs affiliated with the AP MLD and non-AP STAs affiliated with the non-AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, before the AP MLD manages the N setup links according to the communication reachability between the respective AP affiliated with the AP MLD and the respective non-AP STA affiliated with the non-AP MLD corresponding to each of the N setup links, the AP MLD receives a first association request frame through one of APs affiliated with the AP MLD.

Where the first association request frame is used for requesting to set up a link corresponding to a non-AP STA affiliated with the non-AP MLD among M links, in which the non-AP STA is within a reachable communication range of an AP affiliated with the AP MLD.

In some embodiments, before the AP MLD manages the N setup links according to the communication reachability between the respective AP affiliated with the AP MLD and the respective non-AP STA affiliated with the non-AP MLD corresponding to each of the N setup links, the AP MLD receives a second association request frame through one of APs affiliated with the AP MLD.

Where the second association request frame is used to for requesting to set up the M links; and the second association request frame includes relevant information on whether the M links are reachable in communication, and/or the second association request frame includes relevant information on whether the M links are enabled.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

In some embodiments, the second association request frame includes M first indication fields, and/or the second association request frame includes a second indication field.

Where the M first indication fields correspond to the M links, respectively, and each of the M first indication fields is used for indicating whether a respective link is reachable in communication.

The second indication field is used for indicating whether each of the M links is enabled.

In some embodiments, the second association request frame includes a basic multi-link element; where a STA control field in a per-STA Profile subelement included in a Link Info field of the basic multi-link element includes a link ID field and a first indication field corresponding to a link identified by the link ID field.

In some embodiments, the first indication field is a reachability field, and/or the second indication field is a TID-to-link mapping element.

In some embodiments, in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSS as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSSID set as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1≤i≤M).

In some embodiments, the preset time is configured or indicated by the AP MLD, or the preset time is determined by negotiation between the non-AP MLD and the AP MLD, or the preset time is agreed upon by a protocol.

Therefore, in the embodiments of the present disclosure, the AP MLD manages the N setup links according to the communication reachability between the respective AP affiliated with the AP MLD and the respective non-AP STA affiliated with the non-AP MLD corresponding to each of the N setup links; and/or the non-AP MLD initiates the multi-link setup between the non-AP MLD and the AP MLD according to the communication reachability between the respective non-AP STA affiliated with the non-AP MLD and the respective AP affiliated with the AP MLD corresponding to each of the M links to be set up, thereby ensuring that the actual communication state of the link is conformity with the enabled state of the link.

Specifically, during the multi-link setup process, the non-AP MLD requests, according to the communication reachability between the respective non-AP STA affiliated with the non-AP MLD and the respective AP affiliated with the AP MLD corresponding to each of the M links to be set up, to set up a link corresponding to a non-AP STA affiliated with the non-AP MLD among the M links, in which the non-AP STA is within a reachable communication range of an AP affiliated with the AP MLD. Optionally, the non-AP MLD requests, according to the communication reachability between the respective non-AP STA affiliated with the non-AP MLD and the respective AP affiliated with the AP MLD corresponding to each of the M links to be set up, to set up the M links, and reports the relevant information on whether the M links are reachable in communication and/or reports the relevant information on whether the M links are enabled, thereby reflecting the actual communication state of the link. In other words, the non-AP MLD may optimize the multi-link setup procedure according to the communication reachability of the links to be set up, thereby ensuring that the actual communication state of the link is conformity with the enabled state of the link.

Specifically, after the multi-link setup is completed, the AP MLD sets a link that communication between an AP affiliated with the AP MLD and a non-AP STA affiliated with the non-AP MLD is unreachable among the N links to a disabled state, or the AP MLD deletes a link that communication between an AP affiliated with the AP MLD and a non-AP STA affiliated with the non-AP MLD is unreachable among the N links, thereby ensuring that the actual communication state of the link is conformity with the enabled state of the link.

The method embodiments of the present disclosure are described in detail above with reference to FIGS. 3 to 20. The apparatus embodiments of the present disclosure will be described in detail below with reference to FIGS. 21 to 27. It should be understood that the apparatus embodiments and the method embodiments correspond to each other, and similar description may refer to the method embodiments.

FIG. 21 illustrates a schematic block diagram of a non-AP MLD 600 according to an embodiment of the present disclosure. As illustrated in FIG. 21, the non-AP MLD 600 includes a communication unit 610.

The communication unit 610 is configured to initiate a multi-link setup between a non-AP MLD and an AP MLD according to communication reachability between a respective non-AP STA affiliated with the non-AP MLD and a respective AP affiliated with the AP MLD corresponding to each of M links to be set up; where M is a positive integer.

In some embodiments, the communication unit 610 is specifically configured to: transmit a first association request frame through one of non-AP STAs affiliated with the non-AP MLD.

Where the first association request frame is used for requesting to set up a link corresponding to a non-AP STA affiliated with the non-AP MLD among the M links, in which the non-AP STA is within a reachable communication range of an AP affiliated with the AP MLD.

In some embodiments, the communication unit 610 is specifically configured to: transmit a second association request frame through one of non-AP STAs affiliated with the non-AP MLD.

Where the second association request frame is used to for requesting to set up the M links; and the second association request frame includes relevant information on whether the M links are reachable in communication, and/or the second association request frame includes relevant information on whether the M links are enabled.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

In some embodiments, the second association request frame includes M first indication fields, and/or the second association request frame includes a second indication field.

Where the M first indication fields correspond to the M links, respectively, and each of the M first indication fields is used for indicating whether a respective link is reachable in communication; and
the second indication field is used for indicating whether each of the M links is enabled.

In some embodiments, the second association request frame includes a basic multi-link element; where

Where a STA Control field in a per-STA Profile subelement included in a Link Info field of the basic multi-link element includes a link ID field and a first indication field corresponding to a link identified by the link ID field.

In some embodiments, the first indication field is a reachability field, and/or the second indication field is a TID-to-link mapping element.

In some embodiments, in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same basic service set (BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same multiple basic service set identifier (BSSID) set as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1≤i≤M).

In some embodiments, the preset time is configured or indicated by the AP MLD, or the preset time is determined by negotiation between the non-AP MLD and the AP MLD, or the preset time is agreed upon by a protocol.

In some embodiments, the non-AP MLD 600 further includes a processing unit 620.

The processing unit 620 is configured to manage N setup links according to communication reachability between a respective non-AP STA affiliated with the non-AP MLD and a respective AP affiliated with the AP MLD corresponding to each of the N setup links, where N is a positive integer, and N is less than or equal to M (i.e., N≤M).

In some embodiments, the processing unit 620 is specifically configured to: set an enabled link that communication between a non-AP STA affiliated with the non-AP MLD and an AP affiliated with the AP MLD is unreachable among the N links to a disabled state; or delete a link that communication between a non-AP STA affiliated with the non-AP MLD and an AP affiliated with the AP MLD is unreachable among the N links.

In some embodiments, a processing manner of the non-AP MLD for the link that the communication between the non-AP STA affiliated with the non-AP MLD and the AP affiliated with the AP MLD is unreachable among the N links is determined by negotiation between the non-AP MLD and the AP MLD.

In some embodiments, in a case where the non-AP MLD sets the enabled link that the communication between the non-AP STA affiliated with the non-AP MLD and the AP affiliated with the AP MLD is unreachable among the N links to the disabled state, a link set to the disabled state among the N links refers to a link without a TID mapping.

In some embodiments, in a case where the non-AP MLD sets the enabled link that the communication between the non-AP STA affiliated with the non-AP MLD and the AP affiliated with the AP MLD is unreachable among the N links to the disabled state, for a link set to the disabled state among the N links since communication between a non-AP STA affiliated with the non-AP MLD and an AP affiliated with the AP MLD is unreachable, the processing unit 620 is further configured to set the link to an enabled state in a case where the communication between the non-AP STA affiliated with the non-AP MLD and the AP affiliated with the AP MLD corresponding to the link is reachable.

In some embodiments, in a case where a non-AP STA affiliated with the non-AP MLD corresponding to a j-th link receives at least one frame transmitted by an AP affiliated with the AP MLD corresponding to the j-th link within a duration Tⱼ, communication between the non-AP STA affiliated with the non-AP MLD and the AP affiliated with the AP MLD corresponding to the j-th link is reachable; or
in a case where a non-AP STA affiliated with the non-AP MLD corresponding to a j-th link receives at least one frame transmitted by an AP affiliated with the AP MLD corresponding to the j-th link within a duration Tₐₗₗ, communication between the non-AP STA affiliated with the non-AP MLD and the AP affiliated with the AP MLD corresponding to the j-th link is reachable.

Where the j-th link is a j-th link among all setup links, the duration Tⱼ is a max idle time for link enabled corresponding to the j-th link, the duration Tₐₗₗ is a max idle time for link enabled corresponding to the all setup links, and j is a positive integer.

In some embodiments, the duration Tⱼ is a periodic duration, and/or the duration Tₐₗₗ is a periodic duration.

In some embodiments, a type of the at least one frame is a designated frame type for indicating an enable or active state of a link.

In some embodiments, the at least one frame includes at least one of: a data frame corresponding to a TID mapped to the j-th link, a PS-Poll frame or a management frame.

In some embodiments, in a case where communication reachability between the non-AP STA affiliated with the non-AP MLD and the AP affiliated with the AP MLD corresponding to the j-th link is determined based on the duration Tⱼ, an association request frame for multi-link setup transmitted by the non-AP MLD through one of non-AP STAs affiliated with the non-AP MLD includes S third indication fields, and each of the S third indication fields is used for indicating respective max idle time information for link enabled corresponding to each of the S links, and S is a positive integer.

In some embodiments, the association request frame for multi-link setup includes a basic multi-link element.

Where a STA Control field in a per-STA Profile subelement included in a link Info field of the basic multi-link element includes a link ID field and a first present field, and the first present field is used for indicating whether a station information field (STA Info field) in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, the third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the non-AP MLD when communication between a corresponding non-AP STA affiliated with the non-AP MLD and a corresponding AP affiliated with the AP MLD corresponding to an enabled link is unreachable.

In some embodiments, the first subfield is a max idle time for link enabled subfield, the second subfield is an idle option for link enabled subfield, the first field is a Protected Keep-enabled Required field, and the second field is an expected behavior beyond the max idle time field.

In some embodiments, in a case where communication reachability between the non-AP STA affiliated with the non-AP MLD and the AP affiliated with the AP MLD corresponding to the j-th link is determined based on the duration Tₐₗₗ, an association request frame for multi-link setup transmitted by the non-AP MLD through one of non-AP STAs affiliated with the non-AP MLD includes a fourth indication field, and the fourth indication field is used for indicating max idle time information for link enabled corresponding to the all setup links.

In some embodiments, the association request frame for multi-link setup includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, the fourth indication field includes a third subfield and a fourth subfield; where the third subfield is used for indicating max idle time for link enabled corresponding to all links indicated by the basic multi-link element, and the fourth subfield includes a third field and a fourth field; and where the third field is used for indicating type information of a frame in an enabled or active state, and the fourth field is used for indicating a behavior of the non-AP MLD when communication between non-AP STAs affiliated with the non-AP MLD and APs affiliated with the AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, the above communication unit may be a communication interface or a transceiver, or an input/output interface of a communication chip or a system on chip. The above processing unit may be one or more processors.

It should be understood that the non-AP MLD 600 according to the embodiments of the present disclosure may correspond to the non-AP MLD in the method embodiments of the present disclosure, and the above and other operations and/or functions of each unit in the non-AP MLD 600 are respectively for implementing the corresponding processes of the non-AP MLD in the method 200 illustrated in FIG. 3, which will not be repeated here for brevity.

FIG. 22 illustrates a schematic block diagram of an AP MLD 700 according to the embodiments of the present disclosure. As illustrated in FIG. 22, the AP MLD 700 includes a communication unit 710.

The communication unit 710 is configured to receive a first association request frame or a second association request frame through one of APs affiliated with the AP MLD.

Where the first association request frame is used for requesting to set up a link corresponding to a non-AP STA affiliated with a non-AP MLD among M links, in which the non-AP STA is within a reachable communication range of an AP affiliated with the AP MLD.

Where the second association request frame is used to for requesting to set up the M links; and the second association request frame includes relevant information on whether the M links are reachable in communication, and/or the second association request frame includes relevant information on whether the M links are enabled; and
M is a positive integer.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

In some embodiments, the second association request frame includes M first indication fields, and/or the second association request frame includes a second indication field.

Where the M first indication fields correspond to the M links, respectively, and each of the M first indication fields is used for indicating whether a respective link is reachable in communication; and
the second indication field is used for indicating whether each of the M links is enabled .

In some embodiments, the second association request frame includes a basic multi-link element.

Where a STA control field in a per-STA Profile subelement included in a Link Info field of the basic multi-link element includes a link ID field and a first indication field corresponding to a link identified by the link ID field.

In some embodiments, the first indication field is a reachability field, and/or the second indication field is a TID-to-link mapping element.

In some embodiments, in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same basic service set (BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same multiple basic service set identifier (BSSID) set as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1 ≤i≤M).

In some embodiments, the preset time is configured or indicated by the AP MLD, or the preset time is determined by negotiation between the non-AP MLD and the AP MLD, or the preset time is agreed upon by a protocol.

In some embodiments, the AP MLD 700 further includes a processing unit 720.

The processing unit 720 is configured to N setup links according to communication reachability between a respective AP affiliated with the AP MLD and a respective non-AP STA affiliated with the non-AP MLD corresponding to each of the N setup links, where N is a positive integer, and N is less than or equal to M (i.e., N≤ M).

In some embodiments, the processing unit 720 is specifically configured to: set an enabled link that communication between an AP affiliated with the AP MLD and a non-AP STA affiliated with the non-AP MLD is unreachable among the N links to a disabled state; or delete a link that communication between an AP affiliated with the AP MLD and a non-AP STA affiliated with the non-AP MLD is unreachable among the N links.

In some embodiments, a processing manner of the AP MLD for the link that the communication between the AP affiliated with the AP MLD and the non-AP STA affiliated with the non-AP MLD is unreachable among the N links is determined by negotiation between the non-AP MLD and the AP MLD.

In some embodiments, in a case where the AP MLD sets the enabled link that the communication between the AP affiliated with the AP MLD and the non-AP STA affiliated with the non-AP MLD is unreachable among the N links to the disabled state, a link set to the disabled state among the N links refers to a link without a TID mapping.

In some embodiments, in a case where the AP MLD sets the enabled link that the communication between the AP affiliated with the AP MLD and the non-AP STA affiliated with the non-AP MLD is unreachable among the N links to the disabled state, the method further includes:
for a link set to the disabled state among the N links since communication between an AP affiliated with the AP MLD and a non-AP STA affiliated with the non-AP MLD is unreachable, setting, by the AP MLD, the link to an enabled state in a case where the communication between the AP affiliated with the AP MLD and non-AP STA affiliated with the non-AP MLD corresponding to the link is reachable.

In some embodiments, in a case where an AP affiliated with the AP MLD corresponding to a j-th link receives at least one frame transmitted by a non-AP STA affiliated with the non-AP MLD corresponding to the j-th link within a duration Tⱼ', communication between the AP affiliated with the AP MLD and the non-AP STA affiliated with the non-AP MLD corresponding to the j-th link is reachable; or
in a case where an AP affiliated with the AP MLD corresponding to a j-th link receives at least one frame transmitted by a non-AP STA affiliated with the non-AP MLD corresponding to the j-th link within a duration Tₐₗₗ', communication between the AP affiliated with the AP MLD and the non-AP STA affiliated with the non-AP MLD corresponding to the j-th link is reachable.

Where the j-th link is a j-th link among all setup links, the duration Tⱼ' is a max idle time for link enabled corresponding to the j-th link, the duration Tₐₗₗ' is a max idle time for link enabled corresponding to the all setup links, and j is a positive integer.

In some embodiments, the duration Tⱼ' is a periodic duration, and/or the duration Tₐₗₗ' is a periodic duration.

In some embodiments, a type of the at least one frame is a designated frame type for indicating an enable or active state of a link.

In some embodiments, the at least one frame includes at least one of: a data frame corresponding to a TID mapped to the j-th link, a PS-Poll frame or a management frame.

In some embodiments, in a case where communication reachability between the AP affiliated with the AP MLD and the non-AP STA affiliated with the non-AP MLD corresponding to the j-th link is determined based on the duration Tⱼ', an association response frame transmitted by the AP MLD through one of the APs affiliated with the AP MLD includes S' third indication fields, and each of the S' third indication fields is used for indicating respective max idle time information for link enabled corresponding to each of the S' links.

Where the association response frame is an association response frame corresponding to an association request frame for multi-link setup, and S' is a positive integer.

In some embodiments, the association response frame includes a basic multi-link element.

Where a STA Control field in a per-STA Profile subelement included in a link Info field of the basic multi-link element includes a link ID field and a first present field, and the first present field is used for indicating whether a STA Info field in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, the third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the AP MLD when communication between a corresponding AP affiliated with the AP MLD and a corresponding non-AP STA affiliated with the non-AP MLD corresponding to an enabled link is unreachable.

In some embodiments, the first subfield is a max idle time for link enabled subfield, the second subfield is an idle option for link enabled subfield, the first field is a protected keep-enabled required field, and the second field is an expected behavior beyond the max idle time field.

In some embodiments, in a case where communication reachability between the AP affiliated with the AP MLD and the non-AP STA affiliated with the non-AP MLD corresponding to the j-th link is determined based on the duration Tₐₗₗ', an association response frame transmitted by the AP MLD through one of the APs affiliated with the AP MLD includes a fourth indication field, and the fourth indication field is used for indicating max idle time information for link enabled corresponding to the all setup links, and the association response frame is an association response frame corresponding to an association request frame for multi-link setup.

In some embodiments, the association response frame includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, the fourth indication field includes a third subfield and a fourth subfield; where the third subfield is used for indicating a max idle time for link enabled corresponding to all links indicated by the basic multi-link element, and the fourth subfield includes a third field and a fourth field; and where the third field is used for indicating type information of a frame in the enabled or active state, and the fourth field is used for indicating a behavior of the AP MLD when communication between APs affiliated with the AP MLD and non-AP STAs affiliated with the non-AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, the above communication unit may be a communication interface or a transceiver, or an input/output interface of a communication chip or a system on chip. The above processing unit may be one or more processors.

It should be understood that the AP MLD 700 according to the embodiments of the present disclosure may correspond to the AP MLD in the method embodiments of the present disclosure, and the above and other operations and/or functions of each unit in the AP MLD 700 are respectively for implementing the corresponding processes of the AP MLD in the method 300 illustrated in FIG. 16, which will not be repeated here for brevity.

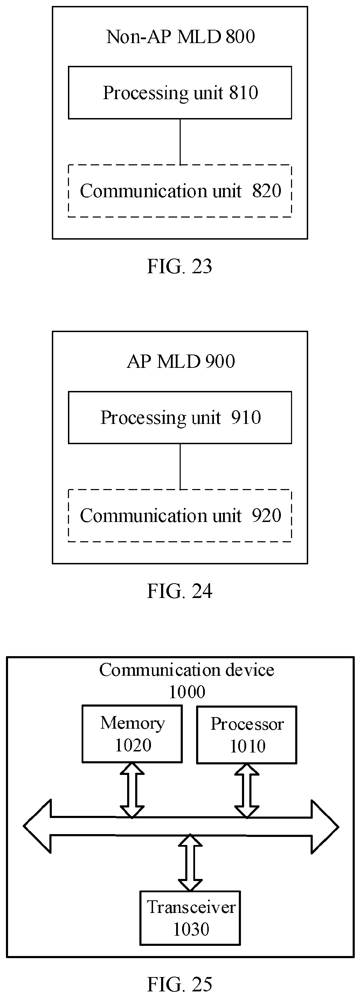

FIG. 23 illustrates a schematic block diagram of a non-AP MLD 800 according to the embodiments of the present disclosure. As illustrated in FIG. 23, the non-AP MLD 800 includes a processing unit 810.

The processing unit 810 is configured to manage N setup links according to communication reachability between a respective non-AP STA affiliated with the non-AP MLD and a respective AP affiliated with an AP MLD corresponding to each of the N setup links, where N is a positive integer.

In some embodiments, the processing unit 810 is specifically configured to: set an enabled link that communication between a non-AP STA affiliated with the non-AP MLD and an AP affiliated with the AP MLD is unreachable among the N links to a disabled state; or delete a link that communication between a non-AP STA affiliated with the non-AP MLD and an AP affiliated with the AP MLD is unreachable among the N links.

In some embodiments, a processing manner of the non-AP MLD for the link that the communication between the non-AP STA affiliated with the non-AP MLD and the AP affiliated with the AP MLD is unreachable among the N links is determined by negotiation between the non-AP MLD and the AP MLD.

In some embodiments, in a case where the non-AP MLD sets the enabled link that the communication between the non-AP STA affiliated with the non-AP MLD and the AP affiliated with the AP MLD is unreachable among the N links to the disabled state, a link set to the disabled state among the N links refers to a link without a TID mapping.

In some embodiments, in a case where the non-AP MLD sets the enabled link that the communication between the non-AP STA affiliated with the non-AP MLD and the AP affiliated with the AP MLD is unreachable among the N links to the disabled state, for a link set to the disabled state among the N links since communication between a non-AP STA affiliated with the non-AP MLD and an AP affiliated with the AP MLD is unreachable, setting, by the non-AP MLD, the processing unit 820 is further configured to the link to an enabled state in a case where the communication between the non-AP STA affiliated with the non-AP MLD and the AP affiliated with the AP MLD corresponding to the link is reachable.

In some embodiments, in a case where a non-AP STA affiliated with the non-AP MLD corresponding to a j-th link receives at least one frame transmitted by an AP affiliated with the AP MLD corresponding to the j-th link within a duration Tⱼ, communication between the non-AP STA affiliated with the non-AP MLD and the AP affiliated with the AP MLD corresponding to the j-th link is reachable; or
in a case where a non-AP STA affiliated with the non-AP MLD corresponding to a j-th link receives at least one frame transmitted by an AP affiliated with the AP MLD corresponding to the j-th link within a duration Tₐₗₗ, communication between the non-AP STA affiliated with the non-AP MLD and the AP affiliated with the AP MLD corresponding to the j-th link is reachable.

Where the j-th link is a j-th link among all setup links, the duration Tⱼ is a max idle time for link enabled corresponding to the j-th link, the duration Tₐₗₗ is a max idle time for link enabled corresponding to the all setup links, and j is a positive integer.

In some embodiments, the duration Tⱼ is a periodic duration, and/or the duration Tₐₗₗ is a periodic duration.

In some embodiments, a type of the at least one frame is a designated frame type for indicating an enable or active state of a link.

In some embodiments, the at least one frame includes at least one of: a data frame corresponding to a TID mapped to the j-th link, a PS-Poll frame or a management frame.

In some embodiments, in a case where communication reachability between the non-AP STA affiliated with the non-AP MLD and the AP affiliated with the AP MLD corresponding to the j-th link is determined based on the duration Tⱼ, an association request frame for multi-link setup transmitted by the non-AP MLD through one of non-AP STAs affiliated with the non-AP MLD includes S third indication fields, and each of the S third indication fields is used for indicating respective max idle time information for link enabled corresponding to each of the S links, and S is a positive integer.

In some embodiments, the association request frame for multi-link setup includes a basic multi-link element.

Where a STA Control field in a per-STA Profile subelement included in a link Info field of the basic multi-link element includes a link ID field and a first present field, and the first present field is used for indicating whether a STA Info field in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, the third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the non-AP MLD when communication between a corresponding non-AP STA affiliated with the non-AP MLD and a corresponding AP affiliated with the AP MLD corresponding to an enabled link is unreachable.

In some embodiments, the first subfield is a max idle time for link enabled subfield, the second subfield is an idle option for link enabled subfield, the first field is a Protected Keep-enabled Required field, and the second field is an expected behavior beyond the max idle time field.

In some embodiments, in a case where communication reachability between the non-AP STA affiliated with the non-AP MLD and the AP affiliated with the AP MLD corresponding to the j-th link is determined based on the duration Tₐₗₗ, an association request frame for multi-link setup transmitted by the non-AP MLD through one of non-AP STAs affiliated with the non-AP MLD includes a fourth indication field, and the fourth indication field is used for indicating max idle time information for link enabled corresponding to the all setup links.

In some embodiments, the association request frame for multi-link setup includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, the fourth indication field includes a third subfield and a fourth subfield; where the third subfield is used for indicating max idle time for link enabled corresponding to all links indicated by the basic multi-link element, and the fourth subfield includes a third field and a fourth field; and where the third field is used for indicating type information of a frame in an enabled or active state, and the fourth field is used for indicating a behavior of the non-AP MLD when communication between non-AP STAs affiliated with the non-AP MLD and APs affiliated with the AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, before the operation that the non-AP MLD manages the N setup links according to the communication reachability between the respective non-AP STA affiliated with the non-AP MLD and the respective AP affiliated with the AP MLD corresponding to each of the N setup links, the non-AP MLD 800 further includes a communication unit 810.

The communication unit 810 is configured to initiate a multi-link setup between the non-AP MLD and the AP MLD according to communication reachability between a respective non-AP STA affiliated with the non-AP MLD and a respective affiliated with the AP MLD corresponding to each of M links to be set up, where M is a positive integer and M is greater than or equal to N (i.e., M≥N).

In some embodiments, the communication unit 810 is specifically configured to: transmit a first association request frame through one of non-AP STAs affiliated with the non-AP MLD.

Where the first association request frame is used for requesting to set up a link corresponding to a non-AP STA affiliated with the non-AP MLD among the M links, in which the non-AP STA is within a reachable communication range of an AP affiliated with the AP MLD.

In some embodiments, the communication unit 810 is specifically configured to: transmit a second association request frame through one of non-AP STAs affiliated with the non-AP MLD.

Where the second association request frame is used to for requesting to set up the M links; and the second association request frame includes relevant information on whether the M links are reachable in communication, and/or the second association request frame includes relevant information on whether the M links are enabled.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

In some embodiments, the second association request frame includes M first indication fields, and/or the second association request frame includes a second indication field.

Where the M first indication fields correspond to the M links, respectively, and each of the M first indication fields is used for indicating whether a respective link is reachable in communication; and
the second indication field is used for indicating whether each of the M links is enabled.

In some embodiments, the second association request frame includes a basic multi-link element.

Where a STA control field in a per-STA Profile subelement included in a Link Info field of the basic multi-link element includes a link ID field and a first indication field corresponding to a link identified by the link ID field.

In some embodiments, the first indication field is a reachability field, and/or the second indication field is a TID-to-link mapping element.

In some embodiments, in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSS as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSSID set as an AP affiliated with the AP MLD corresponding to the i-th link to be set up within preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1≤i≤M).

In some embodiments, the preset time is configured or indicated by the AP MLD, or the preset time is determined by negotiation between the non-AP MLD and the AP MLD, or the preset time is agreed upon by a protocol.

In some embodiments, the above communication unit may be a communication interface or a transceiver, or an input/output interface of a communication chip or a system on chip. The above processing unit may be one or more processors.

It should be understood that the non-AP MLD 800 according to the embodiments of the present disclosure may correspond to the non-AP MLD in the method embodiments of the present disclosure, and the above and other operations and/or functions of each unit in the non-AP MLD 800 are respectively for implementing the corresponding processes of the non-AP MLD in the method 400 illustrated in FIG. 19, which will not be repeated here for brevity.

FIG. 24 illustrates a schematic block diagram of an AP MLD 900 according to the embodiments of the present disclosure. As illustrated in FIG. 24, the AP MLD 900 includes a processing unit 910.

The processing unit 910, configured to manage N setup links according to communication reachability between a respective AP affiliated with the AP MLD and a respective non-AP STA affiliated with a non-AP MLD corresponding to each of the N setup links, where N is a positive integer.

In some embodiments, the processing unit 910 is specifically configured to: set an enabled link that communication between an AP affiliated with the AP MLD and a non-AP STA affiliated with the non-AP MLD is unreachable among the N links to a disabled state; or delete a link that communication between an AP affiliated with the AP MLD and a non-AP STA affiliated with the non-AP MLD is unreachable among the N links.

In some embodiments, a processing manner of the AP MLD for the link that the communication between the AP STA affiliated with the AP MLD and the non-AP affiliated with the non-AP MLD is unreachable among the N links is determined by negotiation between the non-AP MLD and the AP MLD.

In some embodiments, in a case where the AP MLD sets the enabled link that the communication between the AP affiliated with the AP MLD and the non-AP STA affiliated with the non-AP MLD is unreachable among the N links to the disabled state, a link set to the disabled state among the N links refers to a link without a TID mapping.

In some embodiments, in a case where the AP MLD sets the enabled link that the communication between the AP affiliated with the AP MLD and the non-AP STA affiliated with the non-AP MLD is unreachable among the N links to the disabled state, for a link set to the disabled state among the N links since communication between an AP affiliated with the AP MLD and a non-AP STA affiliated with the non-AP MLD is unreachable, the processing unit 910 is further configured to set the link to an enabled state in a case where the communication between the AP affiliated with the AP MLD and non-AP STA affiliated with the non-AP MLD corresponding to the link is reachable.

In some embodiments, in a case where an AP affiliated with the AP MLD corresponding to a j-th link receives at least one frame transmitted by a non-AP STA affiliated with the non-AP MLD corresponding to the j-th link within a duration Tⱼ', communication between the AP affiliated with the AP MLD and the non-AP STA affiliated with the non-AP MLD corresponding to the j-th link is reachable; or
in a case where an AP affiliated with the AP MLD corresponding to a j-th link receives at least one frame transmitted by a non-AP STA affiliated with the non-AP MLD corresponding to the j-th link within a duration Tₐₗₗ', communication between the AP affiliated with the AP MLD and the non-AP STA affiliated with the non-AP MLD corresponding to the j-th link is reachable.

Where the j-th link is a j-th link among all setup links, the duration Tⱼ' is a max idle time for link enabled corresponding to the j-th link, the duration Tₐₗₗ' is a max idle time for link enabled corresponding to the all setup links, and j is a positive integer.

In some embodiments, the duration Tⱼ' is a periodic duration, and/or the duration Tₐₗₗ' is a periodic duration.

In some embodiments, a type of the at least one frame is a designated frame type for indicating an enable or active state of a link.

In some embodiments, the at least one frame includes at least one of: a data frame corresponding to a TID mapped to the j-th link, a PS-Poll frame or a management frame.

In some embodiments, in a case where communication reachability between the AP affiliated with the AP MLD and the non-AP STA affiliated with the non-AP MLD corresponding to the j-th link is determined based on the duration Tⱼ', an association response frame transmitted by the AP MLD through one of APs affiliated with the AP MLD includes S' third indication fields, and each of the S' third indication fields is used for indicating respective max idle time information for link enabled corresponding to each of the S' link.

Where the association response frame is an association response frame corresponding to an association request frame for multi-link setup, and S' is a positive integer.

In some embodiments, the association response frame includes a basic multi-link element.

Where a STA Control field in a per-STA Profile subelement included in a link Info field of the basic multi-link element includes a link ID field and a first present field, and the first present field is used for indicating whether a STA Info field in the per-STA Profile subelement includes a third indication field corresponding to a link identified by the link ID field.

In some embodiments, in a case where a value of the first present field is used for indicating that the STA Info field in the per-STA Profile subelement includes the third indication field corresponding to the link identified by the link ID field, the STA Info field in the per-STA Profile subelement includes the third indication field corresponding to the link identified by the link ID field.

In some embodiments, the third indication field is a max idle time information for link enabled field, and the first present field is a max idle time information for link enabled present field.

In some embodiments, the third indication field includes a first subfield and a second subfield; where the first subfield is used for indicating a max idle time for link enabled of a corresponding link, and the second subfield includes a first field and a second field; where the first field is used for indicating type information of a frame in an enabled or active state, and the second field is used for indicating a behavior of the AP MLD when communication between a corresponding AP affiliated with the AP MLD and a corresponding non-AP STA affiliated with the non-AP MLD corresponding to an enabled link is unreachable.

In some embodiments, the first subfield is a max idle time for link enabled subfield, the second subfield is an idle option for link enabled subfield, the first field is a protected keep-enabled required field, and the second field is an expected behavior beyond the max idle time field.

In some embodiments, in a case where communication reachability between the AP affiliated with the AP MLD and the non-AP STA affiliated with the non-AP MLD corresponding to the j-th link is determined based on the duration Tₐₗₗ', an association response frame transmitted by the AP MLD through one of the APs affiliated with the AP MLD includes a fourth indication field, and the fourth indication field is used for indicating max idle time information for link enabled corresponding to the all setup links, and the association response frame is an association response frame corresponding to an association request frame for multi-link setup.

In some embodiments, the association response frame includes a basic multi-link element.

Where a presence bitmap subfield in a multi-link control field of the basic multi-link element includes a second present field, and the second present field is used for indicating whether a common information field in the multi-link control field includes the fourth indication field.

In some embodiments, in a case where a value of the second present field is used for indicating that the common information field in the multi-link control field includes the fourth indication field, the common information field in the multi-link control field includes the fourth indication field.

In some embodiments, the fourth indication field is a max idle time information for link enabled field, and the second present field is a max idle time information for link enabled present field.

In some embodiments, the fourth indication field includes a third subfield and a fourth subfield; where the third subfield is used for indicating a max idle time for link enabled corresponding to all links indicated by the basic multi-link element, and the fourth subfield includes a third field and a fourth field; and where the third field is used for indicating type information of a frame in the enabled or active state, and the fourth field is used for indicating a behavior of the AP MLD when communication between APs affiliated with the AP MLD and non-AP STAs affiliated with the non-AP MLD corresponding to the all links indicated by the basic multi-link element is unreachable.

In some embodiments, the third subfield is a max idle time for link enabled subfield, the fourth subfield is an idle option for link enabled subfield, the third field is a Protected Keep-enabled Required field, and the fourth field is an expected behavior beyond the max idle time field.

In some embodiments, before the AP MLD manages the N setup links according to the communication reachability between the respective AP affiliated with the AP MLD and the respective non-AP STA affiliated with the non-AP MLD corresponding to each of the N setup links, the AP MLD 900 further includes a communication unit 920.

The communication unit 920 is configured to receive a first association request frame through one of APs affiliated with the AP MLD.

Where the first association request frame is used for requesting to set up a link corresponding to a non-AP STA affiliated with the non-AP MLD among M links, in which the non-AP STA is within a reachable communication range of an AP affiliated with the AP MLD.

In some embodiments, before the AP MLD manages the N setup links according to the communication reachability between the respective AP affiliated with the AP MLD and the respective non-AP STA affiliated with the non-AP MLD corresponding to each of the N setup links, the AP MLD 900 further includes a communication unit 920.

The communication unit 920 is configured to receive a second association request frame through one of APs affiliated with the AP MLD.

Where the second association request frame is used to for requesting to set up the M links; and the second association request frame includes relevant information on whether the M links are reachable in communication, and/or the second association request frame includes relevant information on whether the M links are enabled.

In some embodiments, for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

In some embodiments, the second association request frame includes M first indication fields, and/or the second association request frame includes a second indication field.

Where the M first indication fields correspond to the M links, respectively, and each of the M first indication fields is used for indicating whether a respective link is reachable in communication; and
second indication field is used for indicating whether each of the M links is enabled.

In some embodiments, the second association request frame includes a basic multi-link element.

Where a STA control field in a per-STA Profile subelement included in a Link Info field of the basic multi-link element includes a link ID field and a first indication field corresponding to a link identified by the link ID field.

In some embodiments, the first indication field is a reachability field, and/or the second indication field is a TID-to-link mapping element.

In some embodiments, in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSS as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same BSSID set as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable.

Where the i-th link to be set up is an i-th link among the M links, i is a positive integer, and i is greater than or equal to 1 and less than or equal to M (i.e., 1≤i≤M).

In some embodiments, the preset time is configured or indicated by the AP MLD, or the preset time is determined by negotiation between the non-AP MLD and the AP MLD, or the preset time is agreed upon by a protocol.

In some embodiments, the above communication unit may be a communication interface or a transceiver, or an input/output interface of a communication chip or a system on chip. The above processing unit may be one or more processors.

It should be understood that the AP MLD 900 according to the embodiments of the present disclosure may correspond to the AP MLD in the method embodiments of the present disclosure, and the above and other operations and/or functions of each unit in the AP MLD 900 are respectively for implementing the corresponding processes of the AP MLD in the method 500 illustrated in FIG. 20, which will not be repeated here for brevity.

FIG. 25 is a schematic structural diagram of a communication device 1000 provided in the embodiments of the present disclosure. The communication device 1000 illustrated in FIG. 25 includes a processor 1010, and the processor 1010 may call a computer program from a memory and run the computer program, to implement the methods in the embodiments of the present disclosure.

In some embodiments, as illustrated in FIG. 25, the communication device 1000 may further include a memory 1020. The processor 1010 may call a computer program from the memory 1020 and run the computer program, to implement the methods in the embodiments of the present disclosure.

The memory 1020 may be a separate device independent of the processor 1010, or may be integrated into the processor 1010.

In some embodiments, as illustrated in FIG. 25, the communication device 1000 may further include a transceiver 1030, and the processor 1010 may control the transceiver 1030 to communicate with other devices, and specifically, to transmit information or data to other devices, or receive information or data transmitted by other devices.

The transceiver 1030 may include a transmitter and a receiver. The transceiver 1030 may further include antenna(s), and the number of antenna(s) may be one or more.

In some embodiments, the processor 1010 may implement the functions of the processing unit in the non-AP MLD, or the processor 1010 may implement the functions of the processing unit in the AP MLD, which will not be described in detail for the sake of brevity.

In some embodiments, the transceiver 1030 may implement the functions of the communication unit in the non-AP MLD, which will not be described in detail for the sake of brevity.

In some embodiments, the transceiver 1030 may implement the functions of the communication unit in the AP MLD, which will not be described in detail here for the sake of brevity.

In some embodiments, the communication device 1000 may specifically be the AP MLD in the embodiments of the present disclosure, and the communication device 1000 may implement the corresponding processes implemented by the AP MLD in the various methods of the embodiments of the present disclosure, which will not be repeated here for the sake of brevity.

In some embodiments, the communication device 1000 may specifically be the non-AP MLD in the embodiments of the present disclosure, and the communication device 1000 may implement the corresponding processes implemented by the non-AP MLD in the various methods of the embodiments of the present disclosure, which will not be repeated here for the sake of brevity.

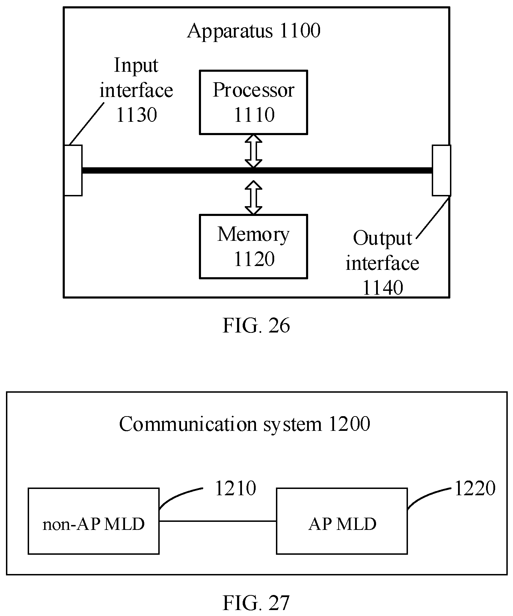

FIG. 26 is a schematic structural diagram of an apparatus of the embodiments of the present disclosure. The apparatus 1100 illustrated in FIG. 26 includes a processor 1110, and the processor 1110 may call a computer program from a memory and run the computer program to implement the method in the embodiments of the present disclosure.

In some embodiments, as illustrated in FIG. 26, the apparatus 1100 may further include a memory 1120. The processor 1110 may call a computer program from the memory 1120 and run the computer program to implement the methods in the embodiments of the present disclosure.

The memory 1120 may be a separate device independent of the processor 1110, or may be integrated into the processor 1110.

In some embodiments, the apparatus 1100 may further include an input interface 1130. The processor 1110 may control the input interface 1130 to communicate with other devices or chips, and specifically, may obtain information or data transmitted by other devices or chips. Optionally, the processor 1110 may be located inside or outside the chip.

In some embodiments, the processor 1110 may implement the functions of the processing unit in the non-AP MLD, or the processor 1110 may implement the functions of the processing unit in the AP MLD, which will not be repeated here for the sake of brevity.

In some embodiments, the input interface 1130 may implement the functions of the communication unit in the non-AP MLD, or the input interface 1130 may implement the functions of the communication unit in the AP MLD.

In some embodiments, the apparatus 1100 may further include an output interface 1140. The processor 1110 may control the output interface 1140 to communicate with other devices or chips, and specifically, may output information or data to other devices or chips. Optionally, the processor 1110 may be located inside or outside the chip.

In some embodiments, the output interface 1140 may implement the functions of the communication unit in the non-AP MLD, or the output interface 1140 may implement the functions of the communication unit in the AP MLD.

In some embodiments, the apparatus may be applied to the non-AP MLD in the embodiments of the present disclosure, and the apparatus may implement the corresponding processes implemented by the non-AP MLD in the various methods of the embodiments of the present disclosure, which will not be repeated here for the sake of brevity.

In some embodiments, the apparatus may be applied to the AP MLD in the embodiments of the present disclosure, and the apparatus may implement the corresponding processes implemented by the AP MLD in the various methods of the embodiments of the present disclosure, which will not be repeated here for the sake of brevity.

In some embodiments, the apparatus mentioned in the embodiments of the present disclosure may also be a chip, for example, may be a system level chip, a system chip, a chip system, or a system-on-chip chip, etc.

FIG. 27 is a schematic block diagram of a communication system 1200 provided in the embodiments of the present disclosure. As illustrated in FIG. 27, the communication system 1200 includes a non-AP MLD 1210 and an AP MLD 1220.

The non-AP MLD 1210 may be used to implement the corresponding functions implemented by the non-AP MLD in the above methods, and the AP MLD 1220 may be used to implement the corresponding functions implemented by the AP MLD in the above methods, which will not be repeated here for the sake of brevity.

It should be understood that the processor of the embodiments of the present disclosure may be an integrated circuit chip with signal processing capabilities. In the implementation process, various steps of the above method embodiments may be completed by an integrated logic circuit of hardware in a processor or an instruction in software form. The above-mentioned processor may be a general purpose processor, a digital signal processor (DSP), an application specific integrated circuit (ASIC), a field programmable gate array (FPGA) or other programmable logic devices, a discrete gate or transistor logic device, or a discrete hardware component. The various methods, steps and logic diagrams disclosed in the embodiments of the present disclosure may be implemented or executed. The general purpose processor may be a microprocessor, or the processor may be any conventional processor or the like. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present disclosure may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. Through illustrative, rather than limiting illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

The embodiments of the present disclosure further provide a computer readable storage medium for storing a computer program.

In some embodiments, the computer readable storage medium may be applied to the AP MLD in the embodiments of the present disclosure, and the computer program enables a computer to perform the corresponding processes implemented by the AP MLD in various methods of the embodiments of the present disclosure, which will not be repeated here for the sake of brevity.

In some embodiments, the computer readable storage medium may be applied to the non-AP MLD in the embodiments of the present disclosure, and the computer program enables a computer to perform the corresponding processes implemented by the non-AP MLD in various methods of the embodiments of the present disclosure, which will not be repeated here for the sake of brevity.

The embodiments of the present disclosure further provide a computer program product including computer program instructions.

In some embodiments, the computer program product may be applied to the AP MLD in the embodiments of the present disclosure, and the computer program instructions enable a computer to perform the corresponding processes implemented by the AP MLD in the various methods of the embodiments of the present disclosure, which will not be repeated here for the sake of brevity.

In some embodiments, the computer program product may be applied to the non-AP MLD in the embodiments of the present disclosure, and the computer program instructions enable a computer to perform the corresponding processes implemented by the non-AP MLD in the various methods of the embodiments of the present disclosure, which will not be repeated here for the sake of brevity.

The embodiments of the present disclosure further provide a computer program.

In some embodiments, the computer program may be applied to AP MLD in the embodiments of the present disclosure, the computer program, when executed on a computer, enables the computer to perform the corresponding processes implemented by the AP MLD in various methods of the embodiments of the present disclosure, which will not be repeated here for the sake of brevity.

In some embodiments, the computer program may be applied to non-AP MLD in the embodiments of the present disclosure, the computer program, when executed on a computer, enables the computer to perform the corresponding processes implemented by the non-AP MLD in various methods of the embodiments of the present disclosure, which will not be repeated here for the sake of brevity.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

Those skilled in the art can clearly understand that for the convenience and simplicity of description, the working processes of the systems, devices and units described above may refer to the corresponding processes in the above method embodiments, and details will not be repeated here.

In the several embodiments provided by the present disclosure, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. In addition, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in a form of a software functional unit and sold or used as an independent product, they may be stored in one computer readable storage medium. Based on this understanding, the technical solution of the present disclosure essentially, or a part of the technical solution that contributes to the prior art, or a part of the technical solution, may be embodied in a form of a software product, and the computer software product is stored in a storage medium, and includes a plurality of instructions to cause a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a read-only memory (ROM), a random access memory (RAM), a diskette, or an optical disk, and various mediums that may store program codes.

The above content is only specific implementations of the present disclosure, but the protection scope of the present disclosure is not limited thereto, and any skill familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

## Claims

1. A multi-link communication method, comprising:
initiating, by a non-access point multi-link device (non-AP MLD), a multi-link setup between the non-AP MLD and an access point multi-link device (AP MLD) according to communication reachability between a respective non-access point station (non-AP STA) affiliated with the non-AP MLD and a respective access point (AP) affiliated with the AP MLD corresponding to each of M links to be set up; wherein M is a positive integer.

2. The method according to claim 1, wherein initiating, by the non-AP MLD, the multi-link setup between the non-AP MLD and the AP MLD according to the communication reachability between the respective non-AP STA affiliated with the non-AP MLD and the respective AP affiliated with the AP MLD corresponding to each of the M links to be set up comprises:
transmitting, by the non-AP MLD, a first association request frame through one of non-AP STAs affiliated with the non-AP MLD;
wherein the first association request frame is used for requesting to set up a link corresponding to a non-AP STA affiliated with the non-AP MLD among the M links, in which the non-AP STA is within a reachable communication range of an AP affiliated with the AP MLD.

3. The method according to claim 1, wherein initiating, by the non-AP MLD, the multi-link setup between the non-AP MLD and the AP MLD according to the communication reachability between the respective non-AP STA affiliated with the non-AP MLD and the respective AP affiliated with the AP MLD corresponding to each of the M links to be set up comprises:
transmitting, by the non-AP MLD, a second association request frame through one of non-AP STAs affiliated with the non-AP MLD;
wherein the second association request frame is used to for requesting to set up the M links; and the second association request frame comprises relevant information on whether the M links are reachable in communication, and/or the second association request frame comprises relevant information on whether the M links are enabled.

4. The method according to claim 3, wherein
for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

5. The method according to claim 3 or 4, wherein the second association request frame comprises M first indication fields, and/or the second association request frame comprises a second indication field;
wherein the M first indication fields correspond to the M links, respectively, and each of the M first indication fields is used for indicating whether a respective link is reachable in communication; and
the second indication field is used for indicating whether each of the M links is enabled.

6. The method according to claim 5, wherein the second association request frame comprises a basic multi-link element;
wherein a station control field in a per-station profile subelement comprised in a link information field of the basic multi-link element comprises a link identifier field and a first indication field corresponding to a link identified by the link identifier field.

7. The method according to claim 5 or 6, wherein the first indication field is a reachability field, and/or the second indication field is a traffic identifier to link mapping element.

8. The method according to any one of claims 1 to 7, wherein
in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same basic service set (BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same multiple basic service set identifier (BSSID) set as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable;
wherein the i-th link to be set up is an i-th link among the M links, i is a positive integer, and i is greater than or equal to 1 and less than or equal to M.

9. The method according to claim 8, wherein the preset time is configured or indicated by the AP MLD, or the preset time is determined by negotiation between the non-AP MLD and the AP MLD, or the preset time is agreed upon by a protocol.

10. The method according to any one of claims 1 to 9, further comprising:
managing, by the non-AP MLD, N setup links according to communication reachability between a respective non-AP STA affiliated with the non-AP MLD and a respective AP affiliated with the AP MLD corresponding to each of the N setup links, wherein N is a positive integer, and N is less than or equal to M.

11. The method according to claim 10, wherein managing, by the non-AP MLD, the N setup links according to the communication reachability between the respective non-AP STA affiliated with the non-AP MLD and the respective AP affiliated with the AP MLD corresponding to each of the N setup links comprises:
setting, by the non-AP MLD, an enabled link that communication between a non-AP STA affiliated with the non-AP MLD and an AP affiliated with the AP MLD is unreachable among the N links to a disabled state; or deleting, by the non-AP MLD, a link that communication between a non-AP STA affiliated with the non-AP MLD and an AP affiliated with the AP MLD is unreachable among the N links.

12. The method according to claim 11, wherein a processing manner of the non-AP MLD for the link that the communication between the non-AP STA affiliated with the non-AP MLD and the AP affiliated with the AP MLD is unreachable among the N links is determined by negotiation between the non-AP MLD and the AP MLD.

13. The method according to claim 11 or 12, wherein in a case where the non-AP MLD sets the enabled link that the communication between the non-AP STA affiliated with the non-AP MLD and the AP affiliated with the AP MLD is unreachable among the N links to the disabled state, a link set to the disabled state among the N links refers to a link without a traffic identifier (TID) mapping.

14. The method according to any one of claims 11 to 13, wherein in a case where the non-AP MLD sets the enabled link that the communication between the non-AP STA affiliated with the non-AP MLD and the AP affiliated with the AP MLD is unreachable among the N links to the disabled state, the method further comprises:
for a link set to the disabled state among the N links since communication between a non-AP STA affiliated with the non-AP MLD and an AP affiliated with the AP MLD is unreachable, setting, by the non-AP MLD, the link to an enabled state in a case where the communication between the non-AP STA affiliated with the non-AP MLD and the AP affiliated with the AP MLD corresponding to the link is reachable.

15. The method according to any one of claims 10 to 14, wherein
in a case where a non-AP STA affiliated with the non-AP MLD corresponding to a j-th link receives at least one frame transmitted by an AP affiliated with the AP MLD corresponding to the j-th link within a duration Tⱼ, communication between the non-AP STA affiliated with the non-AP MLD and the AP affiliated with the AP MLD corresponding to the j-th link is reachable; or
in a case where a non-AP STA affiliated with the non-AP MLD corresponding to a j-th link receives at least one frame transmitted by an AP affiliated with the AP MLD corresponding to the j-th link within a duration Tₐₗₗ, communication between the non-AP STA affiliated with the non-AP MLD and the AP affiliated with the AP MLD corresponding to the j-th link is reachable;
wherein the j-th link is a j-th link among all setup links, the duration Tⱼ is a max idle time for link enabled corresponding to the j-th link, the duration Tₐₗₗ is a max idle time for link enabled corresponding to the all setup links, and j is a positive integer.

16. The method according to claim 15, wherein the duration Tⱼ is a periodic duration, and/or the duration Tₐₗₗ is a periodic duration.

17. The method according to claim 15 or 16, wherein a type of the at least one frame is a designated frame type for indicating an enable or active state of a link.

18. The method according to any one of claims 15 to 17, wherein the at least one frame comprises at least one of:
a data frame corresponding to a TID mapped to the j-th link, a power saving poll (PS-Poll) frame or a management frame.

19. The method according to any one of claims 15 to 18, wherein
in a case where communication reachability between the non-AP STA affiliated with the non-AP MLD and the AP affiliated with the AP MLD corresponding to the j-th link is determined based on the duration Tⱼ, an association request frame for multi-link setup transmitted by the non-AP MLD through one of non-AP STAs affiliated with the non-AP MLD comprises S third indication fields, and each of the S third indication fields is used for indicating respective max idle time information for link enabled corresponding to each of the S links, and S is a positive integer.

20. The method according to claim 19, wherein the association request frame for multi-link setup comprises a basic multi-link element;
wherein a station control field in a per-station profile subelement comprised in a link information field of the basic multi-link element comprises a link identifier field and a first present field, and the first present field is used for indicating whether a station information field in the per-station profile subelement comprises a third indication field corresponding to a link identified by the link identifier field.

21. The method according to claim 20, wherein in a case where a value of the first present field is used for indicating that the station information field in the per-station profile subelement comprises the third indication field corresponding to the link identified by the link identifier field, the station information field in the per-station profile subelement comprises the third indication field corresponding to the link identified by the link identifier field.

22. The method according to claim 20 or 21, wherein the third indication field is a max idle time information for link enabled field, and the first present field is a max idle time information for link enabled present field.

23. The method according to any one of claims 19 to 22, wherein the third indication field comprises a first subfield and a second subfield;
wherein the first subfield is used for indicating a max idle time for link enabled of a corresponding link, and the second subfield comprises a first field and a second field; and
wherein the first field is used for indicating type information of a frame in an enabled or active state, and the second field is used for indicating a behavior of the non-AP MLD when communication between a non-AP STA affiliated with the non-AP MLD and an AP affiliated with the AP MLD corresponding to a corresponding enabled link is unreachable.

24. The method according to claim 23, wherein the first subfield is a max idle time for link enabled subfield, the second subfield is an idle option for link enabled subfield, the first field is a protected keep-enabled required field, and the second field is an expected behavior beyond the max idle time field.

25. The method according to any one of claims 15 to 18, wherein
in a case where communication reachability between the non-AP STA affiliated with the non-AP MLD and the AP affiliated with the AP MLD corresponding to the j-th link is determined based on the duration Tₐₗₗ, an association request frame for multi-link setup transmitted by the non-AP MLD through one of non-AP STAs affiliated with the non-AP MLD comprises a fourth indication field, and the fourth indication field is used for indicating max idle time information for link enabled corresponding to the all setup links.

26. The method according to claim 25, wherein the association request frame for multi-link setup comprises a basic multi-link element;
wherein a presence bitmap subfield in a multi-link control field of the basic multi-link element comprises a second present field, and the second present field is used for indicating whether a common information field in the multi-link control field comprises the fourth indication field.

27. The method according to claim 26, wherein in a case where a value of the second present field is used for indicating that the common information field in the multi-link control field comprises the fourth indication field, the common information field in the multi-link control field comprises the fourth indication field.

28. The method according to claim 26 or 27, wherein the fourth indication field is a max idle time information for link enabled field, and the second present field is a max idle time information for link enabled present field.

29. The method according to any one of claims 26 to 28, wherein the fourth indication field comprises a third subfield and a fourth subfield;
wherein the third subfield is used for indicating max idle time for link enabled corresponding to all links indicated by the basic multi-link element, and the fourth subfield comprises a third field and a fourth field; and
wherein the third field is used for indicating type information of a frame in an enabled or active state, and the fourth field is used for indicating a behavior of the non-AP MLD when communication between non-AP STAs affiliated with the non-AP MLD and APs affiliated with the AP MLD corresponding to the all links indicated by the basic multi-link element is unreachable.

30. The method according to claim 29, wherein the third subfield is a max idle time for link enabled subfield, the fourth subfield is an idle option for link enabled subfield, the third field is a protected keep-enabled required field, and the fourth field is an expected behavior beyond the max idle time field.

31. A multi-link communication method, comprising:
receiving, by an access point multi-link device (AP MLD), a first association request frame or a second association request frame through one of access points (APs) affiliated with the AP MLD;
wherein the first association request frame is used for requesting to set up a link corresponding to a non-access point station (non-AP STA) affiliated with a non-access point multi-link device (non-AP MLD) among M links, in which the non-AP STA is within a reachable communication range of an AP affiliated with the AP MLD;
wherein the second association request frame is used to for requesting to set up the M links; and the second association request frame comprises relevant information on whether the M links are reachable in communication, and/or the second association request frame comprises relevant information on whether the M links are enabled; and
M is a positive integer.

32. The method according to claim 31, wherein
for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

33. The method according to claim 31 or 32, wherein the second association request frame comprises M first indication fields, and/or the second association request frame comprises a second indication field;
wherein the M first indication fields correspond to the M links, respectively, and each of the M first indication fields is used for indicating whether a respective link is reachable in communication; and
the second indication field is used for indicating whether each of the M links is enabled.

34. The method according to claim 33, wherein the second association request frame comprises a basic multi-link element;
wherein a station control field in a per-station profile subelement comprised in a link information field of the basic multi-link element comprises a link identifier field and a first indication field corresponding to a link identified by the link identifier field.

35. The method according to claim 33 or 34, wherein the first indication field is a reachability field, and/or the second indication field is a traffic identifier to link mapping element.

36. The method according to any one of claims 31 to 35, wherein
in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same basic service set (BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same multiple basic service set identifier (BSSID) set as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable;
wherein the i-th link to be set up is an i-th link among the M links, i is a positive integer, and i is greater than or equal to 1 and less than or equal to M.

37. The method according to claim 36, wherein the preset time is configured or indicated by the AP MLD, or the preset time is determined by negotiation between the non-AP MLD and the AP MLD, or the preset time is agreed upon by a protocol.

38. The method according to any one of claims 31 to 37, further comprising:
managing, by the AP MLD, N setup links according to communication reachability between a respective AP affiliated with the AP MLD and a respective non-AP STA affiliated with the non-AP MLD corresponding to each of the N setup links, wherein N is a positive integer, and N is less than or equal to M.

39. The method according to claim 38, wherein managing, by the AP MLD, the N setup links according to the communication reachability between the respective AP affiliated with the AP MLD and the respective non-AP STA affiliated with the non-AP MLD corresponding to each of the N setup links comprises:
setting, by the AP MLD, an enabled link that communication between an AP affiliated with the AP MLD and a non-AP STA affiliated with the non-AP MLD is unreachable among the N links to a disabled state; or deleting, by the AP MLD, a link that communication between an AP affiliated with the AP MLD and a non-AP STA affiliated with the non-AP MLD is unreachable among the N links.

40. The method according to claim 39, wherein a processing manner of the AP MLD for the link that the communication between the AP affiliated with the AP MLD and the non-AP STA affiliated with the non-AP MLD is unreachable among the N links is determined by negotiation between the non-AP MLD and the AP MLD.

41. The method according to claim 39 or 40, wherein in a case where the AP MLD sets the enabled link that the communication between the AP affiliated with the AP MLD and the non-AP STA affiliated with the non-AP MLD is unreachable among the N links to the disabled state, a link set to the disabled state among the N links refers to a link without a traffic identifier (TID) mapping.

42. The method according to any one of claims 39 to 41, wherein in a case where the AP MLD sets the enabled link that the communication between the AP affiliated with the AP MLD and the non-AP STA affiliated with the non-AP MLD is unreachable among the N links to the disabled state, the method further comprises:
for a link set to the disabled state among the N links since communication between an AP affiliated with the AP MLD and a non-AP STA affiliated with the non-AP MLD is unreachable, setting, by the AP MLD, the link to an enabled state in a case where the communication between the AP affiliated with the AP MLD and non-AP STA affiliated with the non-AP MLD corresponding to the link is reachable.

43. The method according to any one of claims 38 to 42, wherein
in a case where an AP affiliated with the AP MLD corresponding to a j-th link receives at least one frame transmitted by a non-AP STA affiliated with the non-AP MLD corresponding to the j-th link within a duration Tⱼ', communication between the AP affiliated with the AP MLD and the non-AP STA affiliated with the non-AP MLD corresponding to the j-th link is reachable; or
in a case where an AP affiliated with the AP MLD corresponding to a j-th link receives at least one frame transmitted by a non-AP STA affiliated with the non-AP MLD corresponding to the j-th link within a duration Tₐₗₗ', communication between the AP affiliated with the AP MLD and the non-AP STA affiliated with the non-AP MLD corresponding to the j-th link is reachable;
wherein the j-th link is a j-th link among all setup links, the duration Tⱼ' is a max idle time for link enabled corresponding to the j-th link, the duration Tₐₗₗ' is a max idle time for link enabled corresponding to the all setup links, and j is a positive integer.

44. The method according to claim 43, wherein the duration Tⱼ' is a periodic duration, and/or the duration Tₐₗₗ' is a periodic duration.

45. The method according to claim 43 or 44, wherein a type of the at least one frame is a designated frame type for indicating an enable or active state of a link.

46. The method according to any one of claims 43 to 45, wherein the at least one frame comprises at least one of:
a data frame corresponding to a TID mapped to the j-th link, a power-saving poll (PS-Poll) frame or a management frame.

47. The method according to any one of claims 43 to 46, wherein
in a case where communication reachability between the AP affiliated with the AP MLD and the non-AP STA affiliated with the non-AP MLD corresponding to the j-th link is determined based on the duration Tⱼ', an association response frame transmitted by the AP MLD through one of the APs affiliated with the AP MLD comprises S'third indication fields, and each of the S' third indication fields is used for indicating respective max idle time information for link enabled corresponding to each of the S' links;
wherein the association response frame is an association response frame corresponding to an association request frame for multi-link setup, and S' is a positive integer.

48. The method according to claim 47, wherein the association response frame comprises a basic multi-link element;
wherein a station control field in a per-station profile subelement comprised in a link information field of the basic multi-link element comprises a link identifier field and a first present field, and the first present field is used for indicating whether a station information field in the per-station profile subelement comprises a third indication field corresponding to a link identified by the link identifier field.

49. The method according to claim 48, wherein in a case where a value of the first present field is used for indicating that the station information field in the per-station profile subelement comprises the third indication field corresponding to the link identified by the link identifier field, the station information field in the per-station profile subelement comprises the third indication field corresponding to the link identified by link identifier field.

50. The method according to claim 48 or 49, wherein the third indication field is a max idle time information for link enabled field, and the first present field is a max idle time information for link enabled present field.

51. The method according to any one of claims 47 to 50, wherein the third indication field comprises a first subfield and a second subfield;
wherein the first subfield is used for indicating a max idle time for link enabled of a corresponding link, and the second subfield comprises a first field and a second field; and
wherein the first field is used for indicating type information of a frame in an enabled or active state, and the second field is used for indicating a behavior of the AP MLD when communication between an AP affiliated with the AP MLD and a non-AP STA affiliated with the non-AP MLD corresponding to a corresponding enabled link is unreachable.

52. The method according to claim 51, wherein the first subfield is a max idle time for link enabled subfield, the second subfield is an idle option for link enabled subfield, the first field is a protected keep-enabled required field, and the second field is an expected behavior beyond the max idle time field.

53. The method according to any one of claims 43 to 46, wherein
in a case where communication reachability between the AP affiliated with the AP MLD and the non-AP STA affiliated with the non-AP MLD corresponding to the j-th link is determined based on the duration Tₐₗₗ', an association response frame transmitted by the AP MLD through one of the APs affiliated with the AP MLD comprises a fourth indication field, and the fourth indication field is used for indicating max idle time information for link enabled corresponding to the all setup links, and the association response frame is an association response frame corresponding to an association request frame for multi-link setup.

54. The method according to claim 53, wherein the association response frame comprises a basic multi-link element;
wherein a presence bitmap subfield in a multi-link control field of the basic multi-link element comprises a second present field, and the second present field is used for indicating whether a common information field in the multi-link control field comprises the fourth indication field.

55. The method according to claim 54, wherein in a case where a value of the second present field is used for indicating that the common information field in the multi-link control field comprises the fourth indication field, the common information field in the multi-link control field comprises the fourth indication field.

56. The method according to claim 54 or 55, wherein the fourth indication field is a max idle time information for link enabled field, and the second present field is a max idle time information for link enabled present field.

57. The method according to any one of claims 54 to 56, wherein the fourth indication field comprises a third subfield and a fourth subfield;
wherein the third subfield is used for indicating a max idle time for link enabled corresponding to all links indicated by the basic multi-link element, and the fourth subfield comprises a third field and a fourth field; and
wherein the third field is used for indicating type information of a frame in the enabled or active state, and the fourth field is used for indicating a behavior of the AP MLD when communication between APs affiliated with the AP MLD and non-AP STAs affiliated with the non-AP MLD corresponding to the all links indicated by the basic multi-link element is unreachable.

58. The method according to claim 57, wherein the third subfield is a max idle time for link enabled subfield, the fourth subfield is an idle option for link enabled subfield, the third field is a protected keep-enabled required field, and the fourth field is an expected behavior beyond the max idle time field.

59. A multi-link communication method, comprising:
managing, by a non-access point multi-link device (non-AP MLD), N setup links according to communication reachability between a respective non-access point station (non-AP STA) affiliated with the non-AP MLD and a respective access point (AP) affiliated with an access point multi-link device (AP MLD) corresponding to each of the N setup links, wherein N is a positive integer.

60. The method according to claim 59, wherein managing, by the non-AP MLD, the N setup links according to the communication reachability between the respective non-AP STA affiliated with the non-AP MLD and the respective AP affiliated with the AP MLD corresponding to each of the N setup links comprises:
setting, by the non-AP MLD, an enabled link that communication between a non-AP STA affiliated with the non-AP MLD and an AP affiliated with the AP MLD is unreachable among the N links to a disabled state; or deleting, by the non-AP MLD, a link that communication between a non-AP STA affiliated with the non-AP MLD and an AP affiliated with the AP MLD is unreachable among the N links.

61. The method according to claim 60, wherein a processing manner of the non-AP MLD for the link that the communication between the non-AP STA affiliated with the non-AP MLD and the AP affiliated with the AP MLD is unreachable among the N links is determined by negotiation between the non-AP MLD and the AP MLD.

62. The method according to claim 60 or 61, wherein in a case where the non-AP MLD sets the enabled link that the communication between the non-AP STA affiliated with the non-AP MLD and the AP affiliated with the AP MLD is unreachable among the N links to the disabled state, a link set to the disabled state among the N links refers to a link without a traffic identifier (TID) mapping.

63. The method according to any one of claims 60 to 62, wherein in a case where the non-AP MLD sets the enabled link that the communication between the non-AP STA affiliated with the non-AP MLD and the AP affiliated with the AP MLD is unreachable among the N links to the disabled state, the method further comprises:
for a link set to the disabled state among the N links since communication between a non-AP STA affiliated with the non-AP MLD and an AP affiliated with the AP MLD is unreachable, setting, by the non-AP MLD, the link to an enabled state in a case where the communication between the non-AP STA affiliated with the non-AP MLD and the AP affiliated with the AP MLD corresponding to the link is reachable.

64. The method according to any one of claims 59 to 63, wherein
in a case where a non-AP STA affiliated with the non-AP MLD corresponding to a j-th link receives at least one frame transmitted by an AP affiliated with the AP MLD corresponding to the j-th link within a duration Tⱼ, communication between the non-AP STA affiliated with the non-AP MLD and the AP affiliated with the AP MLD corresponding to the j-th link is reachable; or
in a case where a non-AP STA affiliated with the non-AP MLD corresponding to a j-th link receives at least one frame transmitted by an AP affiliated with the AP MLD corresponding to the j-th link within a duration Tₐₗₗ, communication between the non-AP STA affiliated with the non-AP MLD and the AP affiliated with the AP MLD corresponding to the j-th link is reachable;
wherein the j-th link is a j-th link among all setup links, the duration Tⱼ is a max idle time for link enabled corresponding to the j-th link, the duration Tₐₗₗ is a max idle time for link enabled corresponding to the all setup links, and j is a positive integer.

65. The method according to claim 64, wherein the duration Tⱼ is a periodic duration, and/or the duration Tₐₗₗ is a periodic duration.

66. The method according to claim 64 or 65, wherein a type of the at least one frame is a designated frame type for indicating an enable or active state of a link.

67. The method according to any one of claims 64 to 66, wherein the at least one frame comprises at least one of:
a data frame corresponding to a TID mapped to the j-th link, a power saving poll (PS-Poll) frame or a management frame.

68. The method according to any one of claims 64 to 67, wherein
in a case where communication reachability between the non-AP STA affiliated with the non-AP MLD and the AP affiliated with the AP MLD corresponding to the j-th link is determined based on the duration Tⱼ, an association request frame for multi-link setup transmitted by the non-AP MLD through one of non-AP STAs affiliated with the non-AP MLD comprises S third indication fields, and each of the S third indication fields is used for indicating respective max idle time information for link enabled corresponding to each of the S links, and S is a positive integer.

69. The method according to claim 68, wherein the association request frame for multi-link setup comprises a basic multi-link element;
wherein a station control field in a per-station profile subelement comprised in a link information field of the basic multi-link element comprises a link identifier field and a first present field, and the first present field is used for indicating whether a station information field in the per-station profile subelement comprises a third indication field corresponding to a link identified by the link identifier field.

70. The method according to claim 69, wherein in a case where a value of the first present field is used for indicating that the station information field in the per-station profile subelement comprises the third indication field corresponding to the link identified by the link identifier field, the station information field in the per-station profile subelement comprises the third indication field corresponding to the link identified by the link identifier field.

71. The method according to claim 69 or 70, wherein the third indication field is a max idle time information for link enabled field, and the first present field is a max idle time information for link enabled present field.

72. The method according to any one of claims 68 to 71, wherein the third indication field comprises a first subfield and a second subfield;
wherein the first subfield is used for indicating a max idle time for link enabled of a corresponding link, and the second subfield comprises a first field and a second field, the first field is used for indicating type information of a frame in an enabled or active state, and the second field is used for indicating a behavior of the non-AP MLD when communication between a non-AP STA affiliated with the non-AP MLD and an AP affiliated with the AP MLD corresponding to a corresponding enabled link is unreachable.

73. The method according to claim 72, wherein the first subfield is a max idle time for link enabled subfield, the second subfield is an idle option for link enabled subfield, the first field is a protected keep-enabled required field, and the second field is an expected behavior beyond the max idle time field.

74. The method according to any one of claims 64 to 67, wherein
in a case where communication reachability between the non-AP STA affiliated with the non-AP MLD and the AP affiliated with the AP MLD corresponding to the j-th link is determined based on the duration Tₐₗₗ, an association request frame for multi-link setup transmitted by the non-AP MLD through one of non-AP STAs affiliated with the non-AP MLD comprises a fourth indication field, and the fourth indication field is used for indicating max idle time information for link enabled corresponding to the all setup links.

75. The method according to claim 74, wherein the association request frame for multi-link setup comprises a basic multi-link element;
wherein a presence bitmap subfield in a multi-link control field of the basic multi-link element comprises a second present field, and the second present field is used for indicating whether a common information field in the multi-link control field comprises the fourth indication field.

76. The method according to claim 75, wherein in a case where a value of the second present field is used for indicating that the common information field in the multi-link control field comprises the fourth indication field, the common information field in the multi-link control field comprises the fourth indication field.

77. The method according to claim 75 or 76, wherein the fourth indication field is a max idle time information for link enabled field, and the second present field is a max idle time information for link enabled present field.

78. The method according to any one of claims 75 to 77, wherein the fourth indication field comprises a third subfield and a fourth subfield;
wherein the third subfield is used for indicating max idle time for link enabled corresponding to all links indicated by the basic multi-link element, and the fourth subfield comprises a third field and a fourth field;
wherein the third field is used for indicating type information of a frame in an enabled or active state, and the fourth field is used for indicating a behavior of the non-AP MLD when communication between non-AP STAs affiliated with the non-AP MLD and APs affiliated with the AP MLD corresponding to the all links indicated by the basic multi-link element is unreachable.

79. The method according to claim 78, wherein the third subfield is a max idle time for link enabled subfield, the fourth subfield is an idle option for link enabled subfield, the third field is a protected keep-enabled required field, and the fourth field is an expected behavior beyond the max idle time field.

80. The method according to any one of claims 59 to 79, wherein before managing, by the non-AP MLD, the N setup links according to the communication reachability between the respective non-AP STA affiliated with the non-AP MLD and the respective AP affiliated with the AP MLD corresponding to each of the N setup links, the method further comprises:
initiating, by the non-AP MLD, a multi-link setup between the non-AP MLD and the AP MLD according to communication reachability between a respective non-AP STA affiliated with the non-AP MLD and a respective affiliated with the AP MLD corresponding to each of M links to be set up, wherein M is a positive integer and M is greater than or equal to N.

81. The method according to claim 80, wherein initiating, by the non-AP MLD, the multi-link setup between the non-AP MLD and the AP MLD according to the communication reachability between the respective non-AP STA affiliated with the non-AP MLD and the respective AP affiliated with the AP MLD corresponding to each of the M links to be set up comprises:
transmitting, by the non-AP MLD, a first association request frame through one of non-AP STAs affiliated with the non-AP MLD;
wherein the first association request frame is used for requesting to set up a link corresponding to a non-AP STA affiliated with the non-AP MLD among the M links, in which the non-AP STA is within a reachable communication range of an AP affiliated with the AP MLD.

82. The method according to claim 80, wherein initiating, by the non-AP MLD, the multi-link setup between the non-AP MLD and the AP MLD according to the communication reachability between the respective non-AP STA affiliated with the non-AP MLD and the respective AP affiliated with the AP MLD corresponding to each of the M links to be set up comprises:
transmitting, by the non-AP MLD, a second association request frame through one of non-AP STAs affiliated with the non-AP MLD;
wherein the second association request frame is used to for requesting to set up the M links; and the second association request frame comprises relevant information on whether the M links are reachable in communication, and/or the second association request frame comprises relevant information on whether the M links are enabled.

83. The method according to claim 82, wherein
for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

84. The method according to claim 82 or 83, wherein the second association request frame comprises M first indication fields, and/or the second association request frame comprises a second indication field;
wherein the M first indication fields correspond to the M links, respectively, and each of the M first indication fields is used for indicating whether a respective link is reachable in communication; and
the second indication field is used for indicating whether each of the M links is enabled.

85. The method according to claim 84, wherein the second association request frame comprises a basic multi-link element;
wherein a station control field in a per-station profile subelement comprised in a link information field of the basic multi-link element comprises a link identifier field and a first indication field corresponding to a link identified by the link identifier field.

86. The method according to claim 84 or 85, wherein the first indication field is a reachability field, and/or the second indication field is a traffic identifier to link mapping element.

87. The method according to any one of claims 80 to 86, wherein
in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same basic service set (BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same multiple basic service set identifier (BSSID) set as an AP affiliated with the AP MLD corresponding to the i-th link to be set up within preset time, communication between the non-AP STA affiliated with the non-AP MLD and the AP affiliated with the AP MLD corresponding to the i-th link to be set up is reachable;
wherein the i-th link to be set up is an i-th link among the M links, i is a positive integer, and i is greater than or equal to 1 and less than or equal to M.

88. The method according to claim 87, wherein the preset time is configured or indicated by the AP MLD, or the preset time is determined by negotiation between the non-AP MLD and the AP MLD, or the preset time is agreed upon by a protocol.

89. A multi-link communication method, comprising:
managing, by an access point multi-link device (AP MLD), N setup links according to communication reachability between a respective access point (AP) affiliated with the AP MLD and a respective non-access point station (non-AP STA) affiliated with a non-access point multi-link device (non-AP MLD) corresponding to each of the N setup links, wherein N is a positive integer.

90. The method according to claim 89, wherein managing, by the AP MLD, the N setup links according to the communication reachability between the respective AP affiliated with the AP MLD and the respective non-AP STA affiliated with the non-AP MLD corresponding to each of the N setup links comprises:
setting, by the AP MLD, an enabled link that communication between an AP affiliated with the AP MLD and a non-AP STA affiliated with the non-AP MLD is unreachable among the N links to a disabled state; or deleting, by the AP MLD, a link that communication between an AP affiliated with the AP MLD and a non-AP STA affiliated with the non-AP MLD is unreachable among the N links.

91. The method according to claim 90, wherein a processing manner of the AP MLD for the link that the communication between the AP STA affiliated with the AP MLD and the non-AP affiliated with the non-AP MLD is unreachable among the N links is determined by negotiation between the non-AP MLD and the AP MLD.

92. The method according to claim 90 or 91, wherein in a case where the AP MLD sets the enabled link that the communication between the AP affiliated with the AP MLD and the non-AP STA affiliated with the non-AP MLD is unreachable among the N links to the disabled state, a link set to the disabled state among the N links refers to a link without a traffic identifier (TID) mapping.

93. The method according to any one of claims 90 to 92, wherein in a case where the AP MLD sets the enabled link that the communication between the AP affiliated with the AP MLD and the non-AP STA affiliated with the non-AP MLD is unreachable among the N links to the disabled state, the method further comprises:
for a link set to the disabled state among the N links since communication between an AP affiliated with the AP MLD and a non-AP STA affiliated with the non-AP MLD is unreachable, setting, by the AP MLD, the link to an enabled state in a case where the communication between the AP affiliated with the AP MLD and non-AP STA affiliated with the non-AP MLD corresponding to the link is reachable.

94. The method according to any one of claims 89 to 93, wherein
in a case where an AP affiliated with the AP MLD corresponding to a j-th link receives at least one frame transmitted by a non-AP STA affiliated with the non-AP MLD corresponding to the j-th link within a duration Tⱼ', communication between the AP affiliated with the AP MLD and the non-AP STA affiliated with the non-AP MLD corresponding to the j-th link is reachable; or
in a case where an AP affiliated with the AP MLD corresponding to a j-th link receives at least one frame transmitted by a non-AP STA affiliated with the non-AP MLD corresponding to the j-th link within a duration Tₐₗₗ', communication between the AP affiliated with the AP MLD and the non-AP STA affiliated with the non-AP MLD corresponding to the j-th link is reachable;
wherein the j-th link is a j-th link among all setup links, the duration Tⱼ' is a max idle time for link enabled corresponding to the j-th link, the duration Tₐₗₗ' is a max idle time for link enabled corresponding to the all setup links, and j is a positive integer.

95. The method according to claim 94, wherein the duration Tⱼ' is a periodic duration, and/or the duration Tₐₗₗ' is a periodic duration.

96. The method according to claim 94 or 95, wherein a type of the at least one frame is a designated frame type for indicating an enable or active state of a link.

97. The method according to any one of claims 94 to 96, wherein the at least one frame comprises at least one of:
a data frame corresponding to a TID mapped to the j-th link, a power-saving poll (PS-Poll) frame or a management frame.

98. The method according to any one of claims 94 to 97, wherein
in a case where communication reachability between the AP affiliated with the AP MLD and the non-AP STA affiliated with the non-AP MLD corresponding to the j-th link is determined based on the duration Tⱼ', an association response frame transmitted by the AP MLD through one of APs affiliated with the AP MLD comprises S' third indication fields, and each of the S' third indication fields is used for indicating respective max idle time information for link enabled corresponding to each of the S' links;
wherein the association response frame is an association response frame corresponding to an association request frame for multi-link setup, and S' is a positive integer.

99. The method according to claim 98, wherein the association response frame comprises a basic multi-link element;
wherein a station control field in a per-station profile subelement comprised in a link information field of the basic multi-link element comprises a link identifier field and a first present field, and the first present field is used for indicating whether a station information field in the per-station profile subelement comprises a third indication field corresponding to a link identified by the link identifier field.

100. The method according to claim 99, wherein in a case where a value of the first present field is used for indicating that the station information field in the per-station profile subelement comprises the third indication field corresponding to the link identified by the link identifier field, the station information field in the per-station profile subelement comprises the third indication field corresponding to the link identified by link identifier field.

101. The method according to claim 99 or 100, wherein the third indication field is a max idle time information for link enabled field, and the first present field is a max idle time information for link enabled present field.

102. The method according to any one of claims 98 to 101, wherein the third indication field comprises a first subfield and a second subfield;
wherein the first subfield is used for indicating a max idle time for link enabled of a corresponding link, and the second subfield comprises a first field and a second field, the first field is used for indicating type information of a frame in an enabled or active state, and the second field is used for indicating a behavior of the AP MLD when communication between an AP affiliated with the AP MLD and a non-AP STA affiliated with the non-AP MLD corresponding to a corresponding enabled link is unreachable.

103. The method according to claim 102, wherein the first subfield is a max idle time for link enabled subfield, the second subfield is an idle option for link enabled subfield, the first field is a protected keep-enabled required field, and the second field is an expected behavior beyond the max idle time field.

104. The method according to any one of claims 94 to 97, wherein
in a case where communication reachability between the AP affiliated with the AP MLD and the non-AP STA affiliated with the non-AP MLD corresponding to the j-th link is determined based on the duration Tₐₗₗ', an association response frame transmitted by the AP MLD through one of APs affiliated with the AP MLD comprises a fourth indication field, and the fourth indication field is used for indicating max idle time information for link enabled corresponding to the all setup links, and the association response frame is an association response frame corresponding to an association request frame for multi-link setup.

105. The method according to claim 104, wherein the association response frame comprises a basic multi-link element;
wherein a presence bitmap subfield in a multi-link control field of the basic multi-link element comprises a second present field, and the second present field is used for indicating whether a common information field in the multi-link control field comprises the fourth indication field.

106. The method according to claim 105, wherein in a case where a value of the second present field is used for indicating that the common information field in the multi-link control field comprises the fourth indication field, the common information field in the multi-link control field comprises the fourth indication field.

107. The method according to claim 105 or 106, wherein the fourth indication field is a max idle time information for link enabled field, and the second present field is a max idle time information for link enabled present field.

108. The method according to any one of claims 105 to 107, wherein the fourth indication field comprises a third subfield and a fourth subfield;
wherein the third subfield is used for indicating a max idle time for link enabled corresponding to all links indicated by the basic multi-link element, and the fourth subfield comprises a third field and a fourth field, the third field is used for indicating type information of a frame in the enabled or active state, and the fourth field is used for indicating a behavior of the AP MLD when communication between APs affiliated with the AP MLD and non-AP STAs affiliated with the non-AP MLD corresponding to the all links indicated by the basic multi-link element is unreachable.

109. The method according to claim 108, wherein the third subfield is a max idle time for link enabled subfield, the fourth subfield is an idle option for link enabled subfield, the third field is a protected keep-enabled required field, and the fourth field is an expected behavior beyond the max idle time field.

110. The method according to any one of claims 89 to 109, wherein before managing, by the AP MLD, the N setup links according to the communication reachability between the respective AP affiliated with the AP MLD and the respective non-AP STA affiliated with the non-AP MLD corresponding to each of the N setup links, the method further comprises:
receiving, by the AP MLD, a first association request frame through one of APs affiliated with the AP MLD;
wherein the first association request frame is used for requesting to set up a link corresponding to a non-AP STA affiliated with the non-AP MLD among M links, in which the non-AP STA is within a reachable communication range of an AP affiliated with the AP MLD.

111. The method according to any one of claims 89 to 109, wherein before managing, by the AP MLD, the N setup links according to the communication reachability between the respective AP affiliated with the AP MLD and the respective non-AP STA affiliated with the non-AP MLD corresponding to each of the N setup links, the method further comprises:
receiving, by the AP MLD, a second association request frame through one of APs affiliated with the AP MLD;
wherein the second association request frame is used to for requesting to set up the M links; and the second association request frame comprises relevant information on whether the M links are reachable in communication, and/or the second association request frame comprises relevant information on whether the M links are enabled.

112. The method according to claim 111, wherein
for a non-AP STA affiliated with the non-AP MLD that is within a reachable communication range for an AP affiliated with the AP MLD corresponding to a link to be set up, a link to be set up corresponding to the non-AP STA affiliated with the non-AP MLD is indicated as reachable in communication and/or enabled; and
for a non-AP STA affiliated with the non-AP MLD that is not within a reachable communication range for an AP affiliated with the AP MLD corresponding to a link to be set up, a link to be set up corresponding to the non-AP STA affiliated with the non-AP MLD is indicated as unreachable in communication and/or disabled.

113. The method according to claim 111 or 112, wherein the second association request frame comprises M first indication fields, and/or the second association request frame comprises a second indication field;
wherein the M first indication fields correspond to the M links, respectively, and each of the M first indication fields is used for indicating whether a respective link is reachable in communication; and
the second indication field is used for indicating whether each of the M links is enabled.

114. The method according to claim 113, wherein the second association request frame comprises a basic multi-link element;
wherein a station control field in a per-station profile subelement comprised in a link information field of the basic multi-link element comprises a link identifier field and a first indication field corresponding to a link identified by the link identifier field.

115. The method according to claim 113 or 114, wherein the first indication field is a reachability field, and/or the second indication field is a traffic identifier to link mapping element.

116. The method according to any one of claims 110 to 115, wherein
in a case where a non-AP STA affiliated with the non-AP MLD corresponding to an i-th link to be set up receives a frame transmitted by an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same basic service set (BSS) as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable; and/or
in a case where a non-AP STA affiliated with the non-AP MLD corresponding to an i-th link to be set up receives a frame transmitted by another AP in a same multiple basic service set identifier (BSSID) set as an AP affiliated with the AP MLD corresponding to the i-th link to be set up within a preset time, communication between the non-AP STA affiliated with the non-AP MLD and the AP affiliated with the AP MLD corresponding to the i-th link to be set up is reachable;
wherein the i-th link to be set up is an i-th link among the M links, i is a positive integer, and i is greater than or equal to 1 and less than or equal to M.

117. The method according to claim 116, wherein the preset time is configured or indicated by the AP MLD, or the preset time is determined by negotiation between the non-AP MLD and the AP MLD, or the preset time is agreed upon by a protocol.

118. A non-access point multi-link device (non-AP MLD), comprising:
a communication unit, configured to initiate a multi-link setup between the non-AP MLD and an access point multi-link device (AP MLD) according to communication reachability between a respective non-access point station (non-AP STA) affiliated with the non-AP MLD and a respective access point (AP) affiliated with the AP MLD corresponding to each of M links to be set up; wherein M is a positive integer.

119. An access point multi-link device (AP MLD), comprising:
a communication unit, configured to receive a first association request frame or a second association request frame through one of access points (APs) affiliated with the AP MLD;
wherein the first association request frame is used for requesting to set up a link corresponding to a non-access point station (non-AP STA) affiliated with a non-access point multi-link device (non-AP MLD) among M links, in which the non-AP STA is within a reachable communication range of an AP affiliated with the AP MLD;
wherein the second association request frame is used to for requesting to set up the M links; and the second association request frame comprises relevant information on whether the M links are reachable in communication, and/or the second association request frame comprises relevant information on whether the M links are enabled; and
M is a positive integer.

120. A non-access point multi-link device (non-AP MLD), comprising:
a processing unit, configured to manage N setup links according to communication reachability between a respective non-access point station (non-AP STA) affiliated with the non-AP MLD and a respective access point (AP) affiliated with an access point multi-link device (AP MLD) corresponding to each of the N setup links, wherein N is a positive integer.

121. An access point multi-link device (AP MLD), comprising:
a processing unit, configured to manage N setup links according to communication reachability between a respective access point (AP) affiliated with the AP MLD and a respective non-access point station (non-AP STA) affiliated with a non-access point multi-link device (non-AP MLD) corresponding to each of the N setup links, wherein N is a positive integer.

122. A non-access point multi-link device (non-AP MLD), comprising a processor and a memory, wherein the memory is configured to store a computer program, and the processor is configured to call the computer program stored in the memory and run the computer program, to enable the non-AP MLD to perform the method according to any one of claims 1 to 30.

123. An access point multi-link device (AP MLD), comprising a processor and a memory, wherein the memory is configured to store a computer program, and the processor is configured to call the computer program stored in the memory and run the computer program, to enable the AP MLD to perform the method according to any one of claims 31 to 58.

124. A non-access point multi-link device (non-AP MLD), comprising a processor and a memory, wherein the memory is configured to store a computer program, and the processor is configured to call the computer program stored in the memory and run the computer program, to enable the non-AP MLD to perform the method according to any one of claims 59 to 88.

125. An access point multi-link device (AP MLD), comprising a processor and a memory, wherein the memory is configured to store a computer program, and the processor is configured to call the computer program stored in the memory and run the computer program, to enable the AP MLD to perform the method according to any one of claims 89 to 117.

126. A chip, comprising a processor, configured to call a computer program from a memory and run the computer program, to enable a device equipped with the chip to perform the method according to any one of claims 1 to 30, or to perform the method according to any one of claims 31 to 58, or to perform the method according to any one of claims 59 to 88, or to perform the method according to any one of claims 89 to 117.

127. A computer-readable storage medium, configured to store a computer program, wherein the computer program, when being executed, enables the method according to any one of claims 1 to 30 to be implemented, or the method according to any one of claims 31 to 58 to be implemented, or the method according to any one of claims 59 to 88 to be implemented, or the method according to any one of claims 89 to 117 to be implemented.

128. A computer program product, comprising computer program instructions, wherein the computer program instructions, when being executed, enables the method according to any one of claims 1 to 30 to be implemented, or the method according to any one of claims 31 to 58 to be implemented, or the method according to any one of claims 59 to 88 to be implemented, or the method according to any one of claims 89 to 117 to be implemented.

129. A computer program, wherein the computer program, when being executed, enables the method according to any one of claims 1 to 30 to be implemented, or the method according to any one of claims 31 to 58 to be implemented, or the method according to any one of claims 59 to 88 to be implemented, or the method according to any one of claims 89 to 117 to be implemented.
